Europäisches Patentamt

European Patent Office

Office européen des brevets

(19)

(11) EP 1 558 021 A2

(12) EUROPEAN PATENT APPLICATION

(43) Date of publication:
27.07.2005 Bulletin 2005/30

(51) Int Cl.7: H04N 1/60, H04N 1/407

(21) Application number: 05250227.5

(22) Date of filing: 18.01.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 21.01.2004 JP 2004013173

(71) Applicant: Konica Minolta Photo Imaging, Inc.
Shinjuku-ku, Tokyo 163-0512 (JP)

(72) Inventors:
• Takano, Hiroaki, c/o Konica Minolta Imaging Inc.
Hino-shi Tokyo 191-8511 (JP)

• Ito, Tsukasa, c/o Konica Minolta Imaging Inc.
Hino-shi Tokyo 191-8511 (JP)
• Minakuti, Jun, c/o Konica Minolta Imaging Inc.
Sakai-shi Osaka, 590-8551 (JP)
• Nakajima, Takeshi,
c/o Konica Minolta Imaging Inc.
Hino-shi Tokyo 191-8511 (JP)

(74) Representative: Nicholls, Michael John et al
J.A. KEMP & CO.
14, South Square
Gray's Inn
London WC1R 5JJ (GB)

(54) **Image processing method, image processing apparatus and image recording apparatus**

(57) An image processing method of producing visual image-referred data by conducting an image processing to optimize for viewing the visual on an output medium by utilizing a color appearance model, comprises an inputting process to input a user's editing.instruction; a reading process to read scene-referred raw data for each editing instruction of an user inputted in the inputting process; and a gamut adjusting process to conduct a gamut mapping for each output medium by converting the read scene-referred raw data in accordance with the user's editing instruction by utilizing a color appearance model.

FIG. 6

**Description**

**BACKGROUND OF THE INVENTION**

The present invention relates to image-processing methods and apparatus for applying an optimization processing to captured image data so as to optimize a visual image on an outputting medium, and relates to image-recording apparatus for forming the visual image on the outputting medium.

In recent years, the digital image data acquired by scanning a color photo-film or the digital image data captured by an image-capturing apparatus, such as a digital camera, etc., is distributed through such a memory device as a CD-R (Compact Disk Recordable), a floppy disk (registered trade name) and a memory card or the Internet, and is displayed on such a display monitor as a CRT (Cathode Ray Tube), a liquid crystal display and a plasma display or a small-sized liquid crystal monitor display device of a cellular phone, or is printed out as a hard copy image using such an output device as a digital printer, an inkjet printer and a thermal printer. In this way, displaying and printing methods have been diversified in recent years.

In response to such various kinds of displaying and printing methods, efforts have been made to improve the general-purpose flexibility of digital image data captured by an image-capturing apparatus. As a part of these efforts, an attempt has been made to standardize the color space represented by digital RGB (Red, Green and Blue) signals as a color space that does not depend on characteristics of an image-capturing apparatus. At present, the sRGB (refer to "Multimedia Systems and Equipment - Color Measurement and Management - Part 2-1: Color Management - Default RGB Color Space - sRGB" IEC61966-2-1) have been adopted for most of digital image data as a standardized color space. The color space of this sRGB has been established to meet the color reproduction area for a standard CRT display monitor.

However, the color reproduction area of an image displayed on the displaying device, such as a CRT display monitor, etc., or that of a hard-copy image printed by one of various kinds of printing devices varies with a fluorescent material or a combination of dye materials to be employed. For instance, the color reproduction area, reproduced by the CRT display monitor corresponding to the sRGB standard color space, includes a wide area of bright green and blue, and an area which could not be reproduced by a silver-halide print, an ink-jet print and a printed hard-copy. Conversely, a cyan area reproduced by the ink-jet print and the printed hard-copy or a yellow area reproduced by the silver-halide print includes an area which could not be reproduced by the CRT display monitor (for instance, refer to "Fine Imaging and Digital Photograph" p.444, edited by Publishing Committee of Society of Photographic Science and Technology, Japan, published by Corona Co.). On the other hand, some subjective scene to be an image-capturing object would possibly include areas, which could not be reproduced by any one of the color-reproduction areas mentioned in the above.

As described above, the color space (including the sRGB) optimized on the basis of display and printing by a specific device is accompanied by restrictions in the color gamut where recording is possible. So when recording the information picked up by a photographing device, it is necessary to make adjustment of mapping by compressing the information into the color gamut where recording is allowed. The simplest way is provided by clipping where the color chromaticity point outside the color gamut where recording is possible is mapped onto the boundary of the nearest color gamut. This causes the gradation outside the color gamut to be collapsed, and the image will give a sense of incompatibility to the viewer. To avoid this problem, non-liner compression method is generally used. In this method, the chromaticity point in the area where chroma is high in excess of an appropriate threshold value is compressed smoothly according to the size of the chroma. As a result, chroma is compressed and recording is carried out even at the chromaticity point inside the color gamut where recording is possible. (For the details of the procedure of mapping the color gamut, see "Fine imaging and digital photographing" edited by the Publishing Commission of the Japan Society of Electrophotography, Corona Publishing Co., P. 447, for example).

The image displayed on such a display device as a CRT display monitor, the hard copied image printed by various types of printing devices, or color space (including sRGB) optimized on the basis of display and printing by these devices, are restricted to the conditions where the luminance range that allows recording and reproduction is of the order of about 100 to 1. By contrast, however, the scene of the subject to be photographed has a wide luminance range, and it often happens that the order of several thousands to 1 is reached outdoors. (See "Handbook on Science of Color, New Version, 2nd Print" by Japan Society for Science of Colors, Publishing Society of the University of Tokyo, P. 926, for example). Accordingly, when recording the information acquired by the image sensor, compression is also necessary for brightness. In this processing, adequate conditions must be set for each image in conformity to the dynamic range of the scene to be photographed, and the range of brightness for the main subject in the scene to be photographed.

However, when compression has been carried out for the color gamut and luminance range as described above, information on gradation prior to compression or information prior to clipping are lost immediately due to the principle of the digital image to be recorded in terms of the discrete value. The original state cannot be recovered. This imposes a big restriction on the general versatility of high-quality digital image.

For example, when the image recorded in the sRGB standard color space is printed, mapping must be carried out again based on the differences between the sRGB standard color space and the area for color reproduction of the printing device. For the image recorded in the sRGB standard color space, however, the information on gradation in the area compressed at a time of recording are lost. So the smoothness of gradation is deteriorated as compared to the case where the information captured by the photographing device is mapped directly in the area for color reproduction of the printing device. Further, if gradation compression conditions are not adequate at a time of recording, and there are problems such as a whitish picture, dark face, deformed shadow and conspicuous white skipping in the highlighted area, improvement is very inadequate as compared to the case where the new image is created again from the information gained by the photographing device, even if the gradation setting is changed to improve the image. This is because information on gradation prior to compression, and information on the portion subjected to deformation or white skipping have been already lost.

As a solution of the above-mentioned problems, the art of storing the process of image editing as a backup data and returning it to the state prior to editing whenever required has long been known. For example, Patent Document 1 discloses a backup device wherein, when the digital image is subjected to local modification by image processing, the image data on the difference between the digital image data before image processing and that after image processing is saved as backup data. Further, Patent Document 2 discloses a method for recovering the digital image data before editing, by saving the image data on the difference between the digital image data before image processing and that after image processing.

The problems introduced above are caused by the procedure where the information on the wide color gamut and luminance range acquired by a photographing device are recorded after having being compressed into the output-referred image data in the state optimized by assuming an image to be viewed. By contrast, if the information on the wide color gamut and luminance range acquired by a photographing device are recorded as scene-referred image data that are not compressed, then inadvertent loss of information can be prevented. As the color space suited to record such scene-referred image data (hereinafter, referred to as the "brightness expansion color space"), for instance, RIMM RGB (Reference Input Medium Metric RGB), ERIMM RGB (Extended Reference Input Medium Metric RGB) and the scRGB (IEC 61966-2-2) have been well-known so far (refer to the Journal of Imaging Science and Technology, Vol. 45 p p. 418 to 426 (2001)).

Further, there has been well-known a method for converting the image data into an intermediate color space independent from the device (called as the "Device Independent Color Space" or the "Device Independent Color"), when mapping the image data into the color reproduction area. Still further, as the intermediate color space, there has been well-known, for instance, the XYZ (CIE/XYZ) color space or the L*a*b* (CIE/L*a*b*) color space, both specified by CIE (International Commission on Illumination). However, since the sight sensitivity of the viewer varies corresponding to the viewing environment (including luminance and chromaticity of surround light, background, etc.), in which the viewer observes a printed image or a displayed image, aroused is a problem that the "color appearance" actually sensed by the viewer also varies with the variations of the viewing environment. In the above case, when viewing the printed image, the influence of the viewing environment can be reduced due to the adapting effect of the human sight for the viewing environment, while when viewing the image displayed on the self-illuminating device, such as a CRT, etc., the device itself gives a chromaticity being different from the viewing environment. Therefore, there has been a problem that the "color appearance" of the printed image does not coincide with that of the image displayed on the CRT.

To solve the above-mentioned problem that the "color appearance" of the printed image does not coincide with that of the image displayed on the CRT, the well-known method is to employ a color appearance model as the intermediate color space in which the variations of the viewing environment are corrected (for instance, refer to Patent Document 3). As such the color appearance model, the "CIECAM97s" or the "CIECAM02" (prepared by Hiroyuki Yaguchi, Color Forum, JAPAN2003) is well-known.

[Patent Document 1]

Tokkaihei 7-57074    (Japanese Non-Examined Patent Publication)

[Patent Document 2]

Tokkai 2001-94778    (Japanese Non-Examined Patent Publication)

[Patent Document 3]

Tokkaihei 7-222196 (Japanese Non-Examined Patent Publication)

By employing the color appearance model, it is possible to make the "color appearance" of the printed image coincide with that of the image displayed on the CRT. When the user employs the color appearance model, the user conducts the image editing operation while viewing the image displayed on the CRT, and then, outputs a print image based on the result of the image editing operation. In spite of such the situation, there has been a problem that the deterioration of the image quality and the improvement of working efficiency are not at all considered for the conventional color appearance model. When considering the current situation, despite that the information amount and the workability retained by the captured image data are severely limited due to the restrictions caused by the device characteristics, it is still difficult to say that the suppression of the image deterioration and the improvement of working efficiency are sufficient. From now on, aroused is a fear that the deterioration of the image quality and the difficulty of the workability will increase according as the information amount to be retained by the captured image data is getting large.

## SUMMARY OF THE INVENTION

To overcome the abovementioned drawbacks in conventional image-processing method and apparatus, it is an object of the present invention to suppress the deterioration of the image quality due to the image editing operation and to improve the working efficiency of the image editing operation performed by the user, when information of the color gamut and the luminance range are compressed to output-referred image data optimized for the assumed visual image to record the output-referred image data.

Accordingly, to overcome the cited shortcomings, the abovementioned object of the present invention can be attained by image-processing methods, image-processing apparatus and image-recording apparatus described as follow.

An image processing method of producing visual image-referred data by conducting an image processing to optimize for viewing the visual on an output medium by utilizing a color appearance model, comprises:

> an inputting process to input a user's editing instruction;
> a reading process to read scene-referred raw data for each editing instruction of an user inputted in the inputting process;
> a gamut adjusting process to conduct a gamut mapping for each output medium by converting the read scene-referred raw data in accordance with the user's editing instruction by utilizing a color appearance model.

An image processing apparatus for producing visual image-referred data by conducting an image processing to optimize for viewing the visual on an output medium by utilizing a color appearance model, comprises:

> an inputting device to input a user's editing instruction;
> a reading device to read scene-referred raw data for each editing instruction of an user inputted in the inputting process; and
> a gamut adjusting device to conduct a gamut mapping for each output medium by converting the read scene-referred raw data in accordance with the user's editing instruction by utilizing a color appearance model.

## BRIEF DESCRIPTION OF THE DRAWINGS

Other objects and advantages of the present invention will become apparent upon reading the following detailed description and upon reference to the drawings in which:

> Fig. 1 shows a flowchart of a transform processing employing the color appearance model;
> Fig. 2 shows a flowchart of an inverse-transform processing employing the color appearance model;
> Fig. 3 shows a perspective view of an outlook structure of the image-recording apparatus in each of the 1st - 9th embodiments of the present invention;
> Fig. 4 shows a block diagram of an internal configuration of the image-recording apparatus in each of the 1st - 9th embodiments of the present invention;
> Fig. 5 shows a block diagram of an internal configuration of an image processing section of the image-recording apparatus in each of the 1st - 9th embodiments of the present invention;

Fig. 6 shows a flowchart of an image-processing operation performed in the first embodiment of the present invention;

Fig. 7 shows a flowchart of a photographed scene estimation processing conducted by the image adjustment processing section shown in Fig. 5;

Fig. 8 shows an example of a conversion program (denoted as the "HSV conversion program") for acquiring a hue value, a brightness value and a saturation value by converting the RGB color specification system to the HSV color specification system;

Fig. 9 shows an example of the two-dimensional histogram, in which the cumulative frequency distribution of the pixels is represented by the hue value (H) and the brightness value (V);

Fig. 10 shows a flowchart of a gradation conversion processing performed by the image adjustment processing section shown in Fig. 5;

Fig. 11 shows a graph indicating a relationship between a subject brightness value in the "luminance expansion color space" and a subject brightness value in the "reference color space";

Fig. 12 shows an example of a gradation conversion curve;

Fig. 13 shows a flowchart of an image-processing operation performed in the second embodiment of the present invention;

Fig. 14 shows a flowchart of an image-processing operation performed in the third embodiment of the present invention;

Fig. 15 shows a flowchart of an image-processing operation performed in the fourth embodiment of the present invention;

Fig. 16 shows a flowchart of an image-processing operation performed in the fifth embodiment of the present invention;

Fig. 17 shows a flowchart of an image-processing operation performed in the sixth embodiment of the present invention;

Fig. 18 shows a flowchart of an image-processing operation performed in the seventh embodiment of the present invention;

Fig. 19 shows a flowchart of an image-processing operation performed in the eighth embodiment of the present invention; and

Fig. 20 shows a flowchart of an image-processing operation performed in the ninth embodiment of the present invention.

## DETAILED DESCRIPTION OF THE PREFERRED EMBODIMENT

Further, to overcome the abovementioned problems, other image-processing methods, image-processing apparatus and image-recording apparatus, embodied in the present invention, will be described as follow:

(1) An image-processing method, characterized in that,
in the image-processing method for generating output-referred image data by applying an optimization processing to captured image data so as to optimize a visual image on an outputting medium, the method includes:
a color gamut adjustment process for converting the captured image data by employing a color appearance model in response to an editing instruction of a user to conduct a color gamut mapping for every outputting medium.

(2) An image-processing method, characterized in that,
in the image-processing method for generating output-referred image data by applying an optimization processing to captured image data so as to optimize a visual image on an outputting medium, the method includes:
a gradation mapping process for applying a gradation adjustment processing to the captured image data in response to an editing instruction of a user; and
a color gamut adjustment process for converting image data acquired in the gradation mapping process by employing a color appearance model to conduct a color gamut mapping for every outputting medium.

(3) An image-processing method, characterized in that, in the image-processing method for generating output-referred image data by applying an optimization processing to captured image data so as to optimize a visual image on an outputting medium, the method includes:

a gradation mapping process for converting a color space of the captured image data to a luminance expansion color space in response to an editing instruction of a user to apply a gradation adjustment processing; and
a color gamut adjustment process for converting image data acquired in the gradation mapping process by employing a color appearance model, to conduct a color gamut mapping for every outputting medium.

(4) An image-processing method, characterized in that,

in the image-processing method for generating output-referred image data by applying an optimization processing to captured image data so as to optimize a visual image on an outputting medium, the method includes:

a generating process for converting the captured image data by employing a color appearance model in response to an editing instruction of a user, to generate output-referred image data sets to be used for at least two outputting mediums, being different from each other, at a time, by employing color gamut adjustment processing for conducting the color gamut mapping for every outputting medium.

(5) An image-processing method, characterized in that,

in the image-processing method for generating output-referred image data by applying an optimization processing to captured image data so as to optimize a visual image on an outputting medium, the method includes:

a color gamut adjustment process for converting the captured image data by employing a color appearance model in response to an editing instruction of a user to conduct a color gamut mapping for every outputting medium; and
a generating process for applying a color gamut adjustment processing to at least a set of output-referred image data acquired for a first outputting medium in the color gamut adjustment process, to generate new output-referred image data to be used for a second outputting medium being different from the first outputting medium.

(6) An image-processing method, characterized in that,

in the image-processing method for generating output-referred image data by applying an optimization processing to captured image data so as to optimize a visual image on an outputting medium, the method includes:

a gradation mapping process for applying a gradation adjustment processing to the captured image data in response to an editing instruction of a user; and
a generating process for converting image data acquired in the gradation mapping process by employing a color appearance model, to generate output-referred image data sets to be used for at least two outputting mediums, being different from each other, at a time, by employing color gamut adjustment processing for conducting the color gamut mapping for every outputting medium.

(7) An image-processing method, characterized in that,

in the image-processing method for generating output-referred image data by applying an optimization processing to captured image data so as to optimize a visual image on an outputting medium, the method includes:

a gradation mapping process for applying a gradation adjustment processing to the captured image data in response to an editing instruction of a user;
a color gamut adjustment process for converting image data acquired in the gradation mapping process by employing a color appearance model to conduct a color gamut mapping for every outputting medium; and
a generating process for applying a color gamut adjustment processing to at least a set of output-referred image data acquired for a first outputting medium in the color gamut adjustment process, to generate new output-referred image data to be used for a second outputting medium being different from the first outputting medium.

(8) An image-processing method, characterized in that,

in the image-processing method for generating output-referred image data by applying an optimization processing to captured image data so as to optimize a visual image on an outputting medium, the method includes:

a gradation mapping process for converting a color space of the captured image data to a luminance expansion color space in response to an editing instruction of a user to apply a gradation adjustment processing; and
a generating process for converting image data acquired in the gradation mapping process by employing a color appearance model, to generate output-referred image data sets to be used for at least two outputting mediums, being different from each other, at a time, by employing color gamut adjustment processing for conducting the color gamut mapping for every outputting medium.

(9) An image-processing method, characterized in that,

in the image-processing method for generating output-referred image data by applying an optimization processing to captured image data so as to optimize a visual image on an outputting medium, the method includes:

a gradation mapping process for converting a color space of the captured image data to a luminance expansion color space in response to an editing instruction of a user to apply a gradation adjustment processing;

a color gamut adjustment process for converting image data acquired in the gradation mapping process by employing a color appearance model, to conduct a color gamut mapping for every outputting medium; and

a generating process for applying a color gamut adjustment processing to at least a set of output-referred image data acquired for a first outputting medium in the color gamut adjustment process, to generate new output-referred image data to be used for a second outputting medium being different from the first outputting medium.

(10) The image-processing method, described in any one of items 4, 6, 8, characterized in that

at least one of two output-referred image data sets, which are generated in the generating process so as to use them for at least two outputting mediums, is used for an outputting medium, which forms an image by self-illuminating actions and displays a proofing image utilized for proofing a visual image to be outputted onto another outputting medium.

(11) The image-processing method, described in any one of items 5, 7, 9, characterized in that

the new output-referred image data, generated in the generating process and to be used for the second outputting medium being different from the first outputting medium, is used for an outputting medium, which forms an image by self-illuminating actions and displays a proofing image utilized for proofing a visual image to be outputted onto another outputting medium.

(12) The image-processing method, described in any one of items 3, 8, 9, characterized in that

the luminance expansion color space is an scRGB.

(13) The image-processing method, described in any one of items 2, 3, 6 - 12, characterized in that

the captured image data are raw data, and

in response to an analysis result of inputted information or a main subject represented by the captured image data, processing conditions of the gradation mapping are adjusted at least once at the time of an image reading operation.

(14) The image-processing method, described in any one of items 1 - 13, characterized in that

in response to an analysis result of inputted information or a main subject represented by the captured image data, processing conditions of the color gamut mapping are adjusted.

(15) The image-processing method, described in item 13 or 14, characterized in that

the inputted information includes at least one of an image analyzing result, meta data, information added to image data in a form specifiable for every image file.

(16) The image-processing method, described in any one of items 1 - 15, characterized in that

the color appearance model is a CIECAM97s or a CIECAM02.

(17) An image-processing apparatus, characterized in that,

in the image-processing apparatus for generating output-referred image data by applying an optimization processing to captured image data so as to optimize a visual image on an outputting medium, the apparatus includes:

a color gamut adjustment means for converting the captured image data by employing a color appearance model in response to an editing instruction of a user to conduct a color gamut mapping for every outputting medium.

(18) An image-processing apparatus, characterized in that,

in the image-processing apparatus for generating output-referred image data by applying an optimization processing to captured image data so as to optimize a visual image on an outputting medium, the apparatus includes:

a gradation mapping means for applying a gradation adjustment processing to the captured image data in response to an editing instruction of a user; and

a color gamut adjustment means for converting image data acquired by the gradation mapping means by employing a color appearance model to conduct a color gamut mapping for every outputting medium.

(19) An image-processing apparatus, characterized in that,

in the image-processing apparatus for generating output-referred image data by applying an optimization processing to captured image data so as to optimize a visual image on an outputting medium, the apparatus includes:

a gradation mapping means for converting a color space of the captured image data to a luminance expansion color space in response to an editing instruction of a user to apply a gradation adjustment processing; and a color gamut adjustment means for converting image data acquired by the gradation mapping means by employing a color appearance model, to conduct a color gamut mapping for every outputting medium.

(20) An image-processing apparatus, characterized in that,

in the image-processing apparatus for generating output-referred image data by applying an optimization processing to captured image data so as to optimize a visual image on an outputting medium, the apparatus includes:

a generating means for converting the captured image data by employing a color appearance model in response to an editing instruction of a user, to generate output-referred image data sets to be used for at least two outputting mediums, being different from each other, at a time, by employing color gamut adjustment processing for conducting the color gamut mapping for every outputting medium.

(21) An image-processing apparatus, characterized in that,

in the image-processing apparatus for generating output-referred image data by applying an optimization processing to captured image data so as to optimize a visual image on an outputting medium, the apparatus includes:

a color gamut adjustment means for converting the captured image data by employing a color appearance model in response to an editing instruction of a user to conduct a color gamut mapping for every outputting medium; and a generating means for applying a color gamut adjustment processing to at least a set of output-referred image data acquired for a first outputting medium by the color gamut adjustment means, to generate new output-referred image data to be used for a second outputting medium being different from the first outputting medium.

(22) An image-processing apparatus, characterized in that,

in the image-processing apparatus for generating output-referred image data by applying an optimization processing to captured image data so as to optimize a visual image on an outputting medium, the apparatus includes:

a gradation mapping means for applying a gradation adjustment processing to the captured image data in response to an editing instruction of a user; and a generating means for converting image data, acquired by the gradation mapping means, by employing a color appearance model, to generate output-referred image data sets to be used for at least two outputting mediums, being different from each other, at a time, by employing color gamut adjustment processing for conducting the color gamut mapping for every outputting medium.

(23) An image-processing apparatus, characterized in that,

in the image-processing apparatus for generating output-referred image data by applying an optimization processing to captured image data so as to optimize a visual image on an outputting medium, the apparatus includes:

a gradation mapping means for applying a gradation adjustment processing to the captured image data in response to an editing instruction of a user; a color gamut adjustment means for converting image data, acquired by the gradation mapping means, by employing a color appearance model to conduct a color gamut mapping for every outputting medium; and a generating means for applying a color gamut adjustment processing to at least a set of output-referred image data acquired for a first outputting medium in the color gamut adjustment process, to generate new output-referred image data to be used for a second outputting medium being different from the first outputting medium.

(24) An image-processing apparatus, characterized in that,

in the image-processing apparatus for generating output-referred image data by applying an optimization processing to captured image data so as to optimize a visual image on an outputting medium, the apparatus includes:

a gradation mapping means for converting a color space of the captured image data to a luminance expansion color space in response to an editing instruction of a user to apply a gradation adjustment processing; and

a generating means for converting image data, acquired by the gradation mapping means, by employing a color appearance model, to generate output-referred image data sets to be used for at least two outputting mediums, being different from each other, at a time, by employing color gamut adjustment processing for conducting the color gamut mapping for every outputting medium.

(25) An image-processing apparatus, characterized in that,

in the image-processing apparatus for generating output-referred image data by applying an optimization processing to captured image data so as to optimize a visual image on an outputting medium, the apparatus includes:

a gradation mapping means for converting a color space of the captured image data to a luminance expansion color space in response to an editing instruction of a user to apply a gradation adjustment processing;

a color gamut adjustment means for converting image data acquired in the gradation mapping process by employing a color appearance model, to conduct a color gamut mapping for every outputting medium; and

a generating means for applying a color gamut adjustment processing to at least a set of output-referred image data acquired for a first outputting medium in the color gamut adjustment process, to generate new output-referred image data to be used for a second outputting medium being different from the first outputting medium.

(26) The image-processing apparatus, described in any one of items 20, 22, 24, characterized in that

at least one of two output-referred image data sets, which are generated by the generating means so as to use them for at least two outputting mediums, is used for an outputting medium, which forms an image by self-illuminating actions and displays a proofing image utilized for proofing a visual image to be outputted onto another outputting medium.

(27) The image-processing apparatus, described in any one of items 21, 23, 25, characterized in that

the new output-referred image data, generated by the generating means and to be used for the second outputting medium being different from the first outputting medium, is used for an outputting medium; which forms an image by self-illuminating actions and displays a proofing image utilized for proofing a visual image to be outputted onto another outputting medium.

(28) The image-processing apparatus, described in any one of items 19, 24, 25, characterized in that

the luminance expansion color space is an scRGB.

(29) The image-processing apparatus, described in any one of items 18, 19, 22 - 28, characterized in that

the captured image data are raw data, and

in response to an analysis result of inputted information or a main subject represented by the captured image data, processing conditions of the gradation mapping are adjusted at least once at the time of an image reading operation.

(30) The image-processing apparatus, described in any one of items 17 - 29, characterized in that

in response to an analysis result of inputted information or a main subject represented by the captured image data, processing conditions of the color gamut mapping are adjusted.

(31) The image-processing apparatus, described in item 29 or 30, characterized in that

the inputted information are provided with at least one of an image analyzing result, meta data, information added to image data in a form specifiable for every image file.

(32) The image-processing apparatus, described in any one of items 17 - 31, characterized in that

the color appearance model is a CIECAM97s or a CIECAM02.

(33) An image-recording apparatus, characterized in that,

in the image-recording apparatus that generates output-referred image data by applying an optimization processing to captured image data so as to optimize a visual image on an outputting medium, and forms an image based on the output-referred image data on the outputting medium, the apparatus includes:

a color gamut adjustment means for converting the captured image data by employing a color appearance model in response to an editing instruction of a user to conduct a color gamut mapping for every outputting medium.

(34) An image-recording apparatus, characterized in that,

in the image-recording apparatus that generates output-referred image data by applying an optimization processing to captured image data so as to optimize a visual image on an outputting medium, and forms an image based on the output-referred image data on the outputting medium, the apparatus includes:

a gradation mapping means for applying a gradation adjustment processing to the captured image data in response to an editing instruction of a user; and
a color gamut adjustment means for converting image data acquired by the gradation mapping means by employing a color appearance model to conduct a color gamut mapping for every outputting medium.

(35) An image-recording apparatus, characterized in that,
in the image-recording apparatus that generates output-referred image data by applying an optimization processing to captured image data so as to optimize a visual image on an outputting medium, and forms an image based on the output-referred image data on the outputting medium, the apparatus includes:

a gradation mapping means for converting a color space of the captured image data to a luminance expansion color space in response to an editing instruction of a user to apply a gradation adjustment processing; and
a color gamut adjustment means for converting image data acquired by the gradation mapping means by employing a color appearance model, to conduct a color gamut mapping for every outputting medium.

(36) An image-recording apparatus, characterized in that,
in the image-recording apparatus that generates output-referred image data by applying an optimization processing to captured image data so as to optimize a visual image on an outputting medium, and forms an image based on the output-referred image data on the outputting medium, the apparatus includes:

a generating means for converting the captured image data by employing a color appearance model in response to an editing instruction of a user, to generate output-referred image data sets to be used for at least two outputting mediums, being different from each other, at a time, by employing color gamut adjustment processing for conducting the color gamut mapping for every outputting medium.

(37) An image-recording apparatus, characterized in that,
in the image-recording apparatus that generates output-referred image data by applying an optimization processing to captured image data so as to optimize a visual image on an outputting medium, and forms an image based on the output-referred image data on the outputting medium, the apparatus includes:

a color gamut adjustment means for converting the captured image data by employing a color appearance model in response to an editing instruction of a user to conduct a color gamut mapping for every outputting medium; and
a generating means for applying a color gamut adjustment processing to at least a set of output-referred image data acquired for a first outputting medium by the color gamut adjustment means, to generate new output-referred image data to be used for a second outputting medium being different from the first outputting medium.

(38) An image-recording apparatus, characterized in that,
in the image-recording apparatus that generates output-referred image data by applying an optimization processing to captured image data so as to optimize a visual image on an outputting medium, and forms an image based on the output-referred image data on the outputting medium, the apparatus includes:

a gradation mapping means for applying a gradation adjustment processing to the captured image data in response to an editing instruction of a user; and
a generating means for converting image data, acquired by the gradation mapping means, by employing a color appearance model, to generate output-referred image data sets to be used for at least two outputting mediums, being different from each other, at a time, by employing color gamut adjustment processing for conducting the color gamut mapping for every outputting medium.

(39) An image-recording apparatus, characterized in that,
in the image-recording apparatus that generates output-referred image data by applying an optimization processing to captured image data so as to optimize a visual image on an outputting medium, and forms an image based on the output-referred image data on the outputting medium, the apparatus includes:

a gradation mapping means for applying a gradation adjustment processing to the captured image data in response to an editing instruction of a user;
a color gamut adjustment means for converting image data, acquired by the gradation mapping means, by employing a color appearance model to conduct a color gamut mapping for every outputting medium; and
a generating means for applying a color gamut adjustment processing to at least a set of output-referred image data acquired for a first outputting medium in the color gamut adjustment process, to generate new output-referred image data to be used for a second outputting medium being different from the first outputting medium.

(40) An image-recording apparatus, characterized in that,

in the image-recording apparatus that generates output-referred image data by applying an optimization processing to captured image data so as to optimize a visual image on an outputting medium, and forms an image based on the output-referred image data on the outputting medium, the apparatus includes:

a gradation mapping means for converting a color space of the captured image data to a luminance expansion color space in response to an editing instruction of a user to apply a gradation adjustment processing; and
a generating means for converting image data, acquired by the gradation mapping means, by employing a color appearance model, to generate output-referred image data sets to be used for at least two outputting mediums, being different from each other, at a time, by employing color gamut adjustment processing for conducting the color gamut mapping for every outputting medium.

(41) An image-recording apparatus, characterized in that,

in the image-recording apparatus that generates output-referred image data by applying an optimization processing to captured image data so as to optimize a visual image on an outputting medium, and forms an image based on the output-referred image data on the outputting medium, the apparatus includes:

a gradation mapping means for converting a color space of the captured image data to a luminance expansion color space in response to an editing instruction of a user to apply a gradation adjustment processing;
a color gamut adjustment means for converting image data acquired in the gradation mapping process by employing a color appearance model, to conduct a color gamut mapping for every outputting medium; and
a generating means for applying a color gamut adjustment processing to at least a set of output-referred image data acquired for a first outputting medium in the color gamut adjustment process, to generate new output-referred image data to be used for a second outputting medium being different from the first outputting medium.

(42) The image-recording apparatus, described in any one of items 36, 38, 40, characterized in that

at least one of two output-referred image data sets, which are generated by the generating means so as to use them for at least two outputting mediums, is used for an outputting medium, which forms an image by self-illuminating actions and displays a proofing image utilized for proofing a visual image to be outputted onto another outputting medium.

(43) The image-recording apparatus, described in any one of items 37, 39, 41, characterized in that

the new output-referred image data, generated by the generating means and to be used for the second outputting medium being different from the first outputting medium, is used for an outputting medium, which forms an image by self-illuminating actions and displays a proofing image utilized for proofing a visual image to be outputted onto another outputting medium.

(44) The image-recording apparatus, described in any one of items 35, 40, 41, characterized in that

the luminance expansion color space is an scRGB.

(45) The image-recording apparatus, described in any one of items 34, 35, 38 - 44, characterized in that

the captured image data are raw data, and

in response to an analysis result of inputted information or a main subject represented by the captured image data, processing conditions of the gradation mapping are adjusted at least once at the time of an image reading operation.

(46) The image-recording apparatus, described in any one of items 33 - 45, characterized in that

in response to an analysis result of inputted information or a main subject represented by the captured image data, processing conditions of the color gamut mapping are adjusted.

(47) The image-recording apparatus, described in item 29 or 30, characterized in that

the inputted information are provided with at least one of an image analyzing result, meta data, information added to image data in a form specifiable for every image file.

(48) The image-recording apparatus, described in any one of items 33 - 47, characterized in that

the color appearance model is a CIECAM97s or a CIECAM02.

Next, technical terms employed in the present invention will be detailed in the following.

Incidentally, the term of "captured image data", described in the present specification, is defined as digital image data that represent subject image information in a form of electronic signals. Any kind of process can be employed for acquiring the digital image data, for instance, such as generating the digital image data by scanning a color photographic film to read dye-image information recoded in the film, generating the digital image data by means of the digital camera, etc.

However, when generating the digital image data from a color negative film by reading it with a scanner, it is desirable that the calibration of the maximum transmitted light amount and the reversal processing are applied to the film so as to make all of the RGB values, of the digital image data at the non-exposed area (minimum density area) of the color negative film, zero, and then, by applying the conversion processing for converting the scale in direct proportion to the maximum transmitted light amount to the logarithmic (density) scale and the gamma correction processing of the color negative film, a state of being substantially in proportion to the intensity change of the subject is reproduced in advance. Further, it is also desirable that the RGB values of the digital image data representing an image captured by the digital camera are substantially in proportion to the intensity change of the subject as well. The term of "raw data" has been well known as a file format of the digital image data stored in the abovementioned state. In the present invention, it is desirable that the captured image data are the "raw data". Further, the term of "scene-referred image data" detailed later has been also well known as a file format of the digital image data recorded in a state of being substantially in proportion to the intensity change of the subject. Still further, it is also possible to employ "output-referred image data" detailed later as the captured image data. Yet further, it is desirable that the color space of the "scene-referred image data" or the "output-referred image data" is a "luminance expansion color space" (for instance, an scRGB).

The terms of "scene-referred image data" and "output-referred image data" will be detailed in the following.

Generally speaking, due to a considerable amount of the lighting unevenness, the luminance ratio of the photographed scene frequently exceeds 1000 times (refer to, for instance, "Color Science Handbook second edition", edited by the Color Science Association of Japan, published by Tokyo University publishing association, p925-926, (1998)). On the other hand, the displayable luminance ratio (luminance dynamic range) of various kinds of displaying media is in an order of 100 times. Inevitably, gradation of the photographed image is different from that of the actual scene. Accordingly, it has been a fundamental in the photographic design field how to appropriately express the impression of the scene having the luminance ratio in an order of 1000 times on an outputting medium having the luminance ratio in an order of 100 times.

Since, in the converting operation from the scene gradation to the photographic gradation, the suitable mapping conditions vary with a state of the scene (the luminance ratio in the composition, the intensity of the main subject, etc.), it is impossible to evenly determine the suitable mapping conditions. Accordingly, the following architectures have been employed for the silver-halide photographic image.

[DESIGN 1] A negative film is designed as a soft gradation so that its density linearly vary corresponding to the luminance ratio in an order of several thousands times. As a result, all of the luminance information of the scene can be recorded onto the negative film without omission.

[DESIGN 2] The abovementioned negative film, designed as a soft gradation, is printed onto a photographic paper of a hard gradation, so as to create a gradation suitable for viewing. The center of the photographic gradation to be reproduced is selected out of the wide variety of scene luminance by adjusting an amount of the print exposure.

In the case of DESIGN 2, the printer automatically analyzes the negative film so as to calculate the appropriate conditions. When the calculation result did not coincide with the intension of the image-capturing operation, the appropriate photographic print could be created by conducting the "reprinting operation" upon instructions pointed out by the user. For instance, with respect to a photographic print in which a priority is given to a landscape, the user would point out that he would like to attach greater importance to a person in a shadow than to the landscape.

When the reversal film is employed, since the visual image is directly created by developing the reversal film, it is impossible to design it as the soft gradation described in DESIGN 1. Accordingly, since the width of the luminance ratio range recordable for the reversal film is narrow, it is necessary to carefully establish the photographic conditions (such as lighting, an aperture, a shutter speed, etc.) at the time of image-capturing operation, in order to capture an appropriate image. In addition, it is impossible to correct the captured image by employing the "reprinting operation" as mentioned in the above. Therefore, the reversal film is commercialized in the market as a professional product or a product specialized for the high-end armature user. As described in the above, it is possible to say that the difference between the negative film and the positive film (the reversal film) lies on not only the gradation difference between negative and positive images, but also the property difference of image data.

Comparing the architecture of the DSC (Digital Still Camera) with that of the silver-halide photographic image on the abovementioned point of view, the structure of the DSC for general purpose (for creating a visual image file of the sRGB) corresponds to that of the reversal film. In other words, the result of selecting the center of the photographic gradation to be reproduced out of the wide variety of scene luminance depends on an accuracy of the exposure controlling program. Accordingly, it is impossible to correct the selected center of the photographic gradation after the image-capturing operation is completed. On the other hand, the professional user employs the DSC, which is capable of storing raw data (raw data photo-electronically received by CCD (Charge Coupled Device)), so as to designate the center of the photographic gradation to be reproduced by means of the developing software after the image-capturing operation is completed. This method corresponds to the structure of the negative film. As described in the above, it is possible to say that the property of the sRGB image data generated by the image-capturing operation performed by the DSC of general purpose is different from that of the raw data.

The abovementioned property difference between image data is caused by the difference of "rendering state of image data". The term of "image state" employed hereinafter has been firmly established in recent years as a concept of indicating the "rendering state of image data". Further, its detailed definition is set forth in, for instance, "Requirements for Unambiguous Specification of a Color Encoding ISO 22028-1", Kevin Spaulding, in Proc. Tenth Color Imaging Conference: Color Science and Engineering Systems, Technologies, Application IS&T, Springfield, VA, p. 106-111 (2002).

The term of "scene-referred" and the term of "output referred" can be cited as terms representing the kinds of "image states". The term of "scene-referred" means a state of representing a chromaticity evaluation value for a landscape scene. For instance, this state corresponds to a state of an image for which only calibrations of spectral sensitivity, etc. are applied to the raw data captured by the DSC (Digital Still Camera) without applying the intentional emphasizing operation. Although the scene-referred image data represent a relative chromaticity evaluation value for a scene, it is also possible to convert it to an absolute chromaticity evaluation value by referring to the additive scale information. The OECF (Opto-Electronic Conversion Function, defined by ISO14524) the f-number of aperture and the exposing time can be cited as the scale information. The term of "output referred" means a state of rendering the expression suitable for a specific output device or an observing condition. For instance, the JPEG (Joint Photographic Coding Experts Group) generated by the DSC for general purpose corresponds to the "output referred", since it is optimized for the displaying operation on the display device.

In the present invention, the term of the "scene-referred image data" is defined as a kind of image data categorized in an image state of the "scene-referred", and specifically means such image data that have substantially a linear relationship between the luminance value of recorded pixel and the scene luminance. Further, in the present invention, the term of the "output-referred image data" is defined as image data categorized in an image state of the "output-referred".

The term "scene-referred image data" used in the specification of the present application refers to the image data obtained by applying processing of mapping the signal intensity of each color channel based on at least the spectral sensitivity of the image sensor itself onto the color space (a luminance expansion color space, detailed later) such as, RIMM RGB, ERIMM RGB, scRGB, etc. The term signifies the image data where image processing of modifying the data contents as to improve the effect of viewing the image, such as gradation conversion, sharpness enhancement and color saturation enhancement, is omitted. It is preferred that the scene-referred raw data be subjected to correction of the photoelectric conversion characteristics (the opto-electronic conversion function defined in ISO1452, e.g. "Fine imaging and digital photographing" edited by the Publishing Commission of the Japan Society of Electrophotography, Corona Publishing Co., P. 449) of the image-capturing apparatus. It is preferred that the amount of the scene-referred image data of a standardized form (e.g. number of gradations) be equal to or greater than the amount of information (e.g. the number of gradations) required by the output-referred image data (to be described later) according to the performance of the aforementioned analog-to-digital converter. For example, when the number of gradations of the output-referred image data is 8 bits per channel, the number of gradations of the scene-referred image data should preferably be 12 bits or more, and more preferably 16 bits or more.

The "optimization processing to optimize a visual image on an outputting medium" is provided to ensure the optimum image on such display device as CRT, liquid crystal display and plasma display, or such an outputting medium as silver halide photographic paper, inkjet paper and thermal printing paper. For example, when display is given on the CRT display monitor conforming to the sRGB standard, processing is provided in such a way that the optimum color reproduction can be gained within the color gamut of the sRGB standard. When the data is to be outputted on silver halide photographic paper, processing is provided in such a way that the optimum color reproduction can be gained within the color gamut of silver halide photographic paper. In addition to compression of the above-mentioned color gamut, compression of gradation from 16 to 8 bits, reduction in the number of output pixels, and processing in response to the output characteristics (LUT) of the output device are also included. Further, it is needless to say that such processing as noise control, sharpening, white balance adjustment, color saturation adjustment or dodging is carried out.

The image data "optimized for viewing on an outputting medium" denotes digital image data that is used by such a display device as a CRT, a liquid crystal display, a plasma display, etc., or by the output device for generation of a hard copy image on such an outputting medium as a silver halide photographic paper, an inkjet paper, a thermal printing paper, etc. When the captured image data are the scene-referred image data, the image data "optimized for viewing on an outputting medium" correspond to the output-referred image data. Hereinafter, the term of "electronic development processing" (or "development processing", for simplicity) denotes the operation for generating the output-referred image data from the raw data or the scene-referred image data, and the term of "electronic development software" (or "development software", for simplicity) denotes the application software provided with the function of the "electronic development processing".

In the present invention, the term of "color gamut adjustment processing" denotes the consecutive working process for suppressing the variation of "color appearance" of the image for every outputting medium. The present invention is characterized in that the color gamut adjustment is conducted in response to editing instructions inputted by the user. The "color gamut adjustment" is to apply the conversion processing (denoted as the "color gamut mapping for every outputting medium"), using the Look Up Table (hereinafter, referred to as the "LUT" or the "profile", for simplicity) defined in advance corresponding to each of output characteristics (for instance, the "color gamut"), to the digital-image data for outputting use, for instance, so that the "color appearance" of the image formed on the silver-halide printing paper coincides with that formed on the ink-jet printing paper. Further, this "color gamut adjustment" mentioned in the above has been conventionally well-known as a general method. Still further, there has been well known a method for converting the color space of the digital image data to an intermediate color space, which is independent from the device (denoted as the "device independent color space" or the "device independent color"), when applying the color gamut mapping for every outputting medium. For instance, the XYZ (CIE/XYZ) and the L*a*b* (CIE/L*a*b*), each serving as a color space specified by the CIE (International Commission on Illumination), can be cited as the intermediate color space. The present invention is characterized in that either CIECAM97s or CIECAM02, detailed later, is employed for the converting operation to the intermediate color space.

In the present invention, the term of "converting the captured image data by employing the color appearance model" is not only to correct the variation of visual environment, such as a color temperature of the light source, etc., at the time of the image-capturing operation, but also to apply the conversion processing according to the assumed visual environment when viewing the image formed on the outputting medium.

The "color appearance model" is defined as such a model that is capable of estimating the "color appearance" under each of various kinds of viewing conditions. Concretely speaking, the "color appearance model" is employed for calculating a value representing the "color appearance" under a designated viewing condition by conducting the converting operation of the colorimetry value with parameters based on the viewing condition (hereinafter, also referred to as the observing condition). It is desirable that either CIECAM97s or CIECAM02, recommended by CIE (International Commission on Illumination) as a standard model, is employed for this purpose.

<COLOR APPEARANCE MODEL>

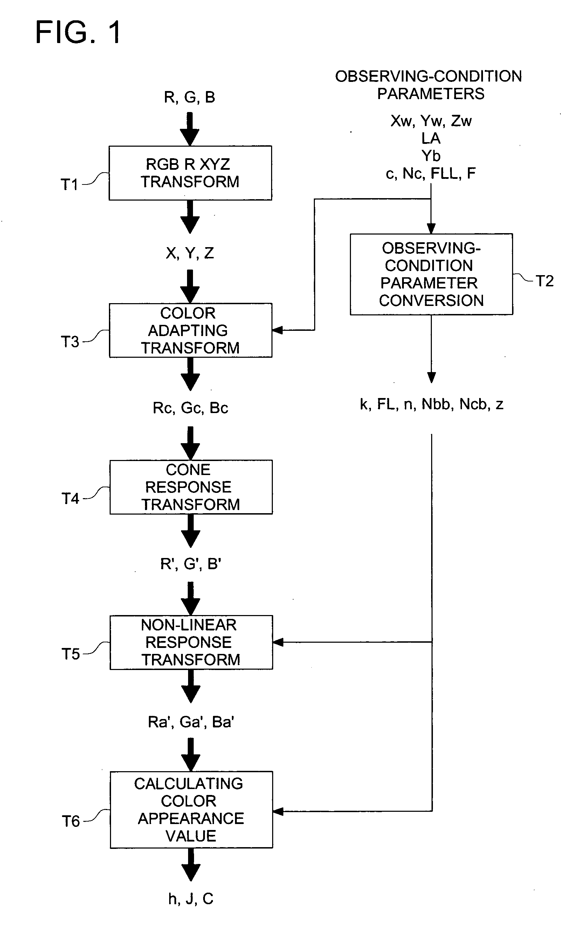

The color appearance model will be detailed in the following. In the following, the case of applying CIECAM97s as the color appearance model will be detailed. Initially, referring to the flowchart shown in Fig. 1, the forward transform employing the color appearance model will be described. The required input data, to be inputted into the color appearance model, are shown as follow.

- Tristimulus values of color to be predicted: X, Y, Z
- Observing condition parameters with respect to input image

      Tristimulus values of white in the adapting field: Xw, Yw, Zw
      Average luminance in the adapting field: LA
      Relative luminance of the source background: Yb
      Constants determined by the surround conditions: c, Nc, $F_{LL}$, F

In step T1, the RGB values of each of pixels represented by the input image data are transformed to tristimulus values X, Y, Z. When the image data are described in the scRGB, the image data can be transformed to tristimulus values X, Y, Z by employing the equations shown as follow.

$$\begin{pmatrix} R' \\ G' \\ B' \end{pmatrix} = \begin{pmatrix} (R \div 8192.0) - 0.5 \\ (G \div 8192.0) - 0.5 \\ (B \div 8192.0) - 0.5 \end{pmatrix}$$

$$\begin{pmatrix} X \\ Y \\ Z \end{pmatrix} = \begin{pmatrix} 0.4124 & 0.3576 & 0.1805 \\ 0.2126 & 0.7152 & 0.0722 \\ 0.0193 & 0.1192 & 0.9505 \end{pmatrix} \begin{pmatrix} R' \\ G' \\ B' \end{pmatrix}$$

Further, when the image data are described in the sRGB, the image data can be transformed to tristimulus values X, Y, Z by employing the equations shown as follow.

$R_{sRGB} = R / 255$
$G_{sRGB} = G / 255$
$B_{sRGB} = B / 255$

When

$R_{sRGB},\ G_{sRGB},\ B_{sRGB} \leq 0.04045,$
$R' = R_{sRGB} = B / 12.92$
$G' = G_{sRGB} = B / 12.92$
$B' = B_{sRGB} = B / 12.92$

When $R_{sRGB},\ G_{sRGB},\ B_{sRGB} > 0.04045,$

$$R' = \left[ (R_{sRGB} + 0.055)/1.055 \right]^{2.4}$$
$$G' = \left[ (G_{sRGB} + 0.055)/1.055 \right]^{2.4}$$
$$B' = \left[ (B_{sRGB} + 0.055)/1.055 \right]^{2.4}$$

$$\begin{pmatrix} X \\ Y \\ Z \end{pmatrix} = \begin{pmatrix} 0.4124 & 0.3576 & 0.1805 \\ 0.2126 & 0.7152 & 0.0722 \\ 0.0193 & 0.1192 & 0.9505 \end{pmatrix} \begin{pmatrix} R' \\ G' \\ B' \end{pmatrix}$$

Still further, when the image data are raw data, the image data can be transformed to tristimulus values X, Y, Z by employing the ICC profile in which the characteristics of the digital camera are described. Concretely speaking, the abovementioned transformation is conducted by using information of the 3x3 matrix described in the ICC profile.

Successively, in the step T2, the following values to be employed for calculations performed later on are calculated from the established observing-condition parameters.

$$k = \frac{1}{5 \cdot LA + 1}$$

$$F_L = 0.2 \cdot k^4 \cdot (5 \cdot LA) + 0.1 \cdot (1 - k^4)^2 \cdot (5 \cdot LA)^{\frac{1}{3}}$$

$$n = \frac{Yb}{Yw}$$

$$N_{bb} = N_{cb} = 0.725 \cdot \left( \frac{1}{n} \right)^{0.2}$$

$$z = 1 + F_{LL} \cdot n^{1/2}$$

In step T3, the chromatic-adaptation transform is applied to the image data. The chromatic-adaptation transform is a modified von Kries-type transformation in which the degree of adaptation for the source white under the observing condition is taken into account. At first, tristimulus values X, Y, Z are transformed to values
$\bar{R}, \bar{G}, \bar{B}$
by employing equation (24) shown as follow (hereinafter, these are represented by R1, G1, B1 in the sentences).

$$\begin{pmatrix} \bar{R} \\ \bar{G} \\ \bar{B} \end{pmatrix} = M_B \cdot \begin{pmatrix} X/Y \\ Y/Y \\ Z/Y \end{pmatrix}$$

Now, the equation shown as follow is employed as the transforming matrix $M_B$

$$M_B = \begin{pmatrix} 0.8951 & 0.2664 & -0.1614 \\ -0.7502 & 1.7135 & 0.0367 \\ 0.0389 & 0.0685 & 1.0296 \end{pmatrix}$$

The response values Rc, Gc, Bc as a result of the chromatic-adaptation transform are calculated from values R1, G1, B1 transformed in the above by employing the equations shown as follow.

$$Rc = \left[ \frac{D}{Rw} + (1-D) \right] \cdot \bar{R}$$

$$Gc = \left[ \frac{D}{Gw} + (1-D) \right] \cdot \bar{G}$$

$$Bc = \left[ \frac{D}{Bw^p} + (1-D) \right] \cdot |\bar{B}|^p$$

$$p = Bw^{0.0834}$$

$$D = F - F \Big/ \left[ 1 + 2\left(L_A^{1/4}\right) + \left(L_A^2\right)/300 \right]$$

Wherein the tristimulus values of the adapting white are transformed to values Rw, Gw, Bw by applying the transforming matrix $M_B$.

Then, in step T4, the image data processed by the chromatic-adaptation transform are further transformed to the cone responses R', G', B', wherein the cone corresponds to the sensor of the human's visual system. The inverse-transform, for the previous transform employing the matrix $M_B$, is conducted at first by employing the equations shown as follow, and then, the 3x3 matrix, called as the Hunt-Pointer-Estevez transform, is applied.

$$\begin{pmatrix} R' \\ G' \\ B' \end{pmatrix} = M_{HPE} \cdot M_B^{-1} \begin{pmatrix} Rc \cdot Y \\ Gc \cdot Y \\ Bc \cdot Y \end{pmatrix}$$

$$M_B^{-1} = \begin{pmatrix} 0.9870 & -0.1471 & 0.1600 \\ 0.4323 & 0.5184 & 0.0493 \\ -0.0085 & 0.0400 & 0.9685 \end{pmatrix}$$

$$M_{HPE} = \begin{pmatrix} 0.38971 & 0.68898 & -0.07868 \\ -0.22981 & 1.18340 & 0.04641 \\ 0 & 0 & 1 \end{pmatrix}$$

As a next step, in step The 5, the transform corresponding to a nonlinear response of visual sense is applied to the image data transformed to the cone responses by employing the equation shown as follow.

$$Ra' = \frac{40 \cdot \left(F_L \cdot R'/100\right)^{0.73}}{\left[\left(F_L \cdot R'/100\right)^{0.73} + 2\right]} + 1$$

$$Ga' = \frac{40 \cdot \left(F_L \cdot G'/100\right)^{0.73}}{\left[\left(F_L \cdot G'/100\right)^{0.73} + 2\right]} + 1$$

$$Ba' = \frac{40 \cdot \left(F_L \cdot B'/100\right)^{0.73}}{\left[\left(F_L \cdot B'/100\right)^{0.73} + 2\right]} + 1$$

Finally, in the step T6, the numerical values for predicting the "color appearance", such as hue angle: h, Lightness: J, and chroma: C are respectively calculated according to the equations shown as follow.

$$h = \tan^{-1}\left(b/a\right)$$

$$a = Ra' - 12 \cdot Ga'/11 + Ba'/11$$

$$b = \left(1/9\right) \cdot \left(Ra' + Ga' - 2 \cdot Ba'\right)$$

$$J = 100 \cdot \left(A/Aw\right)^{0.2}$$

$$A = \left[2 \cdot Ra' + Ga' + (1/20) \cdot Ba' - 0.305\right] \cdot N_{bb}$$

(Aw is calculated from Ra', Ga', Ba' acquired by transforming Xw, Yw, Zw in the same manner.)

$$C = 2.44 \cdot s^{0.69}\ (L/100)^{0.67n}\ (1.64 - 0.29^n)$$

$$s = \frac{50 \cdot (a^2 + b^2)^{1/2}\ 100 \cdot e \cdot (10/13)Nc \cdot Ncb}{Ra' + Ga' + (21/20) \cdot Ba'}$$

$$e = e_1 + (e_2 - e_1)\ (h - h_1)\ /\ (h_2 - h_1)$$

The values $h_1$, $h_2$, $e_1$, $e_2$ should be retrieved from Table 1 shown as follow.
In the case of $h < h_1$, h' = h + 360. Other than this case, h' = h. Then, "i" that fulfills $H_i \leq h' < h_{i+1}$ is found from

Table 1, and is used as $h_1 = h_i$, $h_2 = h_{i+1}$, $e_1 = e_i$, $e_2 = e_{i+1}$.

Table 1

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |
| $h_i$ | 0.0 | 100.0 | 200.0 | 300.0 | 400.0 |

Further, when the CIECAM02 is employed as the color appearance model, processing step T2 and its post-processing steps are replaced with the following steps.

In step T2, the following values are calculated from the observing condition parameters established in advance by employing the equations shown as follow.

$$k = \frac{1}{5 \cdot LA + 1}$$

$$F_L = 0.2 \cdot k^4 \cdot (5 \cdot LA) + 0.1 \cdot (1 - k^4)^2 \cdot (5. LA)^{\frac{1}{3}}$$

$$n = \frac{Yb}{Yw}$$

$$N_{bb} = N_{cb} = 0.725 \cdot \left(\frac{1}{n}\right)^{0.2}$$

$$z = 1.48 + \sqrt{n}$$

Then, in step T3, the chromatic-adaptation transform is applied to the image data. The chromatic-adaptation transform is a modified von Kries-type transformation in which the degree of adaptation for the source white under the observing condition is taken into account. At first, tristimulus values X, Y, Z are transformed to values R1, G1, B1 by employing the equation shown as follow.

$$\begin{pmatrix} \overline{R} \\ \overline{G} \\ \overline{B} \end{pmatrix} = M_{CAT02} \cdot \begin{pmatrix} X \\ Y \\ Z \end{pmatrix}$$

Now, the equation shown as follow is employed as the transforming matrix $M_{CAT02}$.

$$M_{CAT02} = \begin{pmatrix} 0.7328 & 0.4296 & -0.1624 \\ -0.7036 & 1.6975 & 0.0061 \\ 0.0030 & 0.0136 & 0.9834 \end{pmatrix}$$

The response values Rc, Gc, Bc as a result of the chromatic-adaptation transform are calculated from values R1, G1, B1 transformed in the above by employing the equations shown as follow.

$$Rc = \left[ Yw \cdot \frac{D}{Rw} + (1-D) \right] \cdot \overline{R}$$

$$Gc = \left[ Yw \cdot \frac{D}{Gw} + (1-D) \right] \cdot \overline{G}$$

$$Bc = \left[ Yw \cdot \frac{D}{Bw} + (1-D) \right] \cdot \overline{B}$$

$$D = F \left[ 1 - \left( \frac{1}{3.6} \right) e^{\left( \frac{-L_A - 42}{92} \right)} \right]$$

(where "e" represents the base of the natural logarithm)

Wherein the tristimulus values of the adapting white are transformed to values Rw, Gw, Bw by applying the transforming matrix $M_{cAT02}$.

Then, in step T4, the image data processed by the chromatic-adaptation transform are further transformed to the cone responses R', G', B', wherein the cone corresponds to the sensor of the human's visual system. The inverse-transform, for the previous transform employing the matrix $M_{CAT02}$, is conducted at first, and then, the 3x3 matrix, called as the Hunt-Pointer-Estevez transform, is applied.

$$\begin{pmatrix} R' \\ G' \\ B' \end{pmatrix} = M_{HPE} \cdot M_{CAT02}^{-1} \begin{pmatrix} Rc \\ Gc \\ Bc \end{pmatrix}$$

$$M_{CAT02}^{-1} = \begin{pmatrix} 1.096124 & -0.278869 & 0.182745 \\ 0.454369 & 0.473533 & 0.072098 \\ -0.009628 & -0.005698 & 1.015326 \end{pmatrix}$$

$$M_{HPE} = \begin{pmatrix} 0.38971 & 0.68898 & -0.07868 \\ -0.22981 & 1.18340 & 0.04641 \\ 0 & 0 & 1 \end{pmatrix}$$

In next step T5, the transform corresponding to a nonlinear response of visual sense is applied to the image data transformed to the cone responses by employing the equation shown as follow.

$$Ra' = \frac{400 \cdot \left( F_L \cdot R' / 100 \right)^{0.42}}{27.13 + \left( F_L \cdot R' / 100 \right)^{0.42}} + 0.1$$

$$Ga' = \frac{400 \cdot \left(F_L \cdot G' \middle/ 100\right)^{0.42}}{27.13 + \left(F_L \cdot G' \middle/ 100\right)^{0.42}} + 0.1$$

$$Ba' = \frac{400 \cdot \left(F_L \cdot B' \middle/ 100\right)^{0.42}}{27.13 + \left(F_L \cdot B' \middle/ 100\right)^{0.42}} + 0.1$$

Finally, in step T6, the numerical values for predicting the "color appearance", such as hue angle: h, Lightness: J, and chroma: C are respectively calculated according to the equations shown as follow.

$$h = \tan^{-1}\left(b \middle/ a\right)$$

$$a = Ra' - 12 \cdot Ga' \middle/ 11 + Ba' \middle/ 11$$

$$b = \left(1 \middle/ 9\right) \cdot \left(Ra' + Ga' - 2 \cdot Ba'\right)$$

$$J = 100 \cdot (A/Aw)^{0.2}$$

$$A = [2 \cdot Ra' + Ga' + (1/20) \cdot Ba' - 0.305] \cdot N_{bb}$$

(Aw is calculated from Ra', Ga', Ba' acquired by transforming Xw, Yw, Zw in the same manner.)

$$C = t^{0.9} \cdot \sqrt{J \middle/ 100} \cdot \left(1.64 - 0.29^n\right)^{0.73}$$

$$t = \frac{e_1 \cdot \left(a^2 + b^2\right)^{1/2}}{Ra' + Ga' + (21/20) \cdot Ba'}$$

$$e_1 = \left(\frac{12500}{13} \cdot Nc \cdot Ncb\right) \cdot \left[\cos\left(h \cdot \frac{\pi}{180} + 2\right) + 3.8\right]$$

According to the transform processing mentioned in the above, values R, G, B of the image data are transformed to values J, C, h representing the "color appearance".

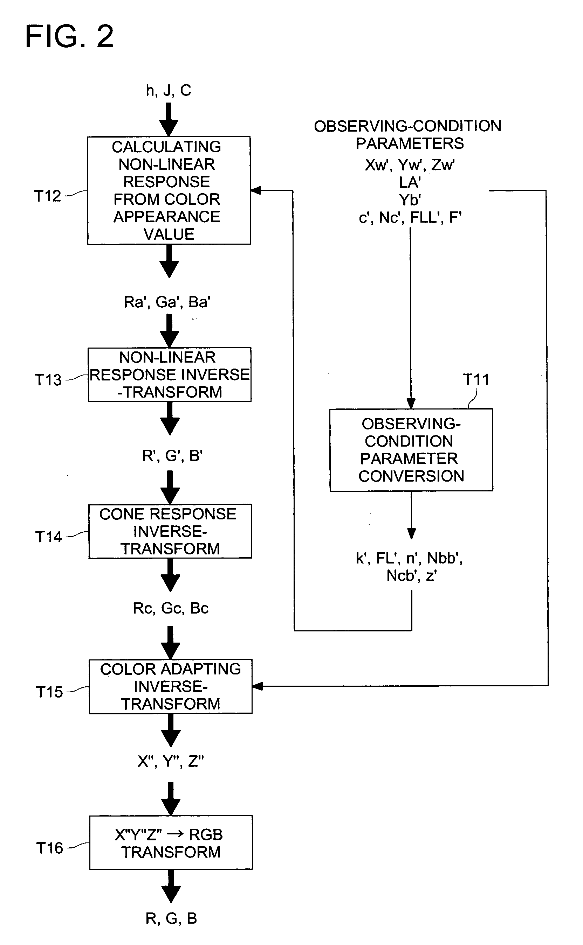

Next, referring to the flowchart shown in Fig. 2, the inverse-transform processing performed according to the "color appearance" will be detailed in the following.

At first, in step T11, variables k', $F_L$', $N_{bb}$', Z' are calculated from second observing condition parameters Xw', Yw', Zw', LA', Yb', c', Nc', $F_{LL}$', F', which are concerned to the output image, by employing the equations shown as follow.

$$k' = \frac{1}{5 \cdot LA' + 1}$$

$$F_L' = 0.2 \cdot k'^4 \cdot (5 \cdot LA') + 0.1 \cdot (1-k'^4)^2 \cdot (5 \cdot LA')^{\frac{1}{3}}$$

$$n' = \frac{Yb'}{Yw'}$$

$$N_{bb}' = N_{cb}' = 0.725 \cdot \left(\frac{1}{n'}\right)^{0.2}$$

$$z' = 1 + F_{LL}' \cdot n'^{1/2}$$

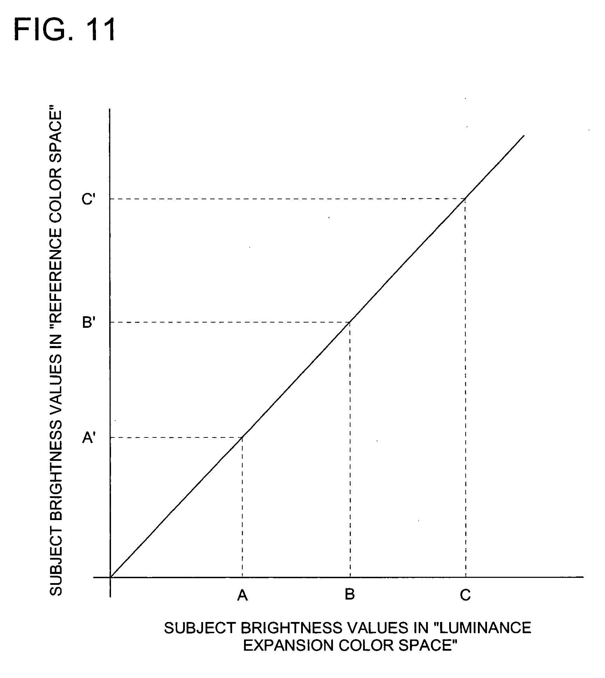

In addition, Aw is calculated by applying the arithmetic calculations to be performed in steps S33 through S36 in the flowchart of the CAM transform processing shown in Fig. 11.

Then, in step T12, nonlinear response values Ra', Ga', Ba' are calculated from parameters J, C, h, which represent the "color appearance". At first, values A, s are found from parameters J, C by employing the equations shown as follow.

$$A = Aw' \cdot \left(J/100\right)^{1/c' \cdot z'}$$

$$s = C^{1/0.69} / [2.44 \cdot (J/100)^{0.67 n'} (1.64 - 0.29^{n'})]^{1/0.69}$$

Further, values a, b are found by employing the equations shown as follow.

$$a = \frac{s \cdot (A/N_{bb}' + 2.05)}{\{[1+\tan^2(h)]^{1/2}[5000 \cdot e \cdot Nc' \cdot Ncb'/13] + s[11/23 + (108/23) \cdot \tan(h)]\}}$$

$$b = a \cdot \tan(h)$$

Wherein the polarity of $[1 + \tan^2(h)]^{1/2}$ in the above equation is defined as follow.

$$0 \leq h < 90 \qquad [1+\tan^2(h)]^{1/2}$$

$$90 \leq h < 270 \qquad -[1+\tan^2(h)]^{1/2}$$

$$270 \leq h < 360 \qquad [1+\tan^2(h)]^{1/2}$$

Further, "e" is also defined as follow.

$$e = e_1 + (e_2 - e_1)(h - h_1)/(h_2 - h_1)$$

The values $h_1$, $h_2$, $e_1$, $e_2$ should be retrieved from Table 2 shown as follow. In the case of $h < h_1$, $h' = h + 360$. Other than this case, $h' = h$. Then, "i" that fulfills $h_i \leq h' < h_{i+1}$ is found from Table 2, and is used as $h_1 = h_i$, $h_2 = h_{i+1}$, $e_1 = e_i$, $e_2 = e_{i+1}$.

Table 2

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |

The values Ra', Ga', Ba' are calculated by employing the equations shown as follow.

$$Ra' = (20/61) \cdot (A/N_{bb}' + 2.05) + (41/61)(11/23) \cdot a + (288/61) \cdot (1/23) \cdot b$$

$$Ga' = (20/61) \cdot (A/N_{bb}' + 2.05) + (81/61) \cdot (11/23) \cdot a + (261/61) \cdot (1/23) \cdot b$$

$$Ba' = (20/61) \cdot (A/N_{bb}' + 2.05) + (20/61) \cdot (11/23) \cdot a + (20/61) \cdot (315/23) \cdot b$$

In step T13, in order to find cone responses R', G', B', the nonlinear response values Ra', Ga', Ba' are inverse-transformed by employing the equations shown as follow.

$$R' = 100 \cdot \left[ (2 \cdot Ra' - 2)/(41 - Ra') \right]^{1/0.73}$$

$$G' = 100 \cdot \left[ (2 \cdot Ga' - 2)/(41 - Ga') \right]^{1/0.73}$$

$$B' = 100 \cdot \left[ (2 \cdot Ba' - 2)/(41 - Ba') \right]^{1/0.73}$$

Incidentally, in the case of Ra' - 1 < 0, the following equation should be employed as well as Ga', Ba'.

$$R' = -100 \cdot \left[ (2 - 2 \cdot Ra')/(39 - Ra') \right]^{1/0.73}$$

Then, according to the equations shown as follow, values RcY, GcY, BcY are calculated by inverse-transforming cone responses R', G', B'.

$$\begin{pmatrix} RcY \\ GcY \\ BcY \end{pmatrix} = M_B \cdot M_{HPE}^{-1} \begin{pmatrix} R' \\ G' \\ B' \end{pmatrix}$$

$$M_{HPE} = \begin{pmatrix} 1.91019 & -1.11214 & 0.20195 \\ 0.37095 & 0.62905 & 0 \\ 0 & 0 & 1 \end{pmatrix}$$

In step T15, the chromatic-adaptation inverse-transform is conducted so as to resume the colorimetry values. At first, value Yc is calculated by employing the equation shown as follow.

$$Yc = 0.43231 \cdot RcY + 0.51836 \cdot GcY + 0.04929 \cdot BcY$$

Successively, (Y/Yc)R, (Y/Yc)R, $(Y/Yc)^{1/P}$B are calculated by employing the equation shown as follow.

$$(Y/Yc)R = (Y/Yc)Rc/[D(1/Rw)+1-D]$$

$$(Y/Yc)G = (Y/Yc)Gc/[D(1/Gw)+1-D]$$

$$(Y/Yc)^{1/p}B = [|(Y/Yc)Bc|]^{1/p}/[D(1/Bw^p)+1-D]^{1/p}$$

Where, in the case of (Y/Yc) < 0, (Y/Yc)$^{1/P}$B is established as a negative value.

Then, value Y' is calculated by employing the equation shown as follow.

$$Y' = 0.43231 \cdot YR + 0.51836 \cdot YG + 0.04929 \cdot (Y/Yc)^{1/P}BYc$$

The tristimulus values X", Y", Z" are calculated by employing the equation shown as follow.

$$\begin{pmatrix} X" \\ Y" \\ Z" \end{pmatrix} = M^{-1} \begin{pmatrix} Yc(Y/Yc)R \\ Yc(Y/Yc)G \\ Yc(Y/Yc)^{1/p}B/Yc(Y'/Yc)^{(1/p-1)} \end{pmatrix}$$

As described in the foregoing, the values representing the "color appearance" and the tristimulus values X", Y", Z", corresponding to "Appearance" designated in an environment, are calculated from the second observing environment parameters.

In step T16, the tristimulus values are further transformed to the color space of the output device so as to output them. Concretely speaking, the abovementioned transformation is conducted by using information of the 3x3 matrix described in the ICC profile in which characteristics of a monitor or a printer are described, or by using the three-dimensional look-up table.

On the other hand, when the CIECAM02 is employed as the color appearance model, the inverse-transform processing mentioned in the above would be replaced by the following procedure.

At first, in step T11, the following variables k', $F_L$', $N_{bb}$', Z' are calculated from the second observing condition parameters by employing the equations shown as follow.

$$k' = \frac{1}{5 \cdot LA'+1}$$

$$F_L = 0.2 \cdot k'^4 \cdot (5 \cdot LA') + 0.1 \cdot (1 - k'^4)^2 \cdot (5 \cdot LA')^{\frac{1}{3}}$$

$$n' = \frac{Yb'}{Yw'}$$

$$N_{bb}' = N_{cb} = 0.725 \cdot \left(\frac{1}{n'}\right)$$

$$z' = 1.48 + \sqrt{n'}$$

Further, Aw' is calculated by employing the second observing condition parameters in regard to tristimulus values Xw', Yw', Zw' of white in the adapting field, and by applying the arithmetic calculations to be performed in steps T3 through T6 in the flowchart shown in Fig. 1.

Next, the calculating procedure of the nonlinear response values from the values of the "color appearance" will be detailed in the following.

At first, "i" that fulfills $h_i \leq h' < h_{i+1}$ is found by retrieving the input value of hue anqle h from Table 3.

Table 3

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |
| $h_i$ | 0.0 | 100.0 | 200.0 | 300.0 | 400.0 |

The value h' is calculated by using the abovementioned value "i" and the input value of color component H of "color appearance" by employing the equation shown as follow,

$$h' = \frac{(H - H_i)(e_{i+1} \cdot h_i - e_i \cdot h_{i+1}) - 100 - h_i \cdot e_{i+1}}{(H - H_i)(e_{i+1} - e_i) - 100 \cdot e_{i+1}}$$

Wherein, in the case of h' > 360, 360 should be subtracted from h' (namely, corrected h' = h' - 360).
Further, according to the equation shown as follow, variables t, e, A, $p_1$, $p_2$, $P_3$, $h_r$ are calculated by using the input values of chroma C representing "color appearance" and J representing Lightness.

$$t = \left( \frac{C}{\sqrt{J/100}\,(1.64 - 0.29^{n'})^{0.73}} \right)^{\frac{1}{0.9}}$$

$$e = \left( \frac{12500}{13} \cdot Nc' \cdot Ncb \right)\left( \cos\left( h' \frac{\pi}{180} + 2 \right) + 3.8 \right)$$

$$A = Aw' \left( J/100 \right)^{\frac{1}{o' \cdot z'}}$$

$$P_1 = e/t$$

$$p_2 = \left( A/Nbb' \right) + 0.305$$

$$P_3 = 21/20$$

$$h_r = h' \frac{\pi}{180}$$

Still further, if the relationship of |sin (hr)| ≥ |cos ($h_r$) | is fulfilled, the values $P_4$, "b", "a" are calculated by employing the equations shown as follow.

$$p_4 = P_1 / \sin(hr)$$

$$b = \frac{p_2(2+p_3)(460/1403)}{p_4 + (2+p_3)(220/1403)\left(\cos(h_r)/\sin(h_r)\right) - (27/1403) + p_3(6300/1403)}$$

$$a = b\left(\cos(h_r)/\sin(h_r)\right)$$

Still further, if the relationship of $|\sin(h_r)| < |\cos(h_r)$ is fulfilled, the values $P_5$, "b", "a" are calculated by employing the equations shown as follow.

$$p_5 = p_1/\cos(hr)$$

$$a = \frac{p_2(2+p_3)(460/1403)}{p_5 + (2+p_3)(220/1403) - \left((27/1403) - p_3(6300/1403)\right)\left(\sin(h_r)/\cos(h_r)\right)}$$

$$a = b\left(\sin(h_r)/\cos(h_r)\right)$$

Still further, the values Ra', Ga', Ba' are calculated by employing the equation shown as follow.

$$Ra' = \frac{460}{1403}p_2 + \frac{451}{1403}a + \frac{288}{1403} + b$$

$$Ga' = \frac{460}{1403}p_2 + \frac{891}{1403}a + \frac{261}{1403}b$$

$$Ba' = \frac{460}{1403}p_2 + \frac{220}{1403}a + \frac{6300}{1403}b$$

Still further, the calculation of the nonlinear response inverse-transform to be performed in step T13 is shown in the following.

$$R' = sign(Ra'\text{-}0.1) \cdot \frac{100}{F_L'} \cdot \left(\frac{27.13 \cdot |Ra'\text{-}0.1|}{400\text{-}|Ra'\text{-}0.1|}\right)^{\frac{1}{0.42}}$$

$$G' = sign(Ga'\text{-}0.1) \cdot \frac{100}{F_L'} \cdot \left(\frac{27.13 \cdot |Ga'\text{-}0.1|}{400\text{-}|Ga'\text{-}0.1|}\right)\frac{1}{0.42}$$

$$B' = sign(Ba'\text{-}0.1) \cdot \frac{100}{F_L'} \cdot \left(\frac{27.13 \cdot |Ba'\text{-}0.1|}{400\text{-}|Ba'\text{-}0.1|}\right)\frac{1}{0.42}$$

Wherein sign(x) is such a function that sign(x) = 1 when x > 0, sign(x) = 0 when x = 0, sign(x) = -1 when x < 0.
Still further, the calculation of the cone response inverse-transform to be performed in step T14 will is shown in the following.

$$\begin{pmatrix} Rc \\ Gc \\ Bc \end{pmatrix} = \begin{pmatrix} 0.7328 & 0.4296 & -0.1624 \\ -0.7036 & 1.6975 & 0.0061 \\ 0.0030 & 0.0136 & 0.9834 \end{pmatrix} \begin{pmatrix} 1.910197 & -1.112124 & 0.201908 \\ 0.370950 & 0.629054 & 0.000008 \\ 0 & 0 & 1 \end{pmatrix} \begin{pmatrix} R' \\ G' \\ B' \end{pmatrix}$$

Still further, the calculation of the chromatic-adaptation inverse-transform to be performed in step T15 is shown in the following.

$$R = \frac{Rc}{\left( Yw \cdot D / Rw' + 1 - D \right)}$$

$$G = \frac{Gc}{\left( Yw \cdot D / Gw' + 1 - D \right)}$$

$$B = \frac{Bc}{\left( Yw \cdot D / Bw' + 1 - D \right)}$$

$$\begin{pmatrix} X'' \\ Y'' \\ Z'' \end{pmatrix} = \begin{pmatrix} 1.096124 & -0.278869 & 0.182745 \\ 0.454369 & 0.473533 & 0.072098 \\ -0.009628 & -0.005698 & 1.015326 \end{pmatrix} \begin{pmatrix} R \\ G \\ B \end{pmatrix}$$

In step T16, the color tristimulus values X'', Y'', Z'' are converted to the color space of the output device to output them.

Incidentally, other than the CIECAM97s and the CIECAM02, which are employed in the present embodiment, various kinds of color appearance models, such as the Noya model, the Hunt model, the RLab model, the LLab model, etc., have been proposed so far. Of cause, instead of the CIECAM97s and the CIECAM02, such the color appearance models can be employed in the present embodiment.

In the present invention, the term of "conducting the color gamut mapping for every outputting medium" is to apply the color gamut mapping for every outputting medium to the image data, which are converted by employing the color appearance model, in order to suppress the variation of the "Appearance" of image for every outputting medium.

In the present invention, the term of "conducting the color gamut mapping", "corresponding to the editing instruction of the user" is to implement the color gamut mapping by employing the adjustment function of the image quality (for instance, a "color reproducibility"), provided with the developing software embodied in the present invention, and by revising the processing conditions of color gamut adjustment processing every time when the correction parameters, which are given by the user so as to reproduce a desired image quality, are received. The image-quality adjusting functions provided with the developing software includes a noise reduction, a sharpness enhancement, a gray balance adjustment, a saturation adjustment and a gradation compression processing, such as a dodging processing, etc.

In the present invention, the term of "gradation mapping process for applying the processing for adjusting the gradation" is a process for conducting the gradation adjustment processing in response to the editing instructions, which are given by the user so as to reproduce a gradation desired by the user. In addition, the present invention is characterized in that the "gradation mapping" defined in the present invention is provided with a luminance range adjusting function when the captured image data possess information of a wide luminance range. Further, the present invention is also characterized in that the "gradation mapping" defined in the present invention is conducted with the color gamut adjustment processing.

Further, as described in items 13, 29 and 45, the present invention is characterized in that the luminance range adjustment processing employing the color gamut mapping is conducted not only in response to the editing instructions of the user as well as the color gamut adjustment processing, but also at least once at the time of the image reading operation, corresponding to the analysis of the input information or the main subject represented by the captured image data, so as to adjust the processing conditions for the gradation mapping when the captured image data are raw data.

Incidentally, as described in items 15, 31 and 47, it is desirable that the "input information" include at least one of a image-analyzing result, meta data (light-source information), information attached to the image data in the form specifiable for every image file.

Further, the term of the "image-analyzing result" means a file in which results analyzed in advance as characteristics of the captured image data, such as, for instance, a kind of photographed scene, a feature of the main subject, etc., are stored. In the present invention, since such the information are employed for the luminance adjusting function in the color gamut mapping, it is desirable that the kind of photographed scene specifically includes such the analyzing results as a degree of backlight photographing, a degree of strobe near lighting, etc., which are clues for knowing a degree of adjusting the luminance range of the subject. Further, it is also desirable that the "feature of the main subject" includes such the analyzing results as the size of the face area, the brightness deviation of the face area (hereinafter, also referred to as the "fresh-color brightness deviation amount") for the brightness of the face area or the luminance range over all image, etc.

Still further, among the input data mentioned in the above, the meta data (light-source information) are defined as information embedded in a predetermined area of a file (called as a "tag area"). For instance, the meta data are the Exif information known as the compressed data file format in conformity with the "Baseline Tiff Rev. 6. ORGB Full Color Image" employed as the non-compressed file of the Exif file and in conformity with the JPEG format.

Still further, among the input data mentioned in the above, the "information attached to the image data in the form specifiable for every image file" means an attached information file in which the same content as that of the Exif information are recorded in the form specifiable for every image file, instead as the meta data. This attached information file is a status file, which is attached to one of or both of the image file and the information file, and in which the information for correlating the both of them or other related information are recorded.

Still further, in the present invention, the term of "corresponding to the main subject represented by the captured image data" is to implement the luminance range adjustment processing in the color gamut mapping in response to the result of the aforementioned image-analyzing operation performed by the developing software embodied in the present invention, such as the kind of the photographed scene, the features of the main subject, etc.

Yet further, in the descriptions of the present invention, the term of "converting the color space of the captured image data to the luminance expansion color space" means an intention of converting the original file format of the captured image data including information of wide luminance range to another file format suitable for temporarily storing information in an unused and residual luminance range after adjusting the wide luminance range of the captured image data by employing the color gamut mapping embodied in the present invention.

In the following, the "luminance expansion color space" will be detailed.

The sRGB color space universally employed for the image captured by the DSC at present is defined as the specification of IEC61966-2-1 specified by the IEC (International Electro-technical Commission). For instance, in the case of 8 bits, the black point and the white point are specified at zero, being a minimum value of 8 bits gradation, and at 255, being a maximum value of 8 bits gradation, respectively, and the gamma value when displaying or printing is specified at 2.2. In this connection, there arises a problem what the white point designates. Although there would be three cases under consideration as the white point, [1] a white ground of displaying/printing media, [2] a white ground of a perfect diffusion reflecting plate in the photographed scene, [3] a maximum luminance value in the photographed scene (including a mirror reflection and a light emitting part), the displaying devices, the printers and the application software for imaging, which are presently available in the market, are so constituted that they work by regarding item [1] as the white point.

When the raw image data captured by the DSC are transformed to the output-referred image data, the white point is allotted to the scene luminance to be displayed as white in the displaying/printing operation. In this case, since the photographed luminance value of the area of item [2] or item [3] tends to be higher than that of the white point and it is impossible to record such a pixel value that is higher than the white point, such the area would be painted over with white. Since the exposure control of the DSC is not almighty, however, it would be necessary to adjust the image later on. For instance, a case in which a "white dropout" (a halation) caused by a light reflection on the forehead or the nose, is generated in the face area could be cited. However, since the area in the image recorded by employing the sRGB color space is clipped at white (in the case of 8 bits: 255), and therefore, the photographed information of that area are already lost, it is impossible to correct such the situation. To avoid the abovementioned problem, it would be possible to record the image data with item [3] set at the white point. However, since the displaying devices, the printers and the application software for imaging regard item [1] as the white point, such the image would be displayed or printed in a darkish and soft tone, which is not suitable as the visual image.

To cope with the abovementioned problem, there has been proposed various kinds of color spaces that enable a recoding operation of a luminance value exceeding the white point. For instance, an scRGB, an scRGB-nl and an scYCC-nl, which are specified by the IEC61966-2-2, and a RIMM RGB and an ERIMM RGB, which are specified by the ANSI/13A IT10.7466, can be cited as such the examples. In the present specification, the abovementioned color spaces are totally called the "luminance expansion color space".

Exemplifying the scRGB color space of 16 bits, the "luminance expansion color space" will be detailed as follow. When the values, derived by normalizing the colorimetry values in the CIE 1931 XYZ space with the black point at 0 and the white point at 1, are established as X, Y, Z, the R, G, B values of the scRGB are defined by equations (1) and (2) shown as follow. Herein, the R, G, B values are expressed in the floating point without quantizing them into

integers.

$$\begin{bmatrix} R' \\ G' \\ B' \end{bmatrix} = \begin{bmatrix} 3.240625 & -1.537208 & -0.498629 \\ -0.968931 & 1.875756 & 0.041518 \\ 0.055710 & -0.204021 & 1.056996 \end{bmatrix} * \begin{bmatrix} X \\ Y \\ Z \end{bmatrix} \qquad --------(1)$$

$$\begin{bmatrix} R \\ G \\ B \end{bmatrix} = \begin{bmatrix} round\{(R'\times 8192.0)+4096\} \\ round\{(G'\times 8192.0)+4096\} \\ round\{(B'\times 8192.9)+4096\} \end{bmatrix} \qquad ----------------(2)$$

Conversely, it is also possible to transform the R, G, B values of the scRGB to the X, Y, Z, values by employing equations (3) and (4) shown as follow.

$$\begin{pmatrix} R' \\ G' \\ B' \end{pmatrix} = \begin{pmatrix} (R \div 8192.0)-0.5 \\ (G \div 8192.0)-0.5 \\ (B \div 8192.0)-0.5 \end{pmatrix} \qquad ------------------(3)$$

$$\begin{pmatrix} X \\ Y \\ Z \end{pmatrix} = \begin{pmatrix} 0.4124 & 0.3576 & 0.1805 \\ 0.2126 & 0.7152 & 0.0722 \\ 0.0193 & 0.1192 & 0.9505 \end{pmatrix} \begin{pmatrix} R' \\ G' \\ B' \end{pmatrix} \qquad ----------------(4)$$

In equation (1), R', G', B' represent values in floating point without being quantized into integers. According to the definition mentioned in the above, the values (R', G', B') of the black point are (0, 0, 0), and the values (R, G, B) of its 16-bits expression are (4096, 4096, 4096). Further, the values (R', G', B') at D65 of the white point are (1, 1, 1), and the values (R, G, B) of its 16-bits expression are (12288, 12288, 12288). In the 16-bits expression, a value in a range of 0 - 4095 corresponds to a luminance equal to or lower than that of the black point, a value in a range of 4096 - 12288 corresponds to a luminance equal to or higher than that of the black point and equal to or lower than that of the white point, and a value in a range of 12289 - 65535 corresponds to a luminance exceeding the white point. Accordingly, it is possible to express the luminance range of -0.5 - +7.4999 when normalizing it with the black point at 0 and the white point at 1.

Equation (2) indicates a transformation for expressing the color space with 16-bits integers having no sign. However, when the image-processing apparatus has a capability of processing floating point values at a high velocity, it is applicable that the floating point values (R', G', B') defined by equation (1) are handled in the internal arithmetic calculations. Since the values (R', G', B') has a proportional relationship with the luminance, the arithmetic calculating equation for the image-processing operation can be simplified, and it would be a preferable embodiment as the internal arithmetic calculation for the image-processing operation embodied in the present invention when the floating point processing is allowed.

Incidentally, since the scRGB stores integers having a linear relationship with the luminance, its data size stored in a file would be getting large. Accordingly, when the image data are stored in the file or sent to another image-processing apparatus, another image-displaying apparatus or another printer, it is applicable that the image data are transformed to those in the luminance expansion color space, in which the data size is smaller than that in the scRGB. As for such the color space, the scRGB-nl and the scYCC-nl, which are specified by the IEC61966-2-2 Annex B, and the RIMM RGB, which is specified by the ANSI/13A IT10.7466, can be cited. Conversely, when the data size is out of considerations, it would be applicable that, instead of the integers in the scRGB, the image data expressed by the floating point values are stored in the file or sent to another image-processing apparatus, another image-displaying apparatus or another printer. As mentioned in the above, it is possible to arbitrarily determine whether or not the luminance expansion color space should be selected concretely, based on the specifications of the apparatus implementing the present invention.

In the present invention, it is desirable that the color space of the captured image data is converted to the luminance expansion color space before conducting the luminance range adjustment operation. Further, it is desirable that the luminance expansion color space is the scRGB. Still further, it is desirable that the color gamut adjustment processing is conducted while maintaining the state of the luminance expansion color space. Yet further, it is also desirable that the file format of the output-referred image data to be outputted is the luminance expansion color space.

The phrase of "converting the captured image data by employing a color appearance model in response to an editing instruction of a user, to generate output-referred image data sets to be used for at least two outputting mediums, being different from each other, at a time, by employing color gamut adjustment processing for conducting the color gamut mapping for every outputting medium", described in items 4, 20 and 36, is established by assuming a function of selecting the outputting medium (including a kind of the outputting medium), which has not been provided in the conventional developing software for general purpose. Accordingly, the present invention is characterized in that a plurality of output-referred image data sets are generated every time when the user conducts the editing operation. Further, as described in items 10, 26 and 42, at least one of the plurality of output-referred image data sets is utilized for displaying a proofing image to be observed on a displaying monitor, such as a CRT, etc. Therefore, it preferably becomes possible for the user to conduct the editing work while confirming effects on the outputting medium.

The phrase of "in response to an editing instruction of a user, applying a color gamut adjustment processing to at least a set of output-referred image data acquired for a first outputting medium in the color gamut adjustment process, to generate new output-referred image data to be used for a second outputting medium being different from the first outputting medium", described in item 5, is established by assuming a function of selecting the outputting medium (including a kind of the outputting medium), which has not been provided in the conventional developing software for general purpose. Accordingly, the present invention is characterized in that the output-referred image data are generated every time when the user conducts the editing operation, and then, the new output-referred image data to be used for another outputting medium are recreated from at least one of the output-referred image data sets generated in advance. Further, as described in items 11, 27 and 43, the new output-referred image data recreated from the output-referred image data is utilized for displaying a proofing image to be observed on a displaying monitor, such as a CRT, etc. Therefore, it preferably becomes possible for the user to conduct the editing work while confirming effects on the outputting medium.

According to the present invention, when the captured image data are the output-referred image data, it becomes possible to eliminate the process of converting the raw data to the scene-referred image data and further converting the scene-referred image data to the output-referred image data in order to obtain the output-referred image data, resulting in an improvement of the working efficiency. Further, when the captured image data are the scene-referred image data, it is the same as the above.

According to the present invention, the following effects can be attained.

(1) Since the captured image data are converted by employing the color appearance model so as to conduct the color gamut adjustment processing including the color gamut mapping operation for every outputting medium in the process of generating output-referred image data from the captured image data, it becomes possible to suppress the differences between the color appearances on various outputting mediums.

Further, since the color gamut adjustment processing is conducted on the basis of the editing instructions inputted by the user, it becomes possible not only to always supplement necessary information, but also to generate the digital image data whose deterioration is suppressed. In addition, it also becomes possible for the user to improve his editing work efficiency.

(2) Since the gradation mapping processing and the color gamut adjustment processing are successively applied to the captured image data, it becomes possible not only to always supplement necessary information from the optimum luminance range, but also to generate the digital image data whose deterioration is suppressed.

(3) The color space of the inputted captured-image data is converted to the luminance expansion color space to apply the gradation mapping processing, and then, the color gamut adjustment processing is applied to the image data after the gradation mapping processing is completed, in a state of maintaining the image data as the luminance expansion color space. Therefore, it becomes possible not only to always supplement necessary information from the optimum luminance range, but also to generate the digital image data whose deterioration is suppressed. Further, it is possible to output the output-referred image data in the luminance expansion color space, resulting in an improvement of the working efficiency at the time of reprocessing.

(4) By simultaneously generating a plurality of output-referred image data sets, which are suitable for a plurality of outputting mediums being different from each other, it becomes possible to improve the working efficiency when changing the outputting medium to the other one among them. Specifically, since one of the plurality of output-referred image data sets can be utilized for displaying a proofing image on the outputting medium, which forms the image by self-illuminating actions (for instance, a displaying monitor, such as a CRT, etc.), it becomes possible for the user to conduct the editing operation while viewing the proofing image, resulting in an easiness of the editing operation.

(5) By again applying the color gamut adjustment processing to the output-referred image data, which were generated by applying the color gamut adjustment processing so as to use them for at least a first outputting medium, new output-referred image data usable for a second outputting medium, being different from the first outputting medium, can be generated. Accordingly, when the captured image data are other than raw data, it becomes possible to eliminate the process of generating the output-referred image data, resulting in an improvement of the working efficiency. Further, since the output-referred image data, which were generated by applying the color gamut adjustment processing so as to use them for at least an outputting medium, can be utilized for displaying a proofing image on the outputting medium, which forms the image by self-illuminating actions (for instance, the CRT), it becomes possible for the user to conduct the editing operation while viewing the proofing image, resulting in an easiness of the editing operation.

Referring to the drawings, embodiments of the present invention will be detailed in the following.

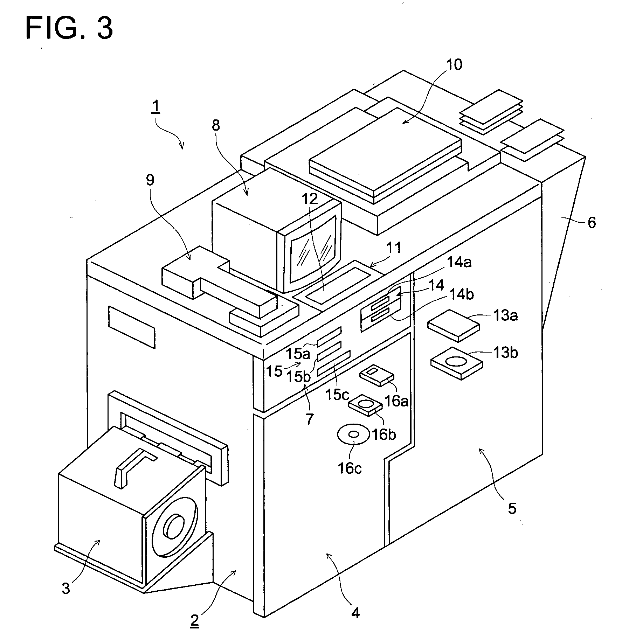

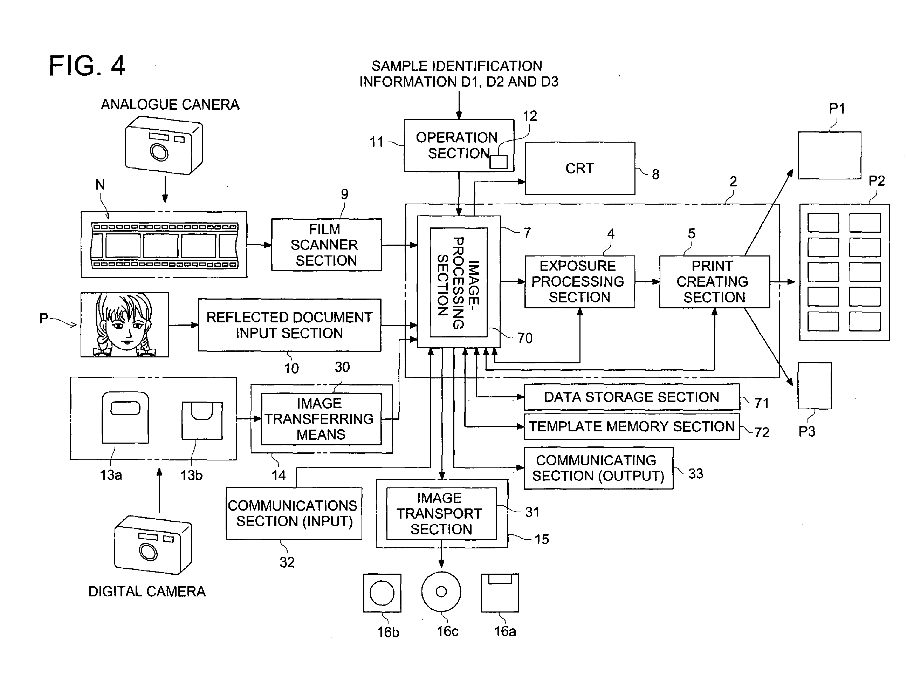

At first, referring to Fig. 3 and Fig. 4, the outlook configuration and the internal configuration of image-recording apparatus 1 will be detailed in the following.

Fig. 3 shows a perspective view of the outlook structure of image-recording apparatus 1 embodied in the present invention. As shown in Fig. 3, image-recording apparatus 1 is provided with magazine loading section 3 mounted on a side of housing body 2, exposure processing section 4, for exposing a photosensitive material, mounted inside housing body 2 and print creating section 5 for creating a print. Further, tray 6 for receiving ejected prints is installed on another side of housing body 2.

Still further, CRT 8 (Cathode Ray Tube 8) serving as a display device, film scanning section 9 serving as a device for reading a transparent document, reflected document input section 10 and operating section 11 are provided on the upper side of housing body 2. CRT 8 serves as the display device for displaying the image represented by the image information to be created as the print. Further, image reading section 14 capable of reading image information recorded in various kinds of digital recording mediums and image writing section 15 capable of writing (outputting) image signals onto various kinds of digital recording mediums are provided in housing body 2. Still further, control section 7 for centrally controlling the abovementioned sections is also provided in housing body 2.

Image reading section 14 is provided with PC card adaptor 14a, floppy (Registered Trade Mark) disc adaptor 14b, into each of which PC card 13a and floppy disc 13b can be respectively inserted. For instance, PC card 13a has storage for storing the information with respect to a plurality of frame images captured by the digital still camera. Further, for instance, a plurality of frame images captured by the digital still camera are stored in floppy (Registered Trade Mark) disc 13b. Other than PC card 13a and floppy (Registered Trade Mark) disc 13b, a multimedia card (Registered Trade Mark), a memory stick (Registered Trade Mark), MD data, CD-ROM, etc., can be cited as recording media in which frame image data can be stored.

Image writing section 15 is provided with floppy (Registered Trade Mark) disk adaptor 15a, MO adaptor 15b and optical disk adaptor 15c, into each of which FD 16a, MO 16b and optical disc 16c can be respectively inserted. Further, CD-R, DVD-R, etc. can be cited as optical disc 16c.

Incidentally, although, in the configuration shown in Fig. 3, operating section 11, CRT 8, film scanning section 9, reflected document input section 10 and image reading section 14 are integrally provided in housing body 2, it is also applicable that one or more of them is separately disposed outside housing body 2.

Further, although image-recording apparatus 1, which creates a print by exposing/developing the photosensitive material, is exemplified in Fig. 3, the scope of the print creating method in the present invention is not limited to the above, but an apparatus employing any kind of methods, including, for instance, an ink-jetting method, an electrophotographic method, a heat-sensitive method and a sublimation method, is also applicable in the present invention.

<FUNCTIONAL CONFIGURATION OF IMAGE-RECORDING APPARATUS 1>

Fig. 4 shows a block diagram of the functional configuration of image-recording apparatus 1. As shown in Fig. 4, image-recording apparatus 1 is constituted by control section 7, exposure processing section 4, print creating section 5, film scanning section 9, reflected document input section 10, image reading section 14, communicating section 32 (input), image writing section 15, data storage section 71, template memory section 72, operating section 11, CRT 8 and communicating section 33 (output).

Control section 7 includes a microcomputer to control the various sections constituting image-recording apparatus 1 by cooperative operations of CPU (Central Processing Unit) (not shown in the drawings) and various kinds of controlling programs, including an image-processing program, etc., stored in a storage section (not shown in the drawings), such as ROM (Read Only Memory), etc.

Further, control section 7 is provided with image-processing section 70, relating to the image-processing apparatus embodied in the present invention, which applies the image processing of the present invention to image data acquired from film scanning section 9 and reflected document input section 10, image data read from image reading section 14 and image data inputted from an external device through communicating section 32 (input), based on the input signals (command information) sent from operating section 11, to generate the image information of exposing use, which are outputted to exposure processing section 4. Further, image-processing section 70 applies the conversion processing corresponding to its output mode to the processed image data, so as to output the converted image data. Image-processing section 70 outputs the converted image data to CRT 8, image writing section 15, communicating section 33 (output), etc.

Exposure processing section 4 exposes the photosensitive material based on the image signals, and outputs the photosensitive material to print creating section 5. In print creating section 5, the exposed photosensitive material is developed and dried to create prints P1, P2, P3. Incidentally, prints P1 include service size prints, high-vision size prints, panorama size prints, etc., prints P2 include A4-size prints, and prints P3 include visiting card size prints.

Film scanning section 9 reads the frame image data from developed negative film N acquired by developing the negative film having an image captured by an analogue camera. Reflected document input section 10 reads the frame image data from print P (such as photographic prints, paintings and calligraphic works, various kinds of printed materials) made of a photographic printing paper on which the frame image is exposed and developed, by means of the flat bed scanner.

Image reading section 14 reads the frame image information stored in PC card 13a and floppy (Registered Trade Mark) disc 13b to transfer the acquired image information to control section 7. Further, image reading section 14 is provided with PC card adaptor 14a, floppy disc adaptor 14b serving as an image transferring means 30. Still further, image reading section 14 reads the frame image information stored in PC card 13a inserted into PC card adaptor 14a and floppy disc 13b inserted into floppy disc adaptor 14b to transfer the acquired image information to control section 7. For instance, the PC card reader or the PC card slot, etc. can be employed as PC card adaptor 14a.

Communicating section 32 (input) receives image signals representing the captured image and print command signals sent from a separate computer located within the site in which image-recording apparatus 1 is installed and/or from a computer located in a remote site through Internet, etc.

Image writing section 15 is provided with floppy disk adaptor 15a, MO adaptor 15b and optical disk adaptor 15c, serving as image conveying section 31. Further, according to the writing signals inputted from control section 7, image writing section 15 writes the data, generated by the image-processing method embodied in the present invention, into floppy disk 16a inserted into floppy disk adaptor 15a, MO disc 16b inserted into MO adaptor 15b and optical disk 16c inserted into optical disk adaptor 15c.

Data storage section 71 stores the image information and its corresponding order information (including information of a number of prints and a frame to be printed, information of print size, etc.) to sequentially accumulate them in it.

The template memory section 72 memorizes the sample image data (data showing the background image and illustrated image) corresponding to the types of information on sample identification D1, D2 and D3, and memorizes at least one of the data items on the template for setting the composite area with the sample image data. When a predetermined template is selected from among multiple templates previously memorized in the template memory section 72 by the operation of the operator, the selected template is merged with the frame image information. Then, the sample image data, selected on the basis of designated sample identification information D1, D2 and D3, are merged with image data and/or character data ordered by a client, so as to create a print based on the designated sample image. This merging operation by this template is performed by the widely known chromakey technique.

The types of information on sample identification D1, D2 and D3 for specifying the print sample are arranged to be inputted from the operation section 11. Since the types of information on sample identification D1, D2 and D3 are recorded on the sample or order sheet, they can be read by the reading section such as an OCR. Alternatively, they can be inputted by the operator through a keyboard.

As described above, sample image data is recorded in response to sample identification information D1 for specifying the print sample, and the sample identification information D1 for specifying the print sample is inputted. Based on the inputted sample identification information D1, sample image data is selected, and the selected sample image data and image data and/or character data based on the order are merged to create a print according to the specified sample. This procedure allows a user to directly check full-sized samples of various dimensions before placing an order. This permits wide-ranging user requirements to be satisfied.

The first sample identification information D2 for specifying the first sample, and first sample image data are memorized; alternatively, the second sample identification information D3 for specifying the second sample, and second sample image data are memorized. The sample image data selected on the basis of the specified first and second sample identification information D2 and D3, and ordered image data and/or character data are merged with each other, and a print is created according to the specified sample. This procedure allows a greater variety of images to be created, and permits wide-ranging user requirements to be satisfied.

Operating section 11 is provided with information inputting means 12. Information inputting means 12 is constituted by a touch panel, etc., so as to output a push-down signal generated in information inputting means 12 to control section 7 as an inputting signal. Incidentally, it is also applicable that operating section 11 is provided with a keyboard, a mouse, etc. Further, CRT 8 displays image information, etc., according to the display controlling signals inputted from control section 7.

Communicating section 33 (output) transmits the output image signals, representing the captured image and processed by the image-processing method embodied in the present invention, and its corresponding order information to a separate computer located within the site in which image-recording apparatus 1 is installed and/or to a computer located in a remote site through Internet, etc.

As shown in Fig. 4, the image recording apparatus 1 is provided with: an input section for capturing the digital image data of various types and image information obtained by dividing the image document and measuring a property of light; an image processing section; an image outputting section for displaying or printing out the processed image on the image recording medium; and a communications section (output) for sending the image data and accompanying order information to another computer in the facilities through a communications line or a remote computer through Internet, etc.

[FIRST EMBODIMENT]

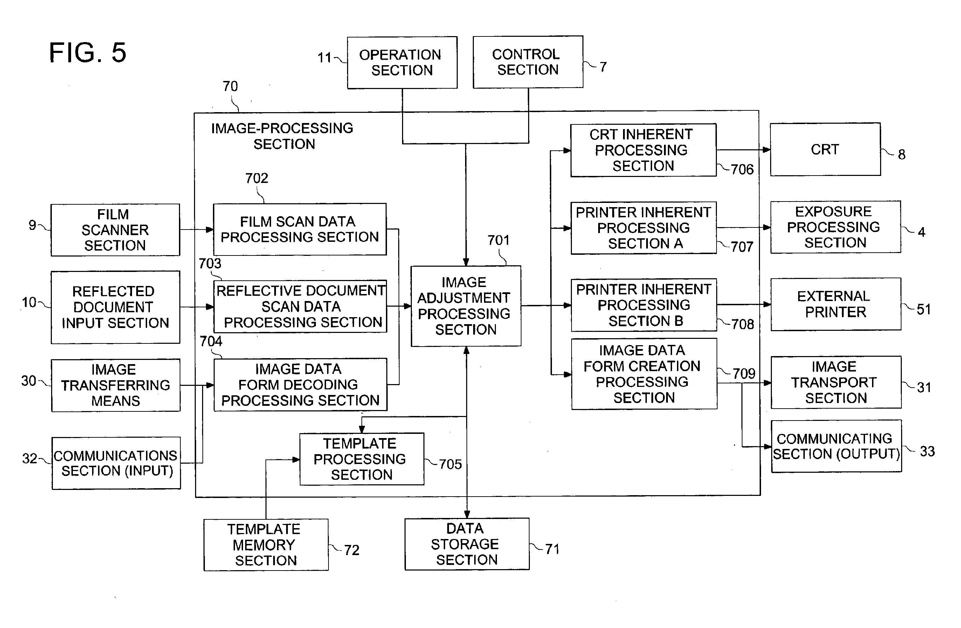

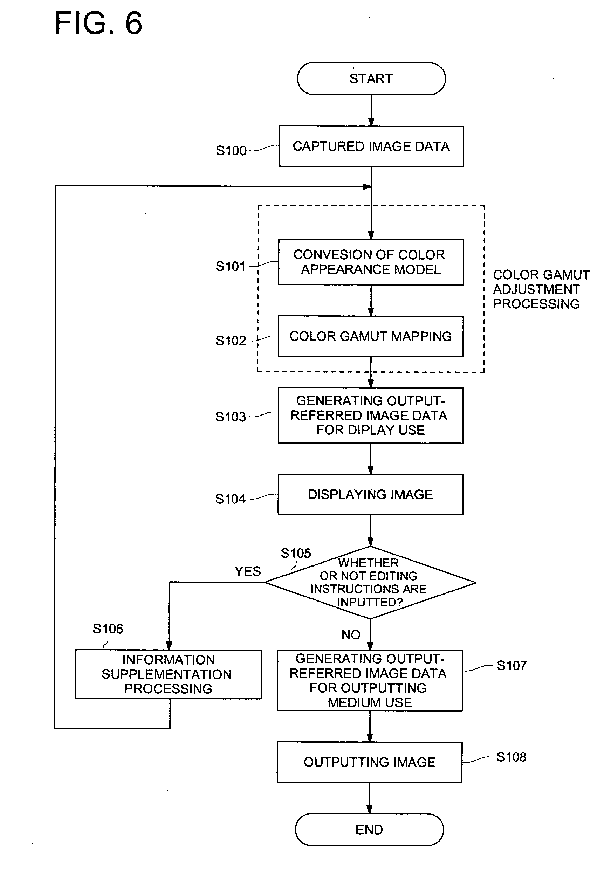

Referring to Fig. 5 and Fig. 6, the first embodiment of the present invention will be detailed in the following. Initially, the configuration of the first embodiment will be described.

<INTERNAL CONFIGURATION OF IMAGE PROCESSING SECTION 70>

Fig. 5 shows a block diagram of the internal configuration of image processing section 70. As shown in Fig. 5, image processing section 70 is provided with image adjustment processing section 701, film scan data processing section 702, reflective document scan data processing section 703, image data form decoding processing section 704, template processing section 705, CRT inherent processing section 706, printer inherent processing section A 707, printer inherent processing section B 708, image data form creation processing section 709.

The film scan data processing section 702 applies various kinds of processing operations to the image data inputted from film scanner section 9, such as a calibrating operation inherent to film scanner section 9, a negative-to-positive reversal processing (in the case of the negative original), an operation for removing contamination and scars, a contrast adjusting operation, an operation for eliminating granular noise, a sharpness enhancement, etc. Then, film scan data processing section 702 outputs the processed image data to image adjustment processing section 701, as well as the information pertaining to the film size, the classification of negative or positive, the major subject optically or magnetically recorded on a film, the image-capturing conditions (for instance, contents of the information recorded in APS), etc.

The reflective document scan data processing section 703 applies various kinds of processing operations to the image data inputted from reflective document input apparatus 10, such as a calibrating operation inherent to reflective document input apparatus 10, a negative-to-positive reversal processing (in the case of the negative original), an operation for removing contamination and scars, a contrast adjusting operation, an operation for eliminating noise, a sharpness.enhancement, etc. to the image data inputted from, and then outputs the processed image data to image adjustment processing section 701.

The image data form decoding processing section 704 applies a processing of decompression of the compressed symbol, a conversion of color data representation method, etc., to the image data inputted from image transfer section 30a and/or communications section (input) 32, as needed, according to the format of the inputted image data, and converts the image data into the format suited for computation in image processing section 70. Then, the image data form decoding processing section 704 outputs the processed data, to the image adjustment processing section 701. When the size of the output image is designated by any one of operation section 11, communications section (input) 32 and image transfer section 30, the image data form decoding processing section 704 detects the designated information, and outputs it to the image adjustment processing section 701. Information pertaining to the size of the output image designated by image transfer section 30 is embedded in the header information and the tag information acquired by image transfer section 30.

Based on the instruction command sent from operation section 11 or control section 7, the image adjustment processing section 701 applies various kinds of optimization processing to the image data received from film scanner section 9, reflective document input apparatus 10, image transfer section 30, communications section (input) 32 and template processing section 705, so as to create output digital image data optimized for viewing a reproduced image on an output medium, and then, outputs the output digital image data to CRT inherent processing section 706, printer inherent processing section A 707, printer inherent processing section B 708, image data form creation processing section 709 and data accumulation section 71.

In the optimization processing, when it is premised that the image is displayed on the CRT displaying monitor based on, for instance, the sRGB standard, the image data is processed so as to acquire an optimum color reproduction within the color space specified by the sRGB standard. While, when it is premised that the image is outputted onto a silver-halide photosensitive paper, the image data is processed so as to acquire an optimum color reproduction within the color space specified by the silver-halide photosensitive paper. Further, other than the color space compression processing mentioned in the above, a gradation compression processing from 16 bits to 8 bits, a processing for reducing a number of output pixels, a processing for corresponding to output characteristics (LUT) of an output device to be employed, etc. are included in the optimization processing. Still further, it is needless to say that an operation for suppressing noise, a sharpness enhancement, a gray-balance adjustment, a chroma saturation adjustment, a dodging operation, etc. are also applied to the image data.

Image adjustment processing section 701 converts the inputted captured image data by employing the color appearance model, and implements the color gamut adjustment processing for conducting the color gamut mapping for every outputting medium, in order to generate the output-referred image data for displaying an image based on the captured image data on CRT8. The image displayed on CRT8 serves as a proofing image (a test image) for viewing it on another outputting medium (for instance, external printer 51). Accordingly, the user inputs editing instructions by operating the operating section 11, while viewing the image displayed on CRT8. Then, in response to the editing instructions inputted by the user in regard to the image displayed on CRT8, image adjustment processing section 701 conducts the information supplementation processing (such as rereading the captured image data, supplementation of necessary information only) to again implement the color gamut adjustment processing for the captured image data. Incidentally, the processing conditions of the color gamut mapping in the first embodiment (and other embodiments detailed later) will be adjusted corresponding to the analysis result of the inputted information and the main subject represented by the captured image data.

Based on the instruction command sent from image adjustment processing section 701, template processing section 705 reads the predetermined image data (template image data) from template storage 72 so as to conduct a template processing for synthesizing the image data, being as an image-processing object, with the template image data, and then, outputs the synthesized image data to image adjustment processing section 701.

The CRT inherent processing section 706 applies processing operations for changing the number of pixels and color matching, etc. to the image data inputted from image adjustment processing section 701, as needed, and outputs the output image data of displaying use, which are synthesized with information such as control information, etc. to be displayed on the screen, to CRT 8.

The printer inherent processing section A 707 conducts the calibration processing inherent to the printer and processing operations of color matching and changing the number of pixels, etc. as needed, and outputs the processed image data to exposure processing section 4.

When external printer 51, such as a large-sized inkjet printer, etc., is connectable to image recording apparatus 1, printer inherent processing section B 708 is provided for every printer to be connected. The printer inherent processing section B 708 conducts the calibration processing inherent to the printer and processing operations of color matching and changing the number of pixels, etc. as needed, and outputs the processed image data to external printer 51.

The image data form creation processing section 709 applies a data-format conversion processing to the image data inputted from image adjustment processing section 701, as needed, so as to convert the data-format of the image data to one of various kinds of general-purpose image formants represented by JPEG, TIFF and Exif, and outputs the processed image data to image transport section 31 and communications section (output) 33.

Incidentally, the divided blocks of film scan data processing section 702, reflective document scan data processing section 703, image data form decoding processing section 704, image adjustment processing section 701, CRT inherent processing section 706, printer inherent processing section A 707, printer inherent processing section B 708 and image data form creation processing section 709, as shown in Fig. 5, are provided to assist understanding of the functions of image processing section 70. Therefore, each of divided blocks is not necessary functioned as a physically independent device. For instance, it is also applicable that each of divided blocks is functioned as one categorized processing of software executed by a single computer.

Next, operations of the first embodiment will be detailed in the following. Referring to the flowchart shown in Fig. 6, the image-processing operations performed in image-recording apparatus 1 of the first embodiment will be detailed in the following.

When the captured image data are inputted into the image adjustment processing section 701 (step S100), the captured image data are converted by employing the color appearance model (step S101), so as to conducts the color gamut mapping operation for every outputting medium (step S102). The converting operation employing the color appearance model in step S101 and the color gamut mapping operation in step S102 correspond to the color gamut adjustment processing embodied in the present invention.

After the color gamut mapping operation in step S102 is completed, the output-referred image data for displaying the captured image on CRT 8 are generated (step S103), and then, the image based on the output-referred image data is displayed on CRT 8 (step S104).

When the user, who observes the image displayed on CRT 8, inputs editing instructions through operating section 11 (YES at step S105), the information supplementation processing (such as rereading the captured image data, supplementation of necessary information only) is conducted in response to the editing instructions (step S106). After the information supplementation processing is completed, the processing step returns to S101 so as to repeat the processing from step S101 to step S104.

When the user inputs an output command of the image data (for instance, an output command for outputting the image data to an external printer) through operating section 11 (NO at step S105), the output-referred image data, suitable for the outputting medium designated by the user, are generated (step S107). The generated output-referred image data are outputted to the outputting medium designated by the user (step S108), and then, the image-processing operation is finalized.

As described in the foregoing, according to the first embodiment, since the captured image data are converted by employing the color appearance model so as to conduct the color gamut adjustment processing including the color gamut mapping operation for every outputting medium in the process of generating output-referred image data from the captured image data, it becomes possible to suppress the differences between the color appearances on various outputting mediums. Further, since the color gamut adjustment processing is conducted on the basis of the editing instructions inputted by the user, it becomes possible not only to always supplement necessary information, but also to generate the digital image data whose deterioration is suppressed. In addition, it also becomes possible for the user to improve his editing work efficiency.

[SECOND EMBODIMENT]

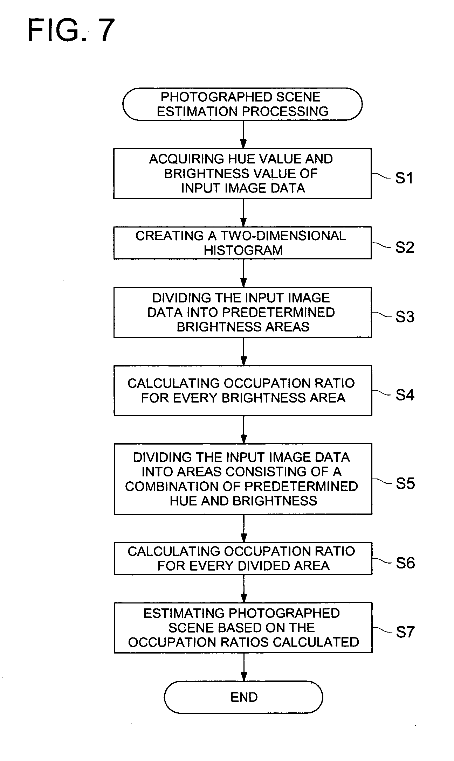

Referring to Fig. 7 through Fig. 13, the second embodiment will be detailed in the following. Initially, the configuration of the second embodiment will be detailed. Since the internal configuration of image-processing section 70 in the second embodiment is the same as that in the first embodiment as shown in Fig. 5, its drawing is omitted and the same reference number will be employed for the same section. In the following description, among the sections included in the second embodiment, only sections different from those in the first embodiment will be detailed.

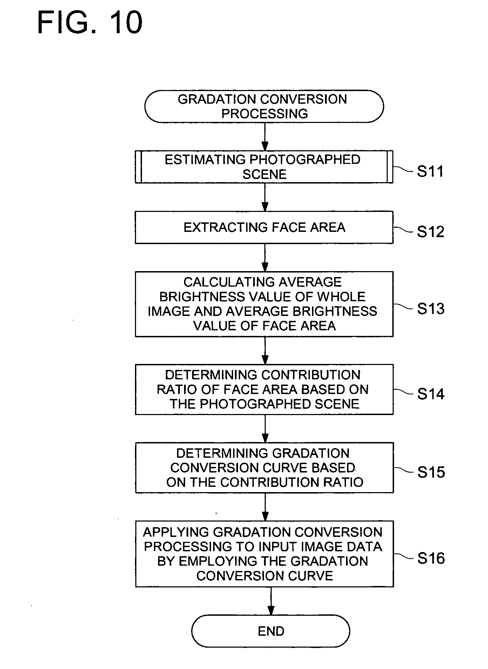

The image adjustment processing section 701 applies the gradation mapping (refer to the gradation conversion processing shown in Fig. 10) to the inputted captured-image data, and then, converts the gradation mapped image data by employing the color appearance model, in order to implement the color gamut adjustment processing for conducting the color gamut mapping for every outputting medium. According to the color gamut adjustment processing, the image adjustment processing section 701 generates the output-referred image data for displaying an image based on the captured image data on CRT8. The image displayed on CRT8 serves as a proofing image (a test image) for viewing it on another outputting medium (for instance, external printer 51). Accordingly, the user inputs editing instructions by operating the operating section 11, while viewing the image displayed on CRT8. Then, in response to the editing instructions inputted by the user in regard to the image displayed on CRT8, image adjustment processing section 701 conducts the information supplementation processing (such as rereading the captured image data, supplementation of necessary information only) to again implement the gradation mapping processing and the color gamut adjustment processing for the captured image data.

The "gradation mapping" performed in the second embodiment (and third, sixth to ninth embodiments) is provided with the luminance range adjusting function for the case that the captured image data retains information of the wide luminance range. Further, the "gradation mapping" performed in the second embodiment (and third, sixth to ninth embodiments) associates with the implementation of the color gamut adjustment processing. The luminance range adjusting operation performed in the gradation mapping is conducted in response to the editing instructions inputted by the user, as well as the color gamut adjustment processing. Further, when the captured image data are raw data, the processing conditions for the gradation mapping are adjusted at least once during the image-recording operation, in response to the analysis result of the inputted information or the main subject represented by the captured image data.

Next, the operations of the second embodiment will be detailed in the following. Initially, referring to the flowchart shown in Fig. 7, the photographed scene estimation processing for estimating (judging) the photographed scene from the image data inputted into image adjustment processing section 701 will be detailed. The photographed scene estimation processing is conducted as a software processing executed by a computer, based on a photographed scene estimation program stored in a storage section, such as ROM, etc., (not shown in the drawings), and is commenced by inputting the image data (image signals) into image adjustment processing section 701 from any one of film scan data processing section 702, reflective document scan data processing section 703 and image data form decoding processing section 704.

When the image data is inputted from any one of film scan data processing section 702, reflective document scan data processing section 703 and image data form decoding processing section 704, the gray balance adjusting processing is applied to the captured image data inputted (hereinafter, referred to as inputted image data). Then, a hue value and a brightness value of every pixel included in the inputted image data are acquired by converting the RGB color specification system of the inputted image data to another color specification system, such as L*a*b*, HSV, etc., and then, stored in the RAM (not shown in the drawings) (step S1).

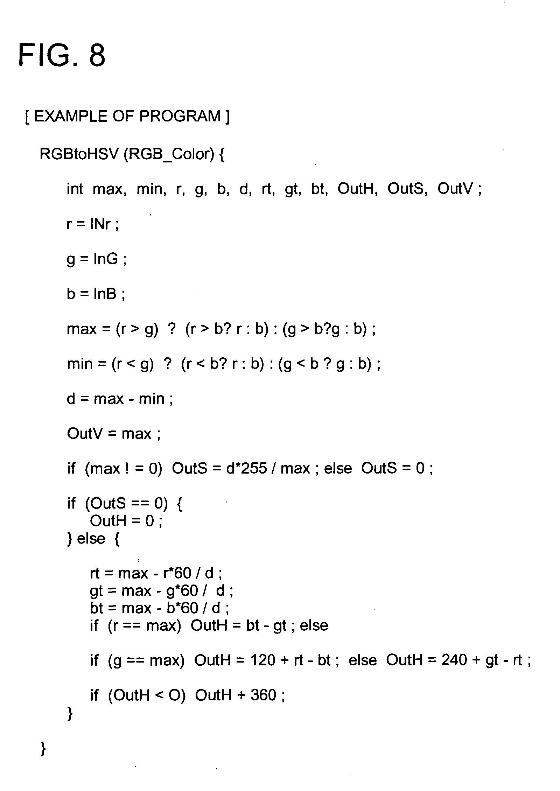

A concrete example of equations, for converting RGB values of each pixel included in the inputted image data to the hue value, the brightness value and the saturation value, will be shown in the following. Fig. 8 shows an example of the conversion program written in C Language (denoted as the "HSV conversion program"), for acquiring the hue value, the brightness value and the saturation value by converting the RGB color specification system to HSV color specification system. In the HSV color specification system, which was devised on the basis of the color specification system proposed by Munsell, a color is represented by three elemental attributes, namely, hue, saturation and brightness (or value).

In the HSV conversion program shown in Fig. 8, values of digital image data, serving as the inputted image data, are defined as InR, InG, InB. Further, calculated values of hue, saturation and brightness are defined as OutH, OutS, OutV, respectively. The scale of OutH is set at 0 - 360, while the unit of OutV is set at 0 - 255.

Although, other than the HVS, anyone, such as the L*a*b*, the L*u*v*, the Hunter L*a*b*, the YCC, the YUV, the YIQ, etc., can be employed as the color specification system, it is desirable in the present invention to employ the HSV color specification system from which the hue and brightness values can be directly acquired.

As a reference example other than the HSV, an example of employing the L*a*b* will be detailed in the following. The L*a*b* color specification system (CIE1976) is one of the uniform color specification systems established by CIE (INTERNATIONAL COMMISSION ON ILLUMINATION) in 1976. The following equations (5) - (8) specified by IEC1966-2-1 and equation (9) specified by JISZ8729 are employed for deriving the L*a*b values from the RGB values. Then, the following equation (10) is employed for deriving hue value (H') and saturation value (S') from the acquired L*a*b* values. However, hue value (H') and saturation value (S') derived by the abovementioned procedure are different from the other hue value (H) and saturation value (S) of the aforementioned HSV color specification system. Incidentally, in the descriptions of the second embodiment (and third, sixth to ninth embodiments), it is assumed that the captured image data are 8-bits raw data. Further, when the captured image data are specified in the scRGB color space serving as a luminance expansion color space, it is necessary to apply the gradation mapping processing (shown in Fig. 11 and detailed later) to the captured image data as a pre-processing so as to employ the image data converted into the sRGB color space serving as a standard color space.

$$R'_{sRGB} = R_{sRGB(8)} \ / \ 255$$
$$G'_{sRGB} = G_{sRGB(8)} \ / \ 255 \qquad \text{---------------------------} (5)$$
$$B'_{sRGB} = B_{sRGB(8)} \ / \ 255$$

$$sRGB' > 0.03928$$
$$R_{sRGB} = ((R'_{sRGB} + 0.055) \ / \ 1.055)^{2.4}$$
$$G_{sRGB} = ((G'_{sRGB} + 0.055) \ / \ 1.055)^{2.4} \qquad \text{--------------} (6)$$
$$B_{sRGB} = ((B'_{sRGB} + 0.055) \ / \ 1.055)^{2.4}$$

$$sRGB' <= 0.03928$$
$$R'_{sRGB} = R_{sRGB} \ / \ 12.92$$
$$G'_{sRGB} = G_{sRGB} \ / \ 12.92 \qquad \text{------------------------} (7)$$
$$B'_{sRGB} = B_{sRGB} \ / \ 12.92$$

$$\blacklozenge \text{RGB} \to \text{CIE XYZ CCIR709 } (D_{65})$$
$$\begin{bmatrix} X \\ Y \\ Z \end{bmatrix} = \begin{bmatrix} 0.4124 & 0.3576 & 0.1805 \\ 0.2126 & 0.7152 & 0.0722 \\ 0.0193 & 0.1192 & 0.9505 \end{bmatrix} \begin{bmatrix} R_{sRGB} \\ G_{sRGB} \\ B_{sRGB} \end{bmatrix} \qquad \text{------------} (8)$$

◆CIE XYZ → CIE L*a*b*

$L* = 116 \times (Y/Yn)^{(1/3)} - 16$ (when $Y/Yn > 0.008856$)

$L* = 903.29 \times (Y/Yn)$ (when $Y/Yn \leq 0.008856$)

$a* = 500 \times (f(X/Xn) - f(Y/Yn))$

$b* = 200 \times (f(Y/Yn) - f(Z/Zn))$ --- (9)

$Yn = 1(D_{65})$

$f(t) = t^{(1/3)}$ (when $t > 0.008856$)

$f(t) = 7.787 \times t + (16/116)$ (when $t \leq 0.008856$)

$$H' = tan^{-1} \theta(b*/a*)$$

$$S' = \sqrt{(a*)^2 + (b*)^2}$$ ------------------------ (10)

The equations (5) - (8) shown in the above indicate that the inputted 8-bits image data ($R_{sRGB(8)}$, $G_{sRGB(8)}$, $B_{sRGB(8)}$) are converted to tristimulus values (X, Y, Z) of the color matching functions. Incidentally, the color matching functions are such functions that indicate the distribution of spectral sensitivities of the human eyes. Further, the suffix of sRGB shown in the inputted 8-bits image data ($R_{sRGB(8)}$, $G_{sRGB(8)}$, $B_{sRGB(8)}$) in the equation (5) indicates that the RGB values of the inputted image data conform to the sRGB standard, and the suffix of (8) indicates that the inputted image data are 8-bits image data (0 - 255).

Further, equation (9) shown in the above indicates that the equation (9) convert the tristimulus values (X, Y, Z) to the L*a*b*. Xn, Yn and Zn shown in equation (9) respectively indicate X, Y and Z of the standard white board, and $D_{65}$ indicates tristimulus values when the standard white board is illuminated by the light having a color temperature of 6500K. In equation (9) shown in the above, there are established Xn=0.95, Yn=1.00 and Zn=1.09.

When the hue value and the brightness value of every pixel included in the inputted image data are acquired in step S1, a two-dimensional histogram, which indicates a cumulative frequency distribution of the pixels, is created in the coordinate plane having an x-axis as the hue value (H) and a y-axis as the brightness value (V) (step S2).

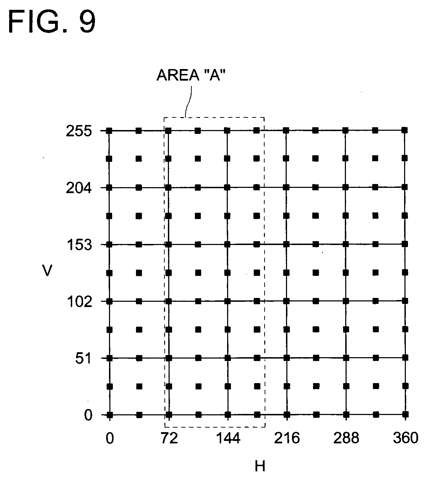

Fig. 9 shows an example of the two-dimensional histogram. In the two-dimensional histogram shown in Fig. 9, lattice points having values of the cumulative frequency distribution of the pixels are plotted in the coordinate plane having the x-axis as the hue value (H) and the y-axis as the brightness value (V). The lattice points located at the edge of the coordinate plane retain cumulative frequency of pixels distributing in such a range that the hue value (H) is 18, while the brightness value (V) is about 13. The other lattice points retain cumulative frequency of pixels distributing in such a range that the hue value (H) is 36, while the brightness value (V) is about 25. Area "A" in two-dimensional histogram shown in Fig. 9 indicates a green hue area having a hue value (H) in a range of 70 - 184 and a brightness value (V) in a range of 0-255. Incidentally, in this case, the brightness value (V) may be any arbitrary value.

Successively, the inputted image data are divided into the predetermined brightness areas, based on the two-dimensional histogram created in step S2 (step S3).

Concretely speaking, by dividing the created two-dimensional histogram into at least two planes with a border of at least one brightness value defined in advance, the inputted image data are divided into the predetermined brightness areas. In the present embodiment, it is desirable that the inputted image data are divided into three brightness areas by employing at least two brightness values. Further, it is also desirable that the brightness values for the border are established at 85 and 170 as values calculated by the aforementioned HSV conversion program shown in Fig. 8. In the present embodiment, the two-dimensional histogram (namely, the inputted image data) is divided into three brightness areas by employing two brightness values of 85 and 170. According to this operation, it becomes possible to divide the two-dimensional histogram (namely, the inputted image data) into a shadow area (brightness value: 0 - 84), an intermediate area (brightness value: 85 - 169) and a highlighted area (brightness value: 170 - 255).

When the inputted image data are divided into the predetermined brightness areas, by dividing each of the sigma values of cumulative frequency distributions of the divided brightness areas by the total number of pixels included in the inputted image data with respect to each of the three brightness areas divided in the above, a ratio of each of the divided brightness areas and the total image area represented by the inputted image data, namely, an occupation ratio for every brightness area is calculated (step S4).

Successively, based on the two-dimensional histogram created in the above, the inputted image data are divided into areas having combinations of predetermined hue and brightness (step S5).

Concretely speaking, by dividing the created two-dimensional histogram into at least four planes with borders of at least one hue value and one brightness value defined in advance, the inputted image data are divided into the areas having combinations of predetermined hue and brightness. In the present embodiment, it is desirable that the inputted image data are divided into six areas by employing at least one hue value and two brightness values. Further, it is also desirable that the hue value for the borders is established at 70 as a value calculated by the aforementioned HSV conversion program shown in Fig. 8. Still further, it is also desirable that the brightness values for the borders are established at 85 and 170 as values calculated by the aforementioned HSV conversion program. In the present embodiment, the two-dimensional histogram (namely, the inputted image data) is divided into the areas by employing at least one hue value of 70 and two brightness values of 85 and 170. According to this operation, it becomes possible to divide the two-dimensional histogram (namely, the inputted image data) into at least three areas of a flesh-color shadow area (hue value: 0 - 69, brightness value: 0 - 84), a flesh-color intermediate area (hue value: 0 - 69, brightness value: 85 - 169) and a flesh-color highlighted area (hue value: 0 - 69, brightness value: 170 - 255).

When the inputted image data are divided into the areas having combinations of predetermined hue and brightness, by dividing each of the sigma values of cumulative frequency distributions of the divided areas by the total number of pixels included in the inputted image data, a ratio of each of the divided areas and the total image area represented by the inputted image data, namely, an occupation ratio for every area is calculated (step S6).

Successively, based on the occupation ratio found in step S4 and S6, a photographed scene represented by the inputted image data is estimated (step S7). Concretely speaking, it is estimated whether the photographed scene was captured under the backlight condition, the half-backlight condition, the strobe lighting condition, the strobe near-lighting condition or the normal condition, based on occupation ratios of shadow, intermediate and highlighted areas, and those of flesh-color shadow, flesh-color intermediate and flesh-color highlighted areas, and then, the photographed scene estimation processing "A" is finalized. As an estimation method, for instance, it is possible to estimate the photographed scene on the basis of a definition table stored in ROM, etc. As shown in <Definition 1>, the definition table includes definitions for correlated relationships between the photographed scene, and first magnitude relationships of the occupation ratios of shadow, intermediate and highlighted areas, and second magnitude relationships of the occupation ratios of flesh-color shadow, flesh-color intermediate and flesh-color highlighted areas.

<Definition 1>

Occupation ratio of shadow area: Rs
Occupation ratio of intermediate area: Rm
Occupation ratio of highlighted area: Rh
Occupation ratio of flesh-color shadow area: SkRs
Occupation ratio of flesh-color intermediate area: SkRm
Occupation ratio of flesh-color highlighted area: SkRh
Scene under backlight: Rs > Rm, Rh > Rm, SkRs > SkRm > SkRh
Scene under strobe near-lighting: Rh > Rs, Rh > Rm, SkRh > SkRm > SkRs
Normal scene: other than the above

The abovementioned definitions are derived from an empirical rule in regard to the magnitude relationships between shadow, intermediate and highlighted areas in the flesh-color hue area, in addition to those between shadow, intermediate and highlighted areas, for each of the scene under backlight condition and the scene under strobe near-lighting condition. Incidentally, the abovementioned empirical rule is such that, since the image-capturing operation of the scene under backlight condition is conducted under the condition that the sunlight, serving as a photographing light source, is positioned at a back of the subject, the flesh-color hue area of the subject is apt to deviate toward a low brightness area, while, in the image-capturing operation of the scene under strobe near-lighting condition, since the strobe light is directly irradiated onto the subject, the flesh-color hue area of the subject is apt to deviate toward a high brightness area. By employing the definitions mentioned in the above, it becomes possible to obtain a high-accurate estimation result, compared to the conventional method in which the photographed scene is estimated by employing merely the magnitude relationships between shadow, intermediate and highlighted areas, for each of the scene under backlight condition and the scene under strobe lighting condition.

Next, referring to the flowchart shown in Fig. 10, an example of employing the estimation result of the photographed scene estimation processing for the gradation conversion processing will be detailed in the following.

Incidentally, an average brightness value of the overall image area is generally employed as an index for determining a target value after the gradation conversion processing, which is required at the time of conducting the gradation conversion processing. In the scene captured under backlight condition, the scene captured under strobe lighting condition, etc., however, bright and dark areas are mingled with each other, and the brightness of the face area, serving as an important subject in the image, deviates toward either the bright area or the dark area. Accordingly, in regard to the gradation conversion processing for the scene captured under backlight condition or the scene captured under strobe lighting condition, it would be an ideal practice to adjust the brightness of the face area so as to correct it to an appropriate value by employing an average brightness value of the face area rather than employing the average brightness value of the overall image area. In real photographing operations, since differences between bright and dark areas would variably differ from each other, it is desirable to adjust a weighted ratio of the brightness of the face area (hereinafter, referred to as a face-area contribution ratio).

Accordingly, in the present embodiment, the gradation conversion processing (the gradation mapping), which takes a degree of difference between the face area and the overall image area into account, is conducted by using a result of the photographed scene estimation processing. The image adjustment processing section 701 implements the gradation conversion processing (the gradation mapping) shown in Fig. 10. Further, this gradation conversion processing is conducted as a software processing executed by a computer, based on a gradation conversion program stored in a storage section, such as ROM, etc., (not shown in the drawings), and is commenced by inputting the image data into image adjustment processing section 701 from any one of film scan data processing section 702, reflective document scan data processing section 703 and image data form decoding processing section 704.

Initially, the estimating operation of the photographed scene is conducted (step S11). In step S11, the photographed scene estimation processing, described in the foregoing by referring to Fig. 7, is conducted to estimate the photographed scene as any one of the scene captured under backlight condition, the scene captured under half-backlight condition, the scene captured under strobe lighting condition, the scene captured under strobe near-lighting condition and the normal scene.

Successively, the face area is extracted from the inputted image data (step S12). Although there have been well-known various kinds of methods for extracting the face area, it is desirable in the present embodiment to create the two-dimensional histogram having the x-axis as the hue value (H) and the y-axis as the brightness value (V) so as to extract the pixels, distributed in the flesh-color area constituted by combinations of predetermined hue and brightness values, as the face area. It is also desirable that, when employing the two-dimensional histogram, the hue values calculated by the HSV conversion program are in a range of 0 - 50, while the brightness values calculated by the HSV conversion program are in a range of 10 - 120.

Incidentally, it is desirable that, in addition to the abovementioned method for extracting the flesh-color area, another image processing for extracting the face area is separately applied to the inputted image data in order to improve the accuracy of the extracting operation. Anyone of the processing methods applicable as public knowledge could be employed for the image processing for extracting the face area. The "simple area expansion method" can be cited as an example of the processing methods applicable as public knowledge mentioned in the above. According to the "simple area expanding method", when a specific pixel (a flesh-color pixel), which falls under the definition of flesh-color, is discretely extracted, differences between the flesh-color pixel and the pixels located in the vicinity of it are found. Then, when the differences found in the above is smaller than a predetermined threshold value, the area including the flesh-color pixel is determined as the face area, and then, by gradually expanding the face area according to the abovementioned procedure, the whole face area can be extracted. Alternatively, it is also possible to extract the face area from the flesh-color area by using a learning function executed by a neural network.

When the extraction of the face area is completed, the average brightness value of the extracted face area and that of the overall image area are calculated (step S13). Further, the face-area contribution ratio is determined on the basis of the photographed scene estimated in step S11 (step S14). Based on the empirical rule, the face-area contribution ratios, corresponding to various kinds of the photographed scenes, are established in advance, for instance, as shown in the following <Definition 2>. Since the relationships between the photographed scenes and the face-area contribution ratios are established as a table stored in ROM, etc., the face-area contribution ratio based on the photographed scene is determined by referring to this table.

<Definition 2>

> Scene under backlight condition = 100 (%)
> Scene under half-backlight condition = 50 (%)
> Scene under strobe near-lighting condition = 100 (%)
> Normal scene = 30 (%)
> Scene under strobe lighting condition = 80 (%)

With respect to the scene captured under the backlight condition, it is desirable to adjust the face-area contribution ratio, corresponding to the average brightness value of the face area or a brightness deviation amount for the overall image area, detailed later. In the abovementioned example, by setting the threshold level for the average brightness value of the face area, the degree of the scene captured under the backlight condition is divided into two steps as a result of determining whether or not the average brightness value exceeds the threshold level. However, it is also applicable that the degree of the scene captured under the backlight condition is divided into more finely divided steps.

Next, based on the face-area contribution ratio determined in the above, the kind of gradation conversion curve, to be applied for the "black saturated point", the "white saturated point", which serves as limitation indicators of the luminance range, and the inputted image data, is determined. The gradation mapping processing defined here is to allot a part of the luminance range of the captured image data to, for instance, the "reference color space" limited as a reproduced luminance range for displaying use, or concretely speaking, the sRGB color space. In other words, in the case of the 8-bits image data (0 - 255), the "black saturated point" corresponds to 0 in the sRGB color space, while the "white saturated point" corresponds to 255 in the sRGB color space.

Fig. 11 shows a rough schematic diagram of the luminance range adjustment. In Fig. 11, the horizontal axis represents subject brightness values in the "luminance expansion color space", while the vertical axis represents subject brightness values in the "reference color space". Point "A" and point "C" shown in Fig. 11 represent the "black saturated point" and the "white saturated point" on the "luminance expansion color space", respectively. Further, point "A'" and point "C'" shown in Fig. 11 represent the "black saturated point" and the "white saturated point" on the "reference color space", respectively. When the 8-bits image data is employed, point "A'" and point "C'" are 0 and 255, respectively. Point "B" and point "B'" shown in Fig. 11 represent a middle point between point "A" and point "C" and another middle point between point "A'" and point "C'", respectively. In the present embodiment, point "A" and point "C" are determined by setting point "B" at the average brightness input value (c) of the captured image data. The average brightness input value (c) is calculated by employing equation 11 shown as follow.

$$c = a \times (1 - (Rsk \times 0.01)) + (b \times Rsk \times 0.01) \tag{11}$$

where

    a: average brightness value of overall image area
    b: average brightness value of face area
    c: average brightness input value
    Rsk: face-area contribution ratio.

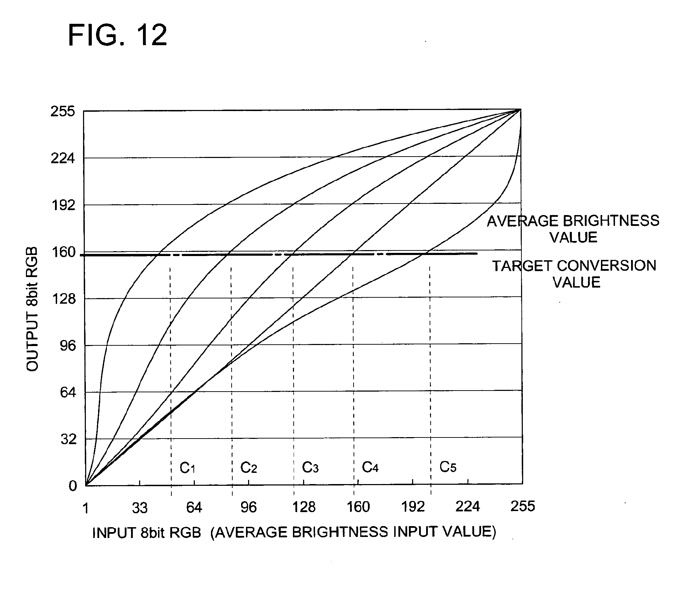

As shown in Fig. 12, the gradation conversion curve is determined so as to convert this average brightness input value to a conversion target value of the average brightness value established in advance.

In Fig. 12, as for the scene captured under the backlight condition, the average brightness input values become $C_1$ and $C_2$, and the gradation conversion curves are determined so as to make the output values much bright. As for the normal scene, the average brightness input value becomes $C_3$, and the gradation conversion curve is determined so as to make the output value slightly bright. As for the scene captured under the strobe near-lighting condition, the average brightness input values become $C_4$ and $C_5$, and the gradation conversion curves are determined so as to make the output values equivalent to or slightly lower than the input values.

It is possible to determine the gradation conversion curve by changing the old gradation conversion curve to new one created on the basis of the average brightness input values calculated by the foregoing procedure, every time when new image data are inputted. Alternatively, it is also possible to determine the gradation conversion curve by selecting a suitable one out of a plurality of gradation conversion curves, prepared in advance, corresponding to the average brightness input values.

When the adjustment of the gradation conversion curve is completed, the gradation conversion processing (gradation mapping) is applied to the inputted image data by employing the adjusted gradation conversion curve (step S16), and then, the whole process of the gradation conversion processing is finalized.

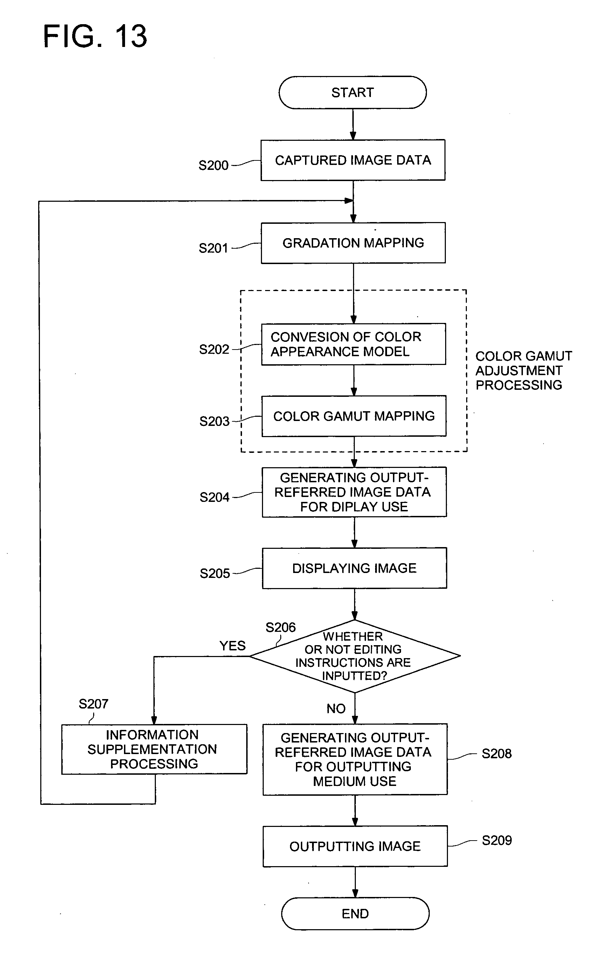

Next, referring to the flowchart shown in Fig. 13, the image processing operations performed in image-recording apparatus 1 serving as the second embodiment.

When captured image data are inputted into image adjustment processing section 701 (step S200), the gradation mapping processing (the gradation conversion processing shown in Fig. 10) is applied to the captured image data (step S201). Successively, the image data processed by the gradation mapping are converted by employing the color appearance model (step S202) to conduct the color gamut mapping for every outputting medium (step S203). The conversion of color appearance model performed in step S202 and the color gamut mapping performed in step S203 correspond to the color gamut adjustment processing embodied in the present invention.

The output-referred image data for displaying an image based on the captured image data on CRT 8 are generated by conducting the color gamut mapping operation for CRT use in step S203 (step S204), so as to display the image based on the output-referred image data on CRT 8 (step S205).

When the user, who observes the image displayed on CRT 8, inputs editing instructions through operating section 11 (YES at step S206), the information supplementation processing (such as rereading the captured image data, supplementation of necessary information only) is conducted in response to the editing instructions (step S207). After the information supplementation processing is completed, the processing step returns to S201 so as to repeat the processing from step S201 to step S205.

When the user inputs an output command of the image data (for instance, an output command for outputting the image data to an external printer) through operating section 11 (NO at step S206), the output-referred image data, suitable for the outputting medium designated by the user, are generated (step S208). The generated output-referred image data are outputted to the outputting medium designated by the user (step S209), and then, the image-processing operation is finalized.

As described in the foregoing, according to the second embodiment, since the gradation mapping processing and the color gamut adjustment processing are successively applied to the captured image data in the process of generating output-referred image data from the captured image data, it becomes possible not only to always supplement necessary information from the optimum luminance range, but also to generate the digital image data whose deterioration is suppressed. Further, since the gradation mapping and the color gamut adjustment processing are conducted on the basis of the editing instructions inputted by the user, it becomes possible not only to always supplement necessary information, but also to generate the digital image data whose deterioration is suppressed. In addition, it also becomes possible for the user to improve his editing work efficiency.

[THIRD EMBODIMENT]

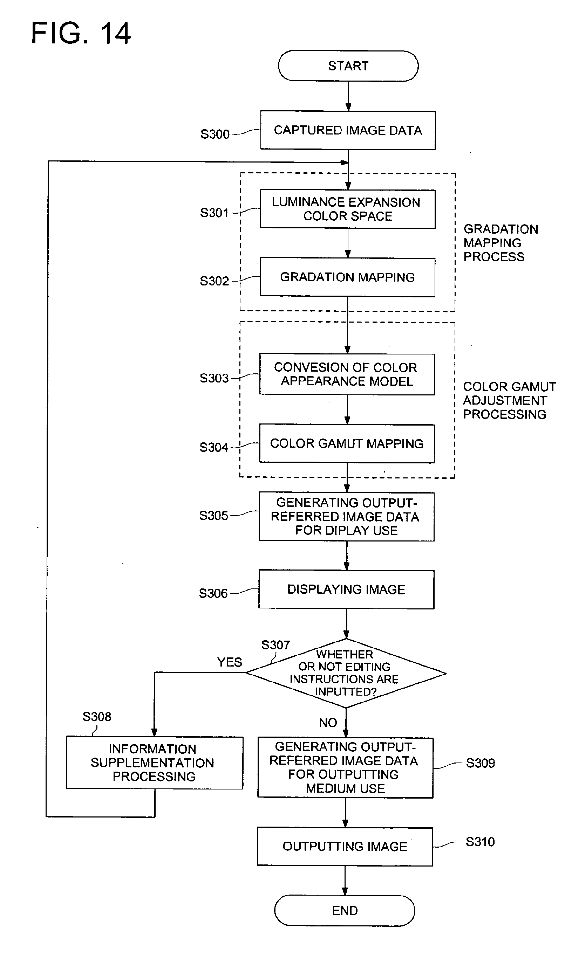

Referring to Fig. 14, the third embodiment will be detailed in the following. Initially, the configuration of the third embodiment will be detailed. Since the internal configuration of image-processing section 70 in the third embodiment is the same as that in the first embodiment as shown in Fig. 5, its drawing is omitted and the same reference number will be employed for the same section. In the following description, among the sections included in the third embodiment, only sections different from those in the first embodiment will be detailed.

Image adjustment processing section 701 converts the color space of the inputted captured-image data to the luminance expansion color space to apply the gradation mapping (the gradation conversion processing shown in Fig. 10). Further, image adjustment processing section 701 converts the gradation mapped image data by employing the color appearance model, in order to implement the color gamut adjustment processing for conducting the color gamut mapping for every outputting medium. According to the color gamut adjustment processing, the image adjustment processing section 701 generates the output-referred image data for displaying an image based on the captured image data on CRT8. The image displayed on CRT8 serves as a proofing image (a test image) for viewing it on another outputting medium (for instance, external printer 51). Accordingly, the user inputs editing instructions by operating the operating section 11, while viewing the image displayed on CRT8. Then, in response to the editing instructions inputted by the user in regard to the image displayed on CRT8, image adjustment processing section 701 conducts the information supplementation processing (such as rereading the captured image data, supplementation of necessary information only) to again implement the converting operation to the luminance expansion color space, the gradation mapping processing and the color gamut adjustment processing for the captured image data.

Next, the operations in the third embodiment will be detailed in the following. Referring to the flowchart shown in Fig. 13, the image processing operations performed in image-recording apparatus 1 serving as the third embodiment.

When captured image data are inputted into image adjustment processing section 701 (step S300), the color space of the inputted captured image data is converted to the luminance expansion color space (step S301), and then, the gradation mapping processing for adjusting the gradation (the gradation conversion processing shown in Fig. 10) is applied to the converted image data (step S302). The conversion of color space to the luminance expansion color space performed in step S301 and the gradation mapping performed in step S302 correspond to the gradation mapping process embodied in the present invention.

Successively, the image data after the gradation mapping is further converted by employing the color appearance model (step S303) so as to conduct the color gamut mapping for every outputting medium (step S304). The conversion of the color appearance model, performed in step S303, and the color gamut mapping performed in step S304 correspond to the color gamut adjustment process embodied in the present invention.

The output-referred image data for displaying an image based on the captured image data on CRT 8 are generated by conducting the color gamut mapping operation for CRT use in step S304 (step S305), so as to display the image based on the output-referred image data on CRT 8 (step S306).

When the user, who observes the image displayed on CRT 8, inputs editing instructions through operating section 11 (YES at step S307), the information supplementation processing (such as rereading the captured image data, supplementation of necessary information only) is conducted in response to the editing instructions (step S308). After the information supplementation processing is completed, the processing step returns to S301 so as to repeat the processing from step S301 to step S306.

When the user inputs an output command of the image data (for instance, an output command for outputting the image data to an external printer) through operating section 11 (NO at step S307), the output-referred image data, suitable for the outputting medium designated by the user, are generated (step S309). The generated output-referred image data are outputted to the outputting medium designated by the user (step S310), and then, the image-processing operation is finalized.

As described in the foregoing, according to the third embodiment, the color space of the inputted captured-image data is converted to the luminance expansion color space to apply the gradation mapping processing, and then, the color gamut adjustment processing is applied to the image data after the gradation mapping processing is completed, in a state of maintaining the image data as the luminance expansion color space. Therefore, it becomes possible not only to always supplement necessary information from the optimum luminance range, but also to generate the digital image data whose deterioration is suppressed. Further, it is possible to output the output-referred image data in the luminance expansion color space, resulting in an improvement of the working efficiency at the time of reprocessing. Still further, since the conversion processing of the captured image data into the luminance expansion color space, the gradation mapping processing and the color gamut adjustment processing are conducted on the basis of the editing instructions inputted by the user, it becomes possible not only to always supplement necessary information, but also to generate the digital image data whose deterioration is suppressed. In addition, it also becomes possible for the user to improve his editing work efficiency.

[FOURTH EMBODIMENT]

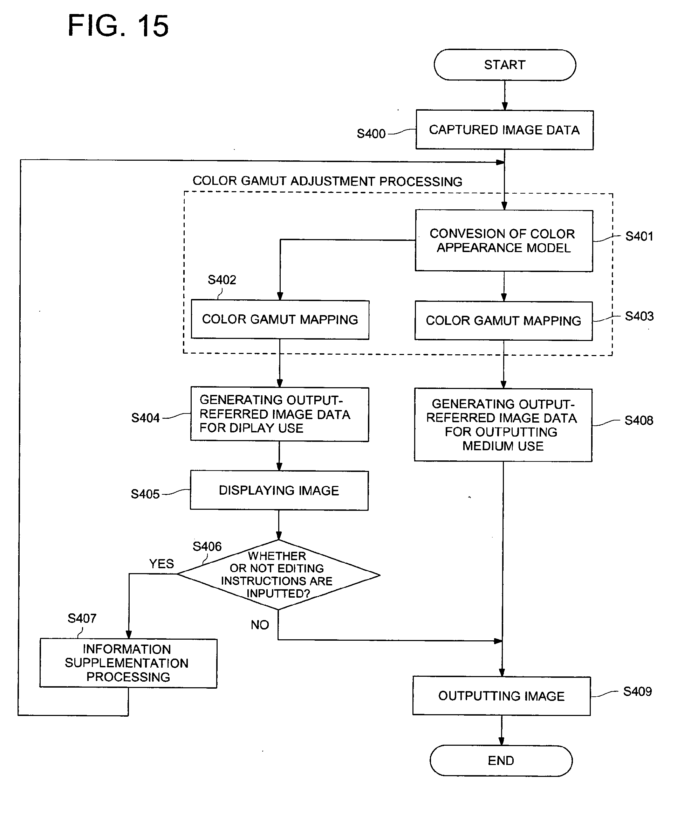

Referring to Fig. 15, the fourth embodiment will be detailed in the following. Initially, the configuration of the fourth embodiment will be detailed. Since the internal configuration of image-processing section 70 in the fourth embodiment is the same as that in the first embodiment as shown in Fig. 5, its drawing is omitted and the same reference number will be employed for the same section. In the following description, among the sections included in the fourth embodiment, only sections different from those in the first embodiment will be detailed.

The image adjustment processing section 701 converts the inputted captured-image data by employing the color appearance model, and then, generates at least two output-referred image data sets to be used for two different outputting mediums (for instance, CRT 8 and external printer 51) at a time, by employing color gamut adjustment processing for conducting the color gamut mapping for every outputting medium. The output-referred image data for CRT use are employed for displaying the image on CRT 8 as a proofing image (test image) for viewing the image on other outputting medium (for instance, external printer 51). Accordingly, the user inputs editing instructions by operating the operating section 11, while viewing the image displayed on CRT 8. Then, in response to the editing instructions inputted by the user in regard to the image displayed on CRT8, image adjustment processing section 701 conducts the information supplementation processing (such as rereading the captured image data, supplementation of necessary information only), and again converts the captured image data by employing the color appearance model, in order to generate at least two output-referred image data sets to be used for two different outputting mediums (for instance, CRT 8 and external printer 51).

Next, the operations in the fourth embodiment will be detailed in the following. Referring to the flowchart shown in Fig. 15, the image processing operations performed in image-recording apparatus 1 serving as the fourth embodiment.

When captured image data are inputted into image adjustment processing section 701 (step S400), the captured image data are converted by employing the color appearance model (step S401), and then, the color gamut mapping processing is conducted for every one of the two outputting mediums (step S402, S403). In step S402, the color gamut mapping for CRT use is conducted, while in step S403, the color gamut mapping to be used for an outputting medium other than the CRT (for instance, the external printer) is conducted. The conversion of the color appearance model, performed in step S401, and color gamut mapping performed in step S402 and step S403 correspond to the color gamut adjustment processing.

The output-referred image data for displaying an image based on the captured image data on CRT 8 are generated by conducting the color gamut mapping operation for CRT use in step S304 (step S404), so as to display the image based on the output-referred image data on CRT 8 (step S405). The output-referred image data for outputting the image on the outputting medium other than the CRT (for instance, the external printer) are generated by conducting the color gamut mapping operation for the outputting medium use in step S403 (step S408).

When the user, who observes the image displayed on CRT 8, inputs editing instructions through operating section 11 (YES at step S406), the information supplementation processing (such as rereading the captured image data, supplementation of necessary information only) is conducted in response to the editing instructions (step S407). After the information supplementation processing is completed, the processing step returns to S401 so as to repeat the processing from step S401 to step S405 and step S408.

When the user inputs an image outputting command instead of the image editing instructions in step S406 (NO at step S406), the output-referred image data generated in step S408 are outputted to the outputting medium concerned (step S409), and then, the image-processing operation is finalized.

As described in the foregoing, according to the fourth embodiment, since the captured image data are converted by employing the color appearance model so as to conduct the color gamut adjustment processing including the color gamut mapping operation for every outputting medium in the process of generating output-referred image data from the captured image data, it becomes possible to suppress the differences between the color appearances on various outputting mediums. Further, since the color gamut adjustment processing is conducted on the basis of the editing instructions inputted by the user, it becomes possible not only to always supplement necessary information, but also to generate the digital image data whose deterioration is suppressed. In addition, it also becomes possible for the user to improve his editing work efficiency.

Specifically, by simultaneously generating a plurality of output-referred image data sets, which are suitable for a plurality of outputting mediums being different from each other, it becomes possible to improve the working efficiency when changing the outputting medium to the other one among them. Further, since one of the plurality of output-referred image data sets can be utilized for displaying a proofing image on the outputting medium, which forms the image by self-illuminating actions (for instance, the CRT), it becomes possible for the user to conduct the editing operation while viewing the proofing image, resulting in an easiness of the editing operation.

[FIFTH EMBODIMENT]

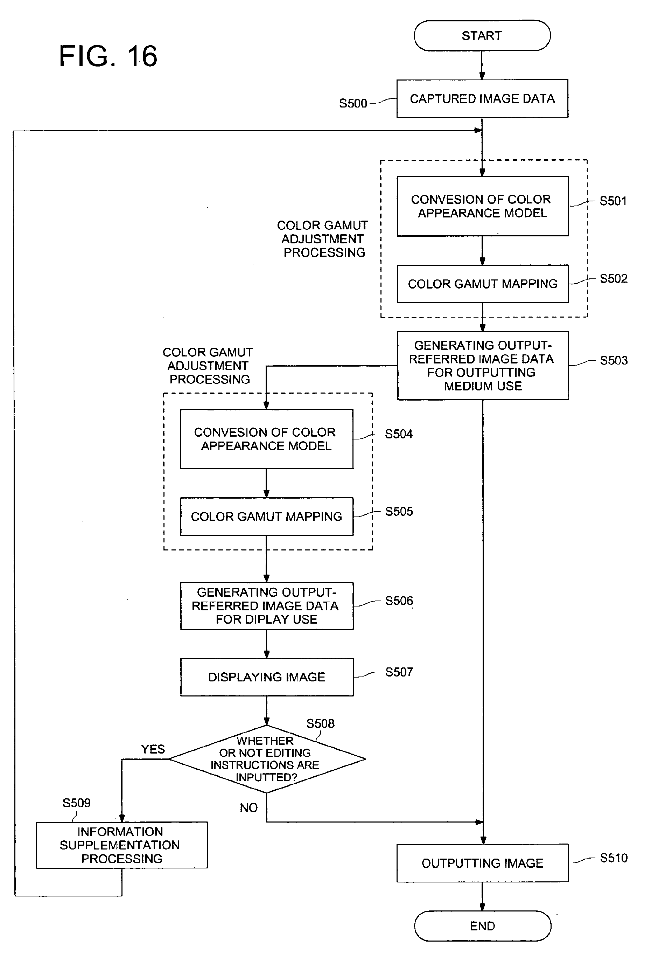

Referring to Fig. 16, the fifth embodiment will be detailed in the following. Initially, the configuration of the fifth embodiment will be detailed. Since the internal configuration of image-processing section 70 in the fifth embodiment is the same as that in the first embodiment as shown in Fig. 5, its drawing is omitted and the same reference number will be employed for the same section. In the following description, among the sections included in the fifth embodiment, only sections different from those in the first embodiment will be detailed.

The image adjustment processing section 701 converts the inputted captured-image data by employing the color appearance model to conduct the color gamut mapping for every outputting medium. Successively, image adjustment processing section 701 further converts the output-referred image data, acquired for an outputting medium (for instance, an external printer) by conducting the abovementioned color gamut mapping, by employing the color appearance model, and then, conducts the color gamut mapping for the other outputting medium (for instance, the CRT) to generate the output-referred image data for the outputting medium concerned. The output-referred image data for CRT use are employed for displaying the image on CRT 8 as a proofing image (test image) for viewing the image on other outputting medium (for instance, external printer 51). Accordingly, the user inputs editing instructions by operating the operating section 11, while viewing the image displayed on CRT 8. Then, in response to the editing instructions inputted by the user in regard to the image displayed on CRT 8, image adjustment processing section 701 conducts the information supplementation processing (such as rereading the captured image data, supplementation of necessary information only), and again conducts the abovementioned converting operation of the color appearance model and the color gamut mapping.

Next, the operations in the fifth embodiment will be detailed in the following. Referring to the flowchart shown in Fig. 16, the image processing operations performed in image-recording apparatus 1 serving as the fifth embodiment.

When captured image data are inputted into image adjustment processing section 701 (step S500), the captured image data are converted by employing the color appearance model (step S501), and then, the color gamut mapping processing is conducted for every outputting medium (step S502) so as to generate the output-referred image data to be outputted to the outputting medium concerned (step S503). In step S502, for instance, the color gamut mapping for the external printer use is conducted, while in step S503, the output-referred image data to be outputted to the external printer are generated. The conversion of the color appearance model, performed in step S501, and the color gamut mapping performed in step S502 correspond to the color gamut adjustment processing embodied in the present invention.

Successively, the output-referred image data generated in step S503 are further converted by employing the color appearance model (step S504), and the color gamut mapping for CRT use is conducted (step S505) to generate the output-referred image data for displaying the image based on the captured image data on CRT 8 (step S506). Then, the image of the output-referred image data generated in step S506 is displayed on CRT 8 (step S507). The conversion of the color appearance model, performed in step S504, and the color gamut mapping performed in step S505 correspond to the color gamut adjustment process embodied in the present invention.

When the user, who observes the image displayed on CRT 8, inputs editing instructions through operating section 11 (YES at step S508), the information supplementation processing (such as rereading the captured image data, supplementation of necessary information only) is conducted in response to the editing instructions (step S509). After the information supplementation processing is completed, the processing step returns to S501 so as to repeat the processing from step S501 to step S507.

When the user inputs an image outputting command instead of the image editing instructions in step S508 (NO at step S508), the output-referred image data generated in step S503 are outputted to the outputting medium concerned (step S510), and then, the image-processing operation is finalized.

As described in the foregoing, according to the fifth embodiment, since the captured image data are converted by employing the color appearance model so as to conduct the color gamut adjustment processing including the color gamut mapping operation for every outputting medium in the process of generating output-referred image data from the captured image data, it becomes possible to suppress the differences between the color appearances on various outputting mediums. Further, since the color gamut adjustment processing is conducted on the basis of the editing instructions inputted by the user, it becomes possible not only to always supplement necessary information, but also to generate the digital image data whose deterioration is suppressed. In addition, it also becomes possible for the user to improve his editing work efficiency.

Specifically, by again applying the color gamut adjustment processing to the output-referred image data, which were generated by applying the color gamut adjustment processing so as to use them for at least a first outputting medium, new output-referred image data usable for a second outputting medium, being different from the first outputting medium, can be generated. Accordingly, when the captured image data are other than raw data, it becomes possible to eliminate the process of generating the output-referred image data, resulting in an improvement of the working efficiency. Further, since the output-referred image data, which were generated by applying the color gamut adjustment processing so as to use them for at least an outputting medium, can be utilized for displaying a proofing image on the outputting medium, which forms the image by self-illuminating actions (for instance, the CRT), it becomes possible for the user to conduct the editing operation while viewing the proofing image, resulting in an easiness of the editing operation.

[SIXTH EMBODIMENT]

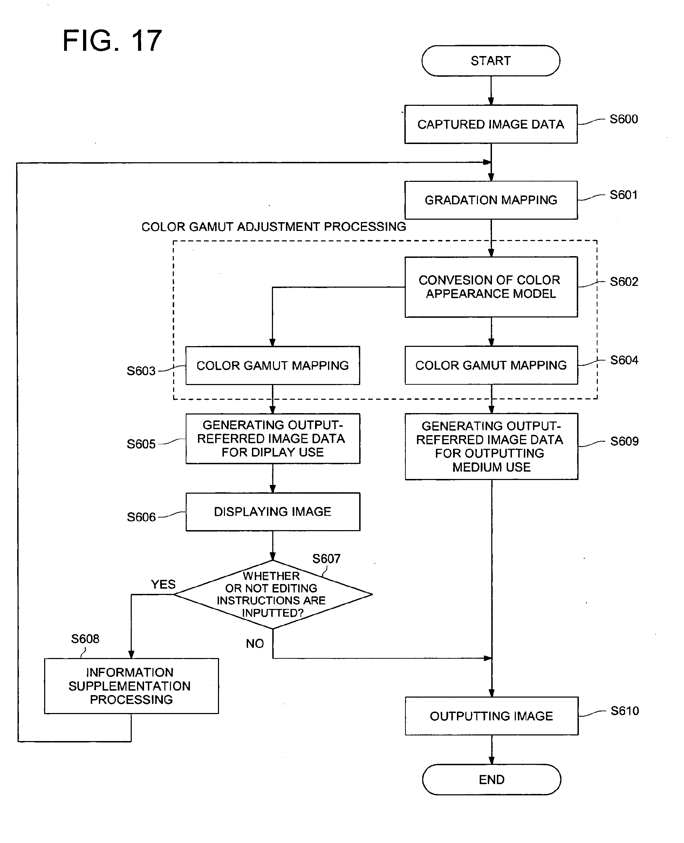

Referring to Fig. 17, the sixth embodiment will be detailed in the following. Initially, the configuration of the sixth embodiment will be detailed. Since the internal configuration of image-processing section 70 in the sixth embodiment is the same as that in the first embodiment as shown in Fig. 5, its drawing is omitted and the same reference number will be employed for the same section. In the following description, among the sections included in the sixth embodiment, only sections different from those in the first embodiment will be detailed.

The image adjustment processing section 701 applies the gradation mapping (refer to the gradation conversion processing shown in Fig. 10) to the inputted captured-image data, and then, converts the gradation mapped image data by employing the color appearance model, and then, generates at least two output-referred image data sets to be used for two different outputting mediums (for instance, CRT 8 and external printer 51) at a time, by employing the color gamut adjustment processing for conducting the color gamut mapping for every outputting medium. The output-referred image data for CRT use are employed for displaying the image on CRT 8 as a proofing image (a test image) for viewing the image on other outputting medium (for instance, external printer 51). Accordingly, the user inputs editing instructions by operating the operating section 11, while viewing the image displayed on CRT 8. Then, in response to the editing instructions inputted by the user in regard to the image displayed on CRT8, image adjustment processing section 701 conducts the information supplementation processing (such as rereading the captured image data, supplementation of necessary information only), and again converts the captured image data by employing the color appearance model, in order to generate at least two output-referred image data sets to be used for two different outputting mediums (for instance, CRT 8 and external printer 51).

Next, the operations in the sixth embodiment will be detailed in the following. Referring to the flowchart shown in Fig. 17, the image processing operations performed in image-recording apparatus 1 serving as the sixth embodiment.

When captured image data are inputted into image adjustment processing section 701 (step S600), the gradation mapping (the gradation conversion processing shown in Fig. 10) for adjusting the gradation is applied to the inputted captured-image data (step S601). Successively, the image data processed by the gradation mapping are further converted by employing the color appearance model (step S602), and then, the color gamut mapping processing is conducted for every one of the two outputting mediums (step S603, S604). In step S603, the color gamut mapping for CRT use is conducted, while in step S604, the color gamut mapping to be used for an outputting medium other than the CRT (for instance, the external printer) is conducted. The conversion of the color appearance model, performed in step S602, and color gamut mapping performed in step S603 and step S604 correspond to the color gamut adjustment processing.

The output-referred image data for displaying an image based on the captured image data on CRT 8 are generated by conducting the color gamut mapping operation for CRT use in step S603 (step S605), so as to display the image based on the output-referred image data on CRT 8 (step S606). The output-referred image data for outputting the image on the outputting medium other than the CRT (for instance, the external printer) are generated by conducting the color gamut mapping operation for the outputting medium use in step S604 (step S609).

When the user, who observes the image displayed on CRT 8, inputs editing instructions through operating section 11 (YES at step S607), the information supplementation processing (such as rereading the captured image data, supplementation of necessary information only) is conducted in response to the editing instructions (step S608). After the information supplementation processing is completed, the processing step returns to S601 so as to repeat the processing from step S601 to step S606 and step S609.

When the user inputs an image outputting command instead of the image editing instructions in step S508 (NO at step S607), the output-referred image data generated in step S609 are outputted to the outputting medium concerned (step S610), and then, the image-processing operation is finalized.

As described in the foregoing, according to the sixth embodiment, since the gradation mapping processing and the color gamut adjustment processing are successively applied to the captured image data in the process of generating output-referred image data from the captured image data, it becomes possible not only to always supplement necessary information from the optimum luminance range, but also to generate the digital image data whose deterioration is suppressed. Further, since the gradation mapping and the color gamut adjustment processing are conducted on the basis of the editing instructions inputted by the user, it becomes possible not only to always supplement necessary information, but also to generate the digital image data whose deterioration is suppressed. In addition, it also becomes possible for the user to improve his editing work efficiency.

Specifically, by simultaneously generating a plurality of output-referred image data sets, which are suitable for a plurality of outputting mediums being different from each other, it becomes possible to improve the working efficiency when changing the outputting medium to the other one among them. Further, since one of the plurality of output-referred image data sets can be utilized for displaying a proofing image on the outputting medium, which forms the image by self-illuminating actions (for instance, the CRT), it becomes possible for the user to conduct the editing operation while viewing the proofing image, resulting in an easiness of the editing operation.

[SEVENTH EMBODIMENT]

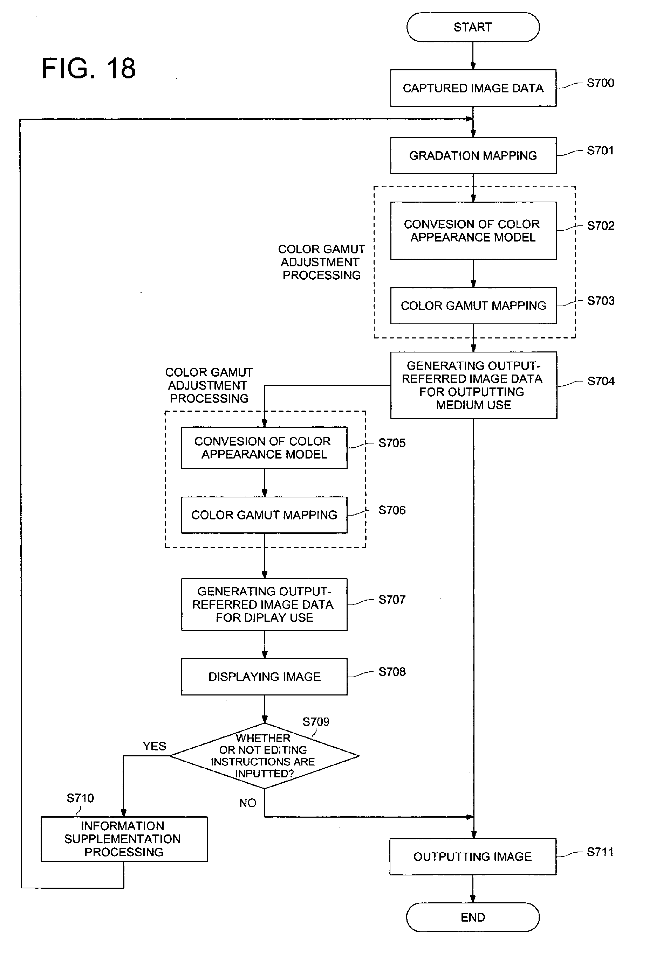

Referring to Fig. 18, the seventh embodiment will be detailed in the following. Initially, the configuration of the seventh embodiment will be detailed. Since the internal configuration of image-processing section 70 in the seventh embodiment is the same as that in the first embodiment as shown in Fig. 5, its drawing is omitted and the same reference number will be employed for the same section. In the following description, among the sections included in the seventh embodiment, only sections different from those in the first embodiment will be detailed.

The image adjustment processing section 701 applies the gradation mapping (refer to the gradation conversion processing shown in Fig. 10) to the inputted captured-image data, and then, converts the gradation mapped image data by employing the color appearance model to conduct the color gamut mapping for every outputting medium. Successively, image adjustment processing section 701 further converts the output-referred image data, acquired for an outputting medium (for instance, an external printer) by conducting the abovementioned color gamut mapping, by employing the color appearance model, and then, conducts the color gamut mapping for the other outputting medium (for instance, the CRT) to generate the output-referred image data for the outputting medium concerned. The output-referred image data for CRT use are employed for displaying the image on CRT 8 as a proofing image (a test image) for viewing the image on other outputting medium (for instance, external printer 51). Accordingly, the user inputs editing instructions by operating the operating section 11, while viewing the image displayed on CRT 8. Then, in response to the editing instructions inputted by the user in regard to the image displayed on CRT 8, image adjustment processing section 701 conducts the information supplementation processing (such as rereading the captured image data, supplementation of necessary information only), and again conducts the abovementioned gradation mapping, the converting operation of the color appearance model and the color gamut mapping.

Next, the operations in the seventh embodiment will be detailed in the following. Referring to the flowchart shown in Fig. 18, the image processing operations performed in image-recording apparatus 1 serving as the seventh embodiment.

When captured image data are inputted into image adjustment processing section 701 (step S700), the gradation mapping (the gradation conversion processing shown in Fig. 10) for adjusting the gradation is applied to the inputted captured-image data (step S701). Successively, the image data processed by the gradation mapping are further converted by employing the color appearance model (step S702), and then, the color gamut mapping processing is conducted for every outputting medium (step S703) to generate the output-referred image data based on which the captured image is outputted onto the outputting medium concerned (step S704). In step S703, for instance, the color gamut mapping for the external printer use is conducted, while in step S704, the output-referred image data to be outputted to the external printer are generated. The conversion of the color appearance model, performed in step S702, and the color gamut mapping performed in step S703 correspond to the color gamut adjustment processing embodied in the present invention.

Successively, the output-referred image data generated in step S704 are further converted by employing the color appearance model (step S705), and the color gamut mapping for CRT use is conducted (step S706) to generate the output-referred image data for displaying the image based on the captured image data on CRT 8 (step S707). Then, the image of the output-referred image data generated in step S707 is displayed on CRT 8 (step S708). The conversion of the color appearance model, performed in step S705, and the color gamut mapping performed in step S706 correspond to the color gamut adjustment process embodied in the present invention.

When the user, who observes the image displayed on CRT 8, inputs editing instructions through operating section 11 (YES at step S709), the information supplementation processing (such as rereading the captured image data, supplementation of necessary information only) is conducted in response to the editing instructions (step S710). After the information supplementation processing is completed, the processing step returns to S701 so as to repeat the processing from step S701 to step S708.

When the user inputs an image outputting command instead of the image editing instructions in step S709 (NO at step S709), the output-referred image data generated in step S704 are outputted to the outputting medium concerned (step S711), and then, the image-processing operation is finalized.

As described in the foregoing, according to the seventh embodiment, since the gradation mapping processing is applied to the captured image data, and the captured image data are converted by employing the color appearance model so as to conduct the color gamut adjustment processing including the color gamut mapping operation for every outputting medium in the process of generating output-referred image data from the captured image data, it becomes possible to suppress the differences between the color appearances on various outputting mediums. Further, since the color gamut adjustment processing is conducted on the basis of the editing instructions inputted by the user, it becomes possible not only to always supplement necessary information, but also to generate the digital image data whose deterioration is suppressed. In addition, it also becomes possible for the user to improve his editing work efficiency.

Specifically, by again applying the color gamut adjustment processing to the output-referred image data, which were generated by applying the color gamut adjustment processing so as to use them for at least a first outputting medium, new output-referred image data usable for a second outputting medium, being different from the first outputting medium, can be generated. Accordingly, when the captured image data are other than raw data, it becomes possible to eliminate the process of generating the output-referred image data, resulting in an improvement of the working efficiency. Further, since the output-referred image data, which were generated by applying the color gamut adjustment processing so as to use them for at least an outputting medium, can be utilized for displaying a proofing image on the outputting medium, which forms the image by self-illuminating actions (for instance, the CRT), it becomes possible for the user to conduct the editing operation while viewing the proofing image, resulting in an easiness of the editing operation.

[EIGHTH EMBODIMENT]

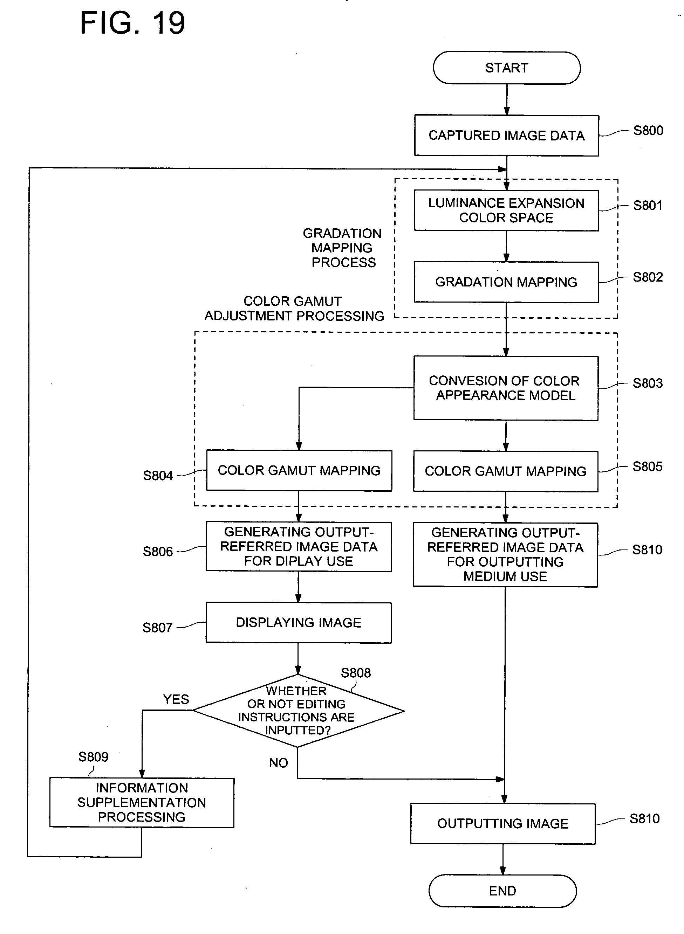

Referring to Fig. 19, the eighth embodiment will be detailed in the following. Initially, the configuration of the eighth embodiment will be detailed. Since the internal configuration of image-processing section 70 in the eighth embodiment is the same as that in the first embodiment as shown in Fig. 5, its drawing is omitted and the same reference number will be employed for the same section. In the following description, among the sections included in the eighth embodiment, only sections different from those in the first embodiment will be detailed.

The image adjustment processing section 701 converts the color space of the inputted captured-image data to the luminance expansion color space and applies the gradation mapping (refer to the gradation conversion processing shown in Fig. 10) to the inputted captured-image data. Further, the image adjustment processing section 701 converts the gradation mapped image data by employing the color appearance model, and then, generates at least two output-referred image data sets to be used for two different outputting mediums (for instance, CRT 8 and external printer 51) at a time, by employing the color gamut adjustment processing for conducting the color gamut mapping for every outputting medium. The output-referred image data for CRT use are employed for displaying the image on CRT 8 as a proofing image (a test image) for viewing the image on other outputting medium (for instance, external printer 51). Accordingly, the user inputs editing instructions by operating the operating section 11, while viewing the image displayed on CRT 8. Then, in response to the editing instructions inputted by the user in regard to the image displayed on CRT8, image adjustment processing section 701 conducts the information supplementation processing (such as rereading the captured image data, supplementation of necessary information only), and again converts the captured image data by employing the color appearance model, in order to generate at least two output-referred image data sets to be used for two different outputting mediums (for instance, CRT 8 and external printer 51).

Next, the operations in the eighth embodiment will be detailed in the following. Referring to the flowchart shown in Fig. 19, the image processing operations performed in image-recording apparatus 1 serving as the eighth embodiment.

When captured image data are inputted into image adjustment processing section 701 (step S800), the color space of the inputted captured-image data is converted to the luminance expansion color space (step S801), and then, the gradation mapping processing (the gradation conversion processing shown in Fig. 10) is applied to the image data having the converted color space (step S802).

The converting operation to the luminance expansion color space, performed in step S801, and the gradation mapping performed in step S802 correspond to the gradation mapping processing embodied in the present invention.

Successively, the image data processed by the gradation mapping are further converted by employing the color appearance model (step S803), and then, the color gamut mapping processing is conducted for every one of the two outputting mediums (step S804, S805). In step S804, the color gamut mapping for CRT use is conducted, while in step S805, the color gamut mapping to be used for an outputting medium other than the CRT (for instance, the external printer) is conducted. The conversion of the color appearance model, performed in step S803, and color gamut mapping performed in step S804 and step S805 correspond to the color gamut adjustment processing.

The output-referred image data for displaying an image based on the captured image data on CRT 8 are generated by conducting the color gamut mapping operation for CRT use in step S804 (step S806), so as to display the image based on the output-referred image data on CRT 8 (step S807). The output-referred image data for outputting the image on the outputting medium other than the CRT (for instance, the external printer) are generated by conducting the color gamut mapping operation for the outputting medium use in step S805 (step S810).

When the user, who observes the image displayed on CRT 8, inputs editing instructions through operating section 11 (YES at step S808), the information supplementation processing (such as rereading the captured image data, supplementation of necessary information only) is conducted in response to the editing instructions (step S809). After the information supplementation processing is completed, the processing step returns to S801 so as to repeat the processing from step S801 to step S807 and step S810.

When the user inputs an image outputting command instead of the image editing instructions in step S808 (NO at step S808), the output-referred image data generated in step S810 are outputted to the outputting medium concerned (step S811), and then, the image-processing operation is finalized.

As described in the foregoing, according to the eighth embodiment, in the process of generating output-referred image data from the captured image data, the color space of the inputted captured-image data is converted to the luminance expansion color space to apply the gradation mapping processing, and then, the color gamut adjustment processing is applied to the image data after the gradation mapping processing is completed, in a state of maintaining the image data as the luminance expansion color space. Therefore, it becomes possible not only to always supplement necessary information from the optimum luminance range, but also to generate the digital image data whose deterioration is suppressed. Further, it is possible to output the output-referred image data in the luminance expansion color space, resulting in an improvement of the working efficiency at the time of reprocessing. Still further, since the conversion processing of the captured image data into the luminance expansion color space, the gradation mapping processing and the color gamut adjustment processing are conducted on the basis of the editing instructions inputted by the user, it becomes possible not only to always supplement necessary information, but also to generate the digital image data whose deterioration is suppressed. In addition, it also becomes possible for the user to improve his editing work efficiency.

Specifically, by simultaneously generating a plurality of output-referred image data sets, which are suitable for a plurality of outputting mediums being different from each other, it becomes possible to improve the working efficiency when changing the outputting medium to the other one among them. Further, since one of the plurality of output-referred image data sets can be utilized for displaying a proofing image on the outputting medium, which forms the image by self-illuminating actions (for instance, the CRT), it becomes possible for the user to conduct the editing operation while viewing the proofing image, resulting in an easiness of the editing operation.

[NINTH EMBODIMENT]

Referring to Fig. 19, the ninth embodiment will be detailed in the following. Initially, the configuration of the ninth embodiment will be detailed. Since the internal configuration of image-processing section 70 in the ninth embodiment is the same as that in the first embodiment as shown in Fig. 5, its drawing is omitted and the same reference number will be employed for the same section. In the following description, among the sections included in the ninth embodiment, only sections different from those in the first embodiment will be detailed.

The image adjustment processing section 701 converts the color space of the inputted captured-image data to the luminance expansion color space and applies the gradation mapping processing (refer to the gradation conversion processing shown in Fig. 10) to the inputted captured-image data. Further, image adjustment processing section 701 converts the gradation mapped image data by employing the color appearance model, and conducts the color gamut mapping for every outputting medium. Successively, image adjustment processing section 701 further converts the output-referred image data, acquired for an outputting medium (for instance, an external printer) by conducting the abovementioned color gamut mapping, by employing the color appearance model, and then, conducts the color gamut mapping for the other outputting medium (for instance, the CRT) to generate the output-referred image data for the outputting medium concerned. The output-referred image data for CRT use are employed for displaying the image on CRT 8 as a proofing image (a test image) for viewing the image to be displayed on another outputting medium (for instance, external printer 51). Accordingly, the user inputs editing instructions by operating the operating section 11, while viewing the image displayed on CRT 8. Then, in response to the editing instructions inputted by the user in regard to the image displayed on CRT 8, image adjustment processing section 701 conducts the information supplementation processing (such as rereading the captured image data, supplementation of necessary information only), and again conducts the abovementioned converting operation to the luminance expansion color space, the gradation mapping, the converting operation of the color appearance model and the color gamut mapping.

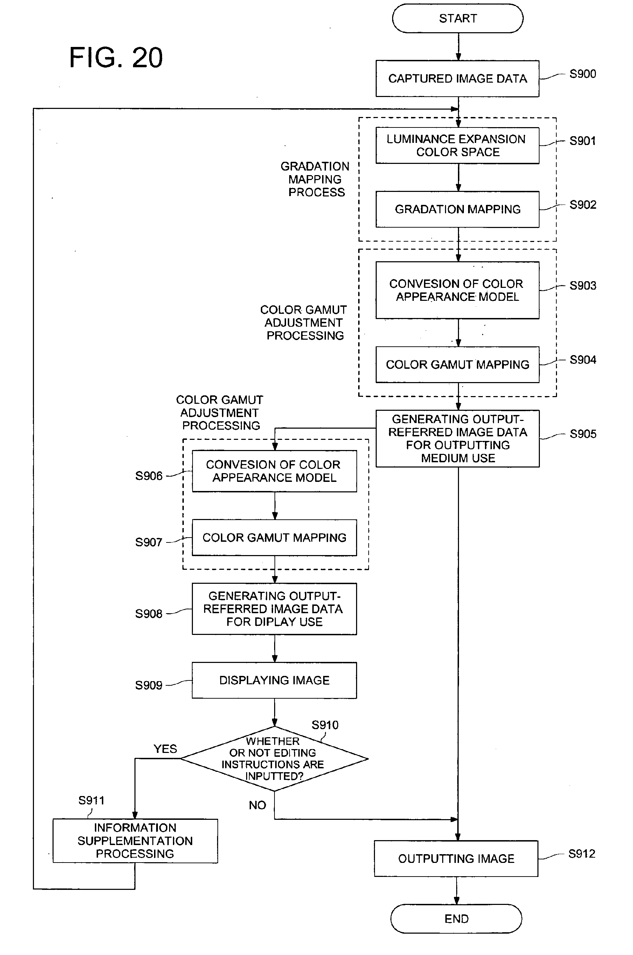

Next, the operations in the ninth embodiment will be detailed in the following. Referring to the flowchart shown in Fig. 20, the image processing operations performed in image-recording apparatus 1 serving as the ninth embodiment.

When captured image data are inputted into image adjustment processing section 701 (step S900), the color space of the inputted captured-image data is converted to the luminance expansion color space (step S901), and then, the gradation mapping processing (the gradation conversion processing shown in Fig. 10) is applied to the image data having the converted color space (step S902).

The converting operation to the luminance expansion color space, performed in step S901, and the gradation mapping performed in step S902 correspond to the gradation mapping processing embodied in the present invention.

Successively, the image data processed by the gradation mapping are further converted by employing the color appearance model (step S903), and then, the color gamut mapping processing is conducted for every outputting medium (step S904) to generate the output-referred image data based on which the captured image is outputted onto the outputting medium concerned (step S905). In step S904, for instance, the color gamut mapping for the external printer use is conducted, while in step S905, the output-referred image data to be outputted to the external printer are generated. The conversion of the color appearance model, performed in step S903, and the color gamut mapping performed in step S904 correspond to the color gamut adjustment processing embodied in the present invention.

Successively, the output-referred image data generated in step S905 are further converted by employing the color appearance model (step S906), and the color gamut mapping for CRT use is conducted (step S907) to generate the output-referred image data for displaying the image based on the captured image data on CRT 8 (step S908). Then, the image of the output-referred image data generated in step S908 is displayed on CRT 8 (step S909). The conversion of the color appearance model, performed in step S906, and the color gamut mapping performed in step S907 correspond to the color gamut adjustment process embodied in the present invention.

When the user, who observes the image displayed on CRT 8, inputs editing instructions through operating section 11 (YES at step S910), the information supplementation processing (such as rereading the captured image data, supplementation of necessary information only) is conducted in response to the editing instructions (step S911). After the information supplementation processing is completed, the processing step returns to S901 so as to repeat the processing from step S901 to step S909.

When the user inputs an image outputting command instead of the image editing instructions in step S910 (NO at step S910), the output-referred image data generated in step S905 are outputted to the outputting medium concerned (step S912), and then, the image-processing operation is finalized.

As described in the foregoing, according to the third embodiment, the color space of the inputted captured-image data is converted to the luminance expansion color space to apply the gradation mapping processing, and then, the color gamut adjustment processing is applied to the image data after the gradation mapping processing is completed, in a state of maintaining the image data as the luminance expansion color space. Therefore, it becomes possible not only to always supplement necessary information from the optimum luminance range, but also to generate the digital image data whose deterioration is suppressed. Further, it is possible to output the output-referred image data in the luminance expansion color space, resulting in an improvement of the working efficiency at the time of reprocessing. Still further, since the conversion processing of the captured image data into the luminance expansion color space, the gradation mapping processing and the color gamut adjustment processing are conducted on the basis of the editing instructions inputted by the user, it becomes possible not only to always supplement necessary information, but also to generate the digital image data whose deterioration is suppressed. In addition, it also becomes possible for the user to improve his editing work efficiency.

Specifically, by again applying the color gamut adjustment processing to the output-referred image data, which were generated by applying the color gamut adjustment processing so as to use them for at least a first outputting medium, new output-referred image data usable for a second outputting medium, being different from the first outputting medium, can be generated. Accordingly, when the captured image data are other than raw data, it becomes possible to eliminate the process of generating the output-referred image data, resulting in an improvement of the working efficiency. Further, since the output-referred image data, which were generated by applying the color gamut adjustment processing so as to use them for at least an outputting medium, can be utilized for displaying a proofing image on the outputting medium, which forms the image by self-illuminating actions (for instance, the CRT), it becomes possible for the user to conduct the editing operation while viewing the proofing image, resulting in an easiness of the editing operation.

Disclosed embodiments can be varied by a skilled person without departing from the spirit and scope of the invention.

## Claims

1. An image processing method of producing visual image-referred data by conducting an image processing to optimize for viewing the visual on an output medium by utilizing a color appearance model, comprising:

    an inputting process to input a user's editing instruction;
    a reading process to read scene-referred raw data for each editing instruction of an user inputted in the inputting process; and
    a gamut adjusting process to conduct a gamut mapping for each output medium by converting the read scene-referred raw data in accordance with the user's editing instruction by utilizing a color appearance model.

2. The image processing method of claim 1, further comprising:

    a gradation converting process to adjust the gradation of the read scene-referred raw data in accordance with the user's editing instruction,

    wherein for each output medium, the gamut adjusting process conducts the gamut mapping for the scene-referred raw data whose gradation has been adjusted in the gradation converting process.

3. The image processing method of claim 1, wherein after the color space of the scene-referred raw data has been converted into a luminance-expanded color space, the gradation converting process adjusts the gradation of the scene-referred raw data.

4. The image processing method of claim 1, further comprising:

    a producing process to employ a gamut adjusting processing to conduct a gamut mapping for each output medium in the gamut adjusting process so as to produce simultaneously at least two sets of visual image-referred data for at least two different output mediums.

5. The image processing method of claim 1, further comprising:

    a producing process to conduct a gamut adjusting processing for a set of visual image-referred data obtained for at least one output medium in the gamut adjusting process so as to produce another set of visual image-referred data for another output medium different from the at least one output medium.

6. The image processing method of claim 2, further comprising:

    a producing process to convert the scene-referred raw data whose gradation has been adjusted in the gradation converting process, by employing a gamut adjusting processing to conduct a gamut mapping for each output medium by utilizing a color appearance model so as to produce simultaneously at least two sets of visual image-referred data for at least two different output mediums.

7. The image processing method of claim 2, further comprising:

    a producing process to convert the scene-referred raw data whose gradation has been adjusted in the gradation converting process, by employing a gamut adjusting processing to conduct a gamut mapping for each output medium by utilizing a color appearance model so as to obtain a set of visual image-referred data obtained for at least one output medium and to conduct a gamut adjusting processing for the set of visual image-referred data obtained so as to produce another set of visual image-referred data for another output medium different from the at least one output medium.

8. The image processing method of claim 3, further comprising:

   a producing process to convert the scene-referred raw data whose gradation has been adjusted in the gradation converting process after the color space of the scene-referred raw data has been converted into a luminance-expanded color space, by employing a gamut adjusting processing to conduct a gamut mapping for each output medium by utilizing a color appearance model so as to produce simultaneously at least two sets of visual image-referred data for at least two different output mediums.

9. The image processing method of claim 3, further comprising:

   a producing process to convert the scene-referred raw data whose gradation has been adjusted in the gradation converting process after the color space of the scene-referred raw data has been converted into a luminance-expanded color space, by employing a gamut adjusting processing to conduct a gamut mapping for each output medium by utilizing a color appearance model so as to obtain a set of visual image-referred data obtained for at least one output medium and to conduct a gamut adjusting processing for the set of visual image-referred data obtained so as to produce another set of visual image-referred data for another output medium different from the at least one output medium.

10. The image processing method of claim 4, wherein at least one set of visual image-referred data among the at least two sets of visual image-referred data produced in the producing process is image data for an output media to output an image by self-illuminating actions and the output media display the at least one set of visual image-referred data as a proofing image utilized for proofing a visual image to be outputted onto another outputting medium.

11. The image processing method of claim 5, wherein the another set of visual image-referred data produced in the producing process is image data for an output media to output an image by self-illuminating actions and the output media display the at least one set of visual image-referred data as a proofing image utilized for proofing a visual image to be outputted onto another outputting medium.

12. The image processing method of claim 3, wherein the luminance-expanded color space is a color space of scRGB.

13. The image processing method of claim 1, wherein a processing condition of the gradation converting is adjusted once in the reading process in accordance with a result of input information or a primary object of the scene-referred raw data.

14. The image processing method of claim 1, wherein a processing condition of the gamut mapping is adjusted once in the reading process in accordance with a result of input information or a primary object of the scene-referred raw data.

15. The image processing method of claim 13, wherein the input information includes at least one of image analysis result, meta data and information added image data in a specifiable format for each image file.

16. The image processing method of claim 13, wherein the color appearance model is a color appearance model according to CIE-CAM97s or a color appearance model according to CIE-CAM02s.

17. An image processing apparatus for producing visual image-referred data by conducting an image processing to optimize for viewing the visual on an output medium by utilizing a color appearance model, comprising:

   an inputting device to input a user's editing instruction;
   a reading device to read scene-referred raw data for each editing instruction of an user inputted in the inputting process; and
   a gamut adjusting device to conduct a gamut mapping for each output medium by converting the read scene-referred raw data in accordance with the user's editing instruction by utilizing a color appearance model.

# FIG. 1

R, G, B

OBSERVING-CONDITION
PARAMETERS

Xw, Yw, Zw
LA
Yb
c, Nc, FLL, F

T1 — **RGB R XYZ TRANSFORM**

X, Y, Z

**OBSERVING-CONDITION PARAMETER CONVERSION** — T2

T3 — **COLOR ADAPTING TRANSFORM**

Rc, Gc, Bc

k, FL, n, Nbb, Ncb, z

T4 — **CONE RESPONSE TRANSFORM**

R', G', B'

T5 — **NON-LINEAR RESPONSE TRANSFORM**

Ra', Ga', Ba'

T6 — **CALCULATING COLOR APPEARANCE VALUE**

h, J, C

# FIG. 2

h, J, C

| | |
|---|---|
| T12 | CALCULATING NON-LINEAR RESPONSE FROM COLOR APPEARANCE VALUE |

OBSERVING-CONDITION
PARAMETERS
Xw', Yw', Zw'
LA'
Yb'
c', Nc', FLL', F'

Ra', Ga', Ba'

| | |
|---|---|
| T13 | NON-LINEAR RESPONSE INVERSE -TRANSFORM |

R', G', B'

| | |
|---|---|
| T14 | CONE RESPONSE INVERSE- TRANSFORM |

T11

| | |
|---|---|
| | OBSERVING- CONDITION PARAMETER CONVERSION |

Rc, Gc, Bc

k', FL', n', Nbb',
Ncb', z'

| | |
|---|---|
| T15 | COLOR ADAPTING INVERSE- TRANSFORM |

X", Y", Z"

| | |
|---|---|
| T16 | X"Y"Z" → RGB TRANSFORM |

R, G, B

FIG. 3

# FIG. 4

SAMPLE IDENTIFICATION INFORMATION D1, D2 AND D3

ANALOGUE CANERA

OPERATION SECTION 11 12

CRT 8

FILM SCANNER SECTION 9

IMAGE-PROCESSING SECTION 7 70

EXPOSURE PROCESSING SECTION 4

PRINT CREATING SECTION 5

REFLECTED DOCUMENT INPUT SECTION 10

IMAGE TRANSFERRING MEANS 30

DATA STORAGE SECTION 71

TEMPLATE MEMORY SECTION 72

COMMUNICATING SECTION (OUTPUT) 33

COMMUNICATIONS SECTION (INPUT) 32

IMAGE TRANSPORT SECTION 31 15

DIGITAL CAMERA

13a 13b 14

16b 16c 16a

N P P1 P2 P3 2

EP 1 558 021 A2

# FIG. 5

EP 1 558 021 A2

# FIG. 6

```
                    ┌─────────────┐
                    │    START    │
                    └─────────────┘
                           │
                           ▼
         S100 ──── ┌─────────────────────────┐
                   │   CAPTURED IMAGE DATA    │
                   └─────────────────────────┘
                           │
          ┌────────────────┤
          │      ┌ ─ ─ ─ ─ ▼ ─ ─ ─ ─ ─ ─ ─ ┐
          │                │
          │      │         ▼                 │
          │  S101 ──── ┌─────────────────┐       COLOR GAMUT
          │      │     │   CONVESION OF  │   │   ADJUSTMENT
          │            │ COLOR APPEARANCE│       PROCESSING
          │      │     │      MODEL      │   │
          │            └─────────────────┘
          │      │         │                 │
          │                ▼
          │  S102 ──── ┌─────────────────┐   │
          │      │     │ COLOR GAMUT     │
          │            │    MAPPING      │   │
          │      │     └─────────────────┘
          │      └ ─ ─ ─ ─ ─│─ ─ ─ ─ ─ ─ ─ ┘
          │                 ▼
          │  S103 ──── ┌─────────────────┐
          │            │  GENERATING     │
          │            │  OUTPUT-REFERRED│
          │            │  IMAGE DATA     │
          │            │  FOR DIPLAY USE │
          │            └─────────────────┘
          │                 │
          │                 ▼
          │  S104 ──── ┌─────────────────┐
          │            │ DISPLAYING IMAGE│
          │            └─────────────────┘
          │                 │
          │   S105          ▼
          │        ◇─────────────────────◇
          │  YES  ╱   WHETHER OR NOT      ╲
          ├───────   EDITING INSTRUCTIONS
          │        ╲   ARE INPUTTED?      ╱
          │         ◇───────────────────◇
          │                 │ NO
          │  S106           ▼
          │  ┌─────────────┐  ┌─────────────────┐── S107
          └──│ INFORMATION │  │  GENERATING     │
             │ SUPPLEMENT- │  │  OUTPUT-REFERRED│
             │ ATION       │  │  IMAGE DATA FOR │
             │ PROCESSING  │  │  OUTPUTTING     │
             └─────────────┘  │  MEDIUM USE     │
                              └─────────────────┘
                                  │
                                  ▼
                              ┌─────────────────┐── S108
                              │ OUTPUTTING IMAGE│
                              └─────────────────┘
                                  │
                                  ▼
                              ┌─────────┐
                              │   END   │
                              └─────────┘
```

# FIG. 7

```
┌─────────────────────────────┐
│   PHOTOGRAPHED SCENE         │
│   ESTIMATION PROCESSING      │
└─────────────────────────────┘
              │
              ▼
┌─────────────────────────────┐
│  ACQUIRING HUE VALUE AND     │
│  BRIGHTNESS VALUE OF         │─ S1
│  INPUT IMAGE DATA            │
└─────────────────────────────┘
              │
              ▼
┌─────────────────────────────┐
│  CREATING A TWO-DIMENSIONAL  │─ S2
│  HISTOGRAM                   │
└─────────────────────────────┘
              │
              ▼
┌─────────────────────────────┐
│  DIVIDING THE INPUT IMAGE    │
│  DATA INTO PREDETERMINED     │─ S3
│  BRIGHTNESS AREAS            │
└─────────────────────────────┘
              │
              ▼
┌─────────────────────────────┐
│  CALCULATING OCCUPATION RATIO│─ S4
│  FOR EVERY BRIGHTNESS AREA   │
└─────────────────────────────┘
              │
              ▼
┌─────────────────────────────┐
│  DIVIDING THE INPUT IMAGE DATA│
│  INTO AREAS CONSISTING OF A   │
│  COMBINATION OF PREDETERMINED │─ S5
│  HUE AND BRIGHTNESS           │
└─────────────────────────────┘
              │
              ▼
┌─────────────────────────────┐
│  CALCULATING OCCUPATION RATIO│─ S6
│  FOR EVERY DIVIDED AREA      │
└─────────────────────────────┘
              │
              ▼
┌─────────────────────────────┐
│  ESTIMATING PHOTOGRAPHED     │
│  SCENE BASED ON THE          │─ S7
│  OCCUPATION RATIOS CALCULATED│
└─────────────────────────────┘
              │
              ▼
       ┌──────────────┐
       │     END      │
       └──────────────┘
```

# FIG. 8

[ EXAMPLE OF PROGRAM ]

```
RGBtoHSV (RGB_Color) {

    int  max,  min,  r,  g,  b,  d,  rt,  gt,  bt,  OutH,  OutS,  OutV ;

    r = INr ;

    g = InG ;

    b = InB ;

    max = (r > g)  ?  (r > b? r : b) : (g > b?g : b) ;

    min = (r < g)  ?  (r < b? r : b) : (g < b ? g : b) ;

    d = max - min ;

    OutV = max ;

    if  (max ! = 0)  OutS = d*255 / max ; else  OutS = 0 ;

    if  (OutS == 0)  {
        OutH = 0 ;
    } else  {

        rt = max - r*60 / d ;
        gt = max - g*60 /  d ;
        bt = max - b*60 / d ;
        if  (r == max)  OutH = bt - gt ; else

        if  (g == max)  OutH = 120 + rt - bt ;  else  OutH = 240 + gt - rt ;

        if  (OutH < O)  OutH + 360 ;
    }

}
```

# FIG. 9

AREA "A"

# FIG. 10

```
        ┌─────────────────────────────┐
        │   GRADATION CONVERSION      │
        │        PROCESSING           │
        └─────────────────────────────┘
                      │
                      ▼
      ┌───────────────────────────────┐
      ║    ESTIMATING PHOTOGRAPHED     ║───── S11
      ║           SCENE               ║
      └───────────────────────────────┘
                      │
                      ▼
      ┌───────────────────────────────┐
      │     EXTRACTING FACE AREA      │───── S12
      └───────────────────────────────┘
                      │
                      ▼
      ┌───────────────────────────────┐
      │    CALCULATING AVERAGE        │
      │  BRIGHTNESS VALUE OF WHOLE    │
      │ IMAGE AND AVERAGE BRIGHTNESS  │───── S13
      │     VALUE OF FACE AREA        │
      └───────────────────────────────┘
                      │
                      ▼
      ┌───────────────────────────────┐
      │   DETERMINING CONTRIBUTION    │
      │  RATIO OF FACE AREA BASED ON  │───── S14
      │    THE PHOTOGRAPHED SCENE     │
      └───────────────────────────────┘
                      │
                      ▼
      ┌───────────────────────────────┐
      │     DETERMINING GRADATION     │
      │  CONVERSION CURVE BASED       │───── S15
      │    ON THE CONTRIBUTION RATIO  │
      └───────────────────────────────┘
                      │
                      ▼
      ┌───────────────────────────────┐
      │ APPLYING GRADATION CONVERSION │
      │ PROCESSING TO INPUT IMAGE DATA│───── S16
      │  BY EMPLOYING THE GRADATION   │
      │      CONVERSION CURVE         │
      └───────────────────────────────┘
                      │
                      ▼
            ┌─────────────────┐
            │      END        │
            └─────────────────┘
```

# FIG. 11

SUBJECT BRIGHTNESS VALUES IN "LUMINANCE EXPANSION COLOR SPACE"

## FIG. 12

# FIG. 13

START

S200 — CAPTURED IMAGE DATA

S201 — GRADATION MAPPING

COLOR GAMUT ADJUSTMENT PROCESSING

S202 — CONVESION OF COLOR APPEARANCE MODEL

S203 — COLOR GAMUT MAPPING

S204 — GENERATING OUTPUT-REFERRED IMAGE DATA FOR DIPLAY USE

S205 — DISPLAYING IMAGE

S206 — WHETHER OR NOT EDITING INSTRUCTIONS ARE INPUTTED?

YES

S207 — INFORMATION SUPPLEMENTATION PROCESSING

NO

GENERATING OUTPUT-REFERRED IMAGE DATA FOR OUTPUTTING MEDIUM USE — S208

OUTPUTTING IMAGE — S209

END

# FIG. 14

```
                    ┌─────────────┐
                    │    START    │
                    └─────────────┘
                          │
                          ▼
S300 ──────────┌──────────────────────┐
               │  CAPTURED IMAGE DATA  │
               └──────────────────────┘
                          │
        ┌─ ─ ─ ─ ─ ─ ─ ─ ─│─ ─ ─ ─ ─ ─ ─ ─ ┐
                          ▼                         GRADATION
S301 ──────────┌──────────────────────┐            MAPPING
        │      │ LUMINANCE EXPANSION   │            PROCESS
               │     COLOR SPACE       │
               └──────────────────────┘
        │                 │
                          ▼
S302 ──────────┌──────────────────────┐
        │      │   GRADATION MAPPING   │
               └──────────────────────┘
        └ ─ ─ ─ ─ ─ ─ ─ ─ ─ ─ ─ ─ ─ ─ ─ ┘

        ┌─ ─ ─ ─ ─ ─ ─ ─ ─ ─ ─ ─ ─ ─ ─ ┐
S303 ──────────┌──────────────────────┐
        │      │  CONVESION OF COLOR   │            COLOR GAMUT
               │   APPEARANCE MODEL    │            ADJUSTMENT
               └──────────────────────┘            PROCESSING
        │                 │
                          ▼
S304 ──────────┌──────────────────────┐
        │      │  COLOR GAMUT MAPPING  │
               └──────────────────────┘
        └ ─ ─ ─ ─ ─ ─ ─ ─ ─ ─ ─ ─ ─ ─ ─ ┘
                          │
                          ▼
S305 ──────────┌──────────────────────┐
               │ GENERATING OUTPUT-    │
               │ REFERRED IMAGE DATA   │
               │   FOR DIPLAY USE      │
               └──────────────────────┘
                          │
                          ▼
S306 ──────────┌──────────────────────┐
               │   DISPLAYING IMAGE    │
               └──────────────────────┘
                          │
                          ▼
          S307         ╱─────────╲
    YES              ╱  WHETHER    ╲
  ◄───────────────── OR NOT EDITING ─
                   ╲ INSTRUCTIONS ARE╱
                     ╲ INPUTTED?  ╱
                       ╲───────╱
                          │ NO
                          ▼
S308            ┌──────────────────────┐
  ┌─────────────┤ GENERATING OUTPUT-   │── S309
  │ INFORMATION │ REFERRED IMAGE DATA  │
  │SUPPLEMENTATION│ FOR OUTPUTTING      │
  │ PROCESSING  │   MEDIUM USE         │
  └─────────────┘└──────────────────────┘
                          │
                          ▼
                ┌──────────────────────┐── S310
                │   OUTPUTTING IMAGE    │
                └──────────────────────┘
                          │
                          ▼
                    ┌─────────────┐
                    │     END     │
                    └─────────────┘
```

# FIG. 15

```
                                    ┌──────────────┐
                                    │    START     │
                                    └──────┬───────┘
                                           │
                                    ┌──────▼───────────────┐
                        S400 ───────│ CAPTURED IMAGE DATA  │
                                    └──────┬───────────────┘
                                           │
            COLOR GAMUT ADJUSTMENT PROCESSING
        ┌ ─ ─ ─ ─ ─ ─ ─ ─ ─ ─ ─ ─ ─ ─ ─ ─ ─ ─ ─ ─ ─ ─ ─┐
                                    ┌──────▼───────────────┐
        │                          │ CONVESION OF COLOR   │──── S401
                     ┌──────────────│ APPEARANCE MODEL     │
        │            │              └──────┬───────────────┘
           S402      │                     │
        │   ┌──────▼───────────┐   ┌──────▼───────────────┐
            │ COLOR GAMUT      │   │ COLOR GAMUT MAPPING  │──── S403
        │   │ MAPPING          │   └──────┬───────────────┘
            └──────┬───────────┘
        └ ─ ─ ─ ─ ─│─ ─ ─ ─ ─ ─ ─ ─ ─ ─ ─│─ ─ ─ ─ ─ ─ ─ ─┘
```

**COLOR GAMUT ADJUSTMENT PROCESSING**

| Step | |
|------|--|
| S400 | CAPTURED IMAGE DATA |
| S401 | CONVESION OF COLOR APPEARANCE MODEL |
| S402 | COLOR GAMUT MAPPING |
| S403 | COLOR GAMUT MAPPING |
| S404 | GENERATING OUTPUT-REFERRED IMAGE DATA FOR DIPLAY USE |
| S405 | DISPLAYING IMAGE |
| S406 | WHETHER OR NOT EDITING INSTRUCTIONS ARE INPUTTED? — YES / NO |
| S407 | INFORMATION SUPPLEMENTATION PROCESSING |
| S408 | GENERATING OUTPUT-REFERRED IMAGE DATA FOR OUTPUTTING MEDIUM USE |
| S409 | OUTPUTTING IMAGE |

FIG. 16

```
                                    ┌──────────┐
                                    │  START   │
                                    └──────────┘
                                         │
                                         ▼
              ┌──────────────────────────────────┐
    S500 ─────│     CAPTURED IMAGE DATA           │
              └──────────────────────────────────┘
                                         │
        ┌ ─ ─ ─ ─ ─ ─ ─ ─ ─ ─ ─ ─ ─ ─ ─ ─ ─ ─ ─ ┐
                    ┌──────────────────────────┐
    COLOR GAMUT     │   CONVESION OF COLOR      │─── S501
    ADJUSTMENT      │   APPEARANCE MODEL        │
    PROCESSING      └──────────────────────────┘
                                  │
                    ┌──────────────────────────┐
        │           │   COLOR GAMUT MAPPING     │─── S502
                    └──────────────────────────┘
        └ ─ ─ ─ ─ ─ ─ ─ ─ ─ ─ ─ ─ ─ ─ ─ ─ ─ ─ ─ ┘
                                  │
                    ┌──────────────────────────┐
    COLOR GAMUT     │   GENERATING OUTPUT-      │
    ADJUSTMENT      │   REFERRED IMAGE DATA     │─── S503
    PROCESSING      │   FOR OUTPUTTING          │
                    │   MEDIUM USE              │
                    └──────────────────────────┘
        ┌ ─ ─ ─ ─ ─ ─ ─ ─ ─ ─ ─ ─ ─ ─ ┐
              ┌──────────────────────────┐
        │     │   CONVESION OF COLOR      │─── S504
              │   APPEARANCE MODEL        │
        │     └──────────────────────────┘
                            │
        │     ┌──────────────────────────┐
              │   COLOR GAMUT MAPPING     │─── S505
        │     └──────────────────────────┘
        └ ─ ─ ─ ─ ─ ─ ─ ─ ─ ─ ─ ─ ─ ─ ┘
                            │
              ┌──────────────────────────┐
              │   GENERATING OUTPUT-      │─── S506
              │   REFERRED IMAGE DATA     │
              │   FOR DIPLAY USE          │
              └──────────────────────────┘
                            │
              ┌──────────────────────────┐
              │      DISPLAYING IMAGE     │─── S507
              └──────────────────────────┘
                            │
                      ╱╲  S508
            YES      ╱    ╲
          ┌────────╱WHETHER╲
          │        ╲OR NOT EDITING╱
          │        ╲INSTRUCTIONS ARE╱
          │         ╲INPUTTED?╱
          │           ╲  ╱
          │            NO
          │            │
      S509 │
  ┌──────────────────┐
  │   INFORMATION    │
  │  SUPPLEMENTATION │           ┌──────────────────┐
  │   PROCESSING     │           │  OUTPUTTING IMAGE │─── S510
  └──────────────────┘           └──────────────────┘
                                          │
                                     ┌──────────┐
                                     │   END    │
                                     └──────────┘
```

65

## FIG. 17

```
                                          ┌─────────────┐
                                          │    START    │
                                          └──────┬──────┘
                                                 │
                                          ┌──────▼──────────┐
                                          │ CAPTURED IMAGE  │──── S600
                                          │      DATA       │
                                          └──────┬──────────┘
                                                 │
                                          ┌──────▼──────────┐
                                          │    GRADATION    │──── S601
                                          │     MAPPING     │
                                          └──────┬──────────┘

COLOR GAMUT ADJUSTMENT PROCESSING
                                          ┌──────▼──────────┐
                                          │  CONVESION OF   │──── S602
                                          │ COLOR APPEARANCE│
                                          │      MODEL      │
                                          └──────┬──────────┘

     S603 ─┌──────────────────┐    ┌──────────────────┐── S604
          │  COLOR GAMUT     │    │  COLOR GAMUT     │
          │    MAPPING       │    │    MAPPING       │
          └────────┬─────────┘    └────────┬─────────┘

   S605 ─┌──────────────────┐    ┌──────────────────┐── S609
        │ GENERATING OUTPUT-│    │ GENERATING OUTPUT-│
        │ REFERRED IMAGE    │    │ REFERRED IMAGE    │
        │ DATA FOR DIPLAY   │    │ DATA FOR OUTPUTTING│
        │      USE          │    │   MEDIUM USE      │
        └────────┬─────────┘    └────────┬─────────┘

   S606 ─┌──────────────────┐
        │ DISPLAYING IMAGE  │
        └────────┬─────────┘

                  S607
           ◇ WHETHER OR NOT
   YES    ◇ EDITING INSTRUCTIONS
          ◇ ARE INPUTTED?
                  │ NO

  S608
┌──────────────────┐
│   INFORMATION     │
│  SUPPLEMENTATION  │
│   PROCESSING      │
└──────────────────┘

                                          ┌──────────────────┐── S610
                                          │ OUTPUTTING IMAGE  │
                                          └────────┬─────────┘
                                                 │
                                          ┌──────▼──────┐
                                          │     END     │
                                          └─────────────┘
```

FIG. 18

START

CAPTURED IMAGE DATA — S700

GRADATION MAPPING — S701

COLOR GAMUT
ADJUSTMENT
PROCESSING

CONVESION OF COLOR
APPEARANCE MODEL — S702

COLOR GAMUT MAPPING — S703

GENERATING OUTPUT-
REFERRED IMAGE DATA
FOR OUTPUTTING
MEDIUM USE — S704

COLOR GAMUT
ADJUSTMENT
PROCESSING

CONVESION OF COLOR
APPEARANCE MODEL — S705

COLOR GAMUT MAPPING — S706

GENERATING OUTPUT-
REFERRED IMAGE DATA
FOR DIPLAY USE — S707

DISPLAYING IMAGE — S708

S709
WHETHER
OR NOT EDITING
INSTRUCTIONS ARE
INPUTTED?

YES

NO

S710
INFORMATION
SUPPLEMENTATION
PROCESSING

OUTPUTTING IMAGE — S711

END

67

# FIG. 19

```
                                    ┌─────────────┐
                                    │   START     │
                                    └─────────────┘
                                           │
                                           ▼
                              ┌──────────────────────┐
                              │ CAPTURED IMAGE DATA   │──── S800
                              └──────────────────────┘
                                           │
      ┌────────────────────────────────────┼─────────────────────────┐
      │           ┌ ─ ─ ─ ─ ─ ─ ─ ─ ─ ─ ─ ─┼─ ─ ─ ─ ─ ─ ─ ─ ─ ─ ┐
      │                                     ▼
      │           │               ┌──────────────────────┐     │
      │                           │ LUMINANCE EXPANSION   │──── S801
      │           │               │ COLOR SPACE           │     │
      │   GRADATION               └──────────────────────┘
      │   MAPPING  │                        │                   │
      │   PROCESS                           ▼
      │           │               ┌──────────────────────┐     │
      │                           │ GRADATION MAPPING     │──── S802
      │           │               └──────────────────────┘     │
      │   COLOR GAMUT └ ─ ─ ─ ─ ─ ─ ─ ─ ─ ─ ┼─ ─ ─ ─ ─ ─ ─ ─ ─ ┘
      │   ADJUSTMENT PROCESSING             │
      │           ┌ ─ ─ ─ ─ ─ ─ ─ ─ ─ ─ ─ ─┼─ ─ ─ ─ ─ ─ ─ ─ ─ ─ ┐
      │           │                         ▼
      │                           ┌──────────────────────┐     │
      │           │               │ CONVESION OF COLOR    │──── S803
      │            ┌──────────────│ APPEARANCE MODEL      │     │
      │           ││              └──────────────────────┘
      │            ▼                        │                   │
      │ ┌──────────────────┐      ┌──────────────────────┐     │
      │ │ COLOR GAMUT      │ S804 │ COLOR GAMUT MAPPING   │──── S805
      │ │ MAPPING          │      └──────────────────────┘     │
      │ └──────────────────┘ └ ─ ─ ─ ─ ─ ─ ─ ┼─ ─ ─ ─ ─ ─ ─ ─ ─ ┘
      │           │                          │
      │           ▼                          ▼
      │ ┌──────────────────┐      ┌──────────────────────┐
      │ │ GENERATING OUTPUT-│     │ GENERATING OUTPUT-    │
 S806─┤ │ REFERRED IMAGE   │     │ REFERRED IMAGE DATA   │──── S810
      │ │ DATA FOR DIPLAY  │     │ FOR OUTPUTTING        │
      │ │ USE              │     │ MEDIUM USE            │
      │ └──────────────────┘      └──────────────────────┘
      │           │                          │
      │           ▼                          │
      │ ┌──────────────────┐                 │
 S807─┤ │ DISPLAYING IMAGE │                 │
      │ └──────────────────┘                 │
      │           │                          │
      │           ▼      S808                │
      │         ╱────────────╲               │
      │    YES ╱  WHETHER      ╲             │
      │ ◄─────╱ OR NOT EDITING   ╲           │
      │       ╲ INSTRUCTIONS ARE ╱           │
      │        ╲  INPUTTED?     ╱            │
      │         ╲──────────────╱             │
      │  S809          │ NO                  │
      │   ┌────────────┼─────────────────────┤
      │   ▼                                  ▼
      │ ┌──────────────────┐      ┌──────────────────────┐
      │ │ INFORMATION      │      │ OUTPUTTING IMAGE      │──── S810
      └─│ SUPPLEMENTATION  │      └──────────────────────┘
        │ PROCESSING       │                 │
        └──────────────────┘                 ▼
                                    ┌─────────────┐
                                    │    END      │
                                    └─────────────┘
```

FIG. 20

START

CAPTURED IMAGE DATA — S900

GRADATION
MAPPING
PROCESS

LUMINANCE EXPANSION
COLOR SPACE — S901

GRADATION MAPPING — S902

COLOR GAMUT
ADJUSTMENT
PROCESSING

CONVESION OF COLOR
APPEARANCE MODEL — S903

COLOR GAMUT MAPPING — S904

COLOR GAMUT
ADJUSTMENT
PROCESSING

GENERATING OUTPUT-
REFERRED IMAGE DATA
FOR OUTPUTTING
MEDIUM USE — S905

S906 — CONVESION OF COLOR
APPEARANCE MODEL

S907 — COLOR GAMUT MAPPING

S908 — GENERATING OUTPUT-
REFERRED IMAGE DATA
FOR DIPLAY USE

S909 — DISPLAYING IMAGE

S910
YES — WHETHER
OR NOT EDITING
INSTRUCTIONS ARE
INPUTTED?

NO

S911

INFORMATION
SUPPLEMENTATION
PROCESSING

OUTPUTTING IMAGE — S912

END